# EUROPEAN PATENT APPLICATION

(11) **EP 4 716 267 A1**
(43) Date of publication of application: **25.03.2026**
(21) Application number: 23936955.6
(22) Date of filing: 15.05.2023
(51) Int. Cl.: H04W 12/06, H04L 9/32

(54) **AUTHENTICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: LI, Meng, Dongguan, Guangdong 523860 (CN); GAN, Lu, Dongguan, Guangdong 523860 (CN)
(74) Representative: Mewburn Ellis LLP
(86) International application number: PCT/CN2023/094372
(87) International publication number: WO 2024/234268

(57) **Abstract**

The present application relates to an authentication method, a device, a computer-readable storage medium, a computer program product, and a computer program. The method includes the following. A first device receives a first message from a core network side device, where the first message carries an authentication parameter. The first device sends a second message to a second device, where the second message carries the authentication parameter. The first device receives a third message from the second device, where the third message carries first authentication information, the first authentication information is calculated by the second device based on the authentication parameter and pre-shared information, the pre-shared information is shared by the second device and the first device and/or the core network side device, and the pre-shared information includes challenge information. The first device authenticates the second device based on the first authentication information.

## Description

### TECHNICAL FIELD

This disclosure relates to the field of communications, in particular to an authentication method, a device, a computer-readable storage medium, a computer program product, and a computer program.

### BACKGROUND

For the authentication procedure and key agreement procedure between user equipment (UE) and the core network in related technologies, the calculation function used is relatively complex and the key architecture is relatively complex. However, zero-power devices such as ambient power-enabled Internet of things (A-IoT) devices also need to access a network such as the core network. How to achieve authentication between the A-IoT device and the network side while reducing the calculation complexity of the A-IoT device has become a problem to be solved.

### SUMMARY

Embodiments of the present application provide an authentication method, a device, a computer-readable storage medium, a computer program product, and a computer program.

Embodiments of the present application provide an authentication method. The method includes the following. A first device receives a first message from a core network side device, where the first message carries an authentication parameter. The first device sends a second message to a second device, where the second message carries the authentication parameter. The first device receives a third message from the second device, where the third message carries first authentication information, the first authentication information is calculated by the second device based on the authentication parameter and pre-shared information, the pre-shared information is shared by the second device and the first device and/or the core network side device, and the pre-shared information includes challenge information. The first device authenticates the second device based on the first authentication information.

Embodiments of the present application provide an authentication method. The method includes the following. A second device receives a second message from a first device, where the second message carries an authentication parameter. The second device calculates first authentication information based on the authentication parameter and pre-shared information, where the pre-shared information is shared by the second device and the first device and/or a core network side device, the pre-shared information includes challenge information, and the first authentication information is used to authenticate the second device by the first device. The second device sends a third message to the first device, where the third message carries the first authentication information.

Embodiments of the present application provide an authentication method. The method includes the following. A core network side device sends a first message to a first device, where the first message carries an authentication parameter, the authentication parameter is used to calculate, by a second device, first authentication information based on pre-shared information, the pre-shared information is shared by the second device and the first device and/or the core network side device, the pre-shared information includes challenge information, and the first authentication information is used to authenticate the second device by the first device.

Embodiments of the present application provide a first device. The first device includes a first communication unit and a first processing unit. The first communication unit is configured to: receive a first message from a core network side device, where the first message carries an authentication parameter; send a second message to a second device, where the second message carries the authentication parameter; and receive a third message from the second device, where the third message carries first authentication information, the first authentication information is calculated by the second device based on the authentication parameter and pre-shared information, the pre-shared information is shared by the second device and the first device and/or the core network side device, and the pre-shared information includes challenge information. The first processing unit is configured to authenticate the second device based on the first authentication information.

Embodiments of the present application provide a second device. The second device includes a second communication unit and a second processing unit. The second communication unit is configured to: receive a second message from a first device, where the second message carries an authentication parameter; and send a third message to the first device, where the third message carries first authentication information. The second processing unit configured to calculate the first authentication information based on the authentication parameter and pre-shared information, where the pre-shared information is shared by the second device and the first device and/or a core network side device, the pre-shared information includes challenge information, and the first authentication information is used to authenticate the second device by the first device.

Embodiments of the present application provide a core network side device. The core network side device includes a third communication unit. The third communication unit is configured to send a first message to a first device, where the first message carries an authentication parameter, the authentication parameter is used to calculate, by a second device, first authentication information based on pre-shared information, the pre-shared information is shared by the second device and the first device and/or the core network side device, the pre-shared information includes challenge information, and the first authentication information is used to authenticate the second device by the first device.

Embodiments of the present application provide a first device. The first device includes: a transceiver, a processor, and a memory. The memory is configured to store a computer program, and the processor is configured to invoke and run the computer program stored in the memory to cause the first device execute the above method.

Embodiments of the present application provide a second device. The second device includes: a transceiver, a processor, and a memory. The memory is configured to store a computer program, and the processor is configured to invoke and run the computer program stored in the memory to cause the second device to execute the above method.

Embodiments of the present application provide a core network side device. The core network side device includes: a transceiver, a processor, and a memory. The memory is configured to store a computer program, and the processor is configured to invoke and run the computer program stored in the memory to cause the core network side device to execute the above method.

By adopting the solution provided in the embodiment, the challenge information can be pre-stored as the pre-shared information in the second device and the first device and/or the core network side device. Thus, in the processing of authentication, only by transmitting the authentication parameter from the first device to the second device, the second device can calculate the authentication information based on the authentication parameter and the pre-shared information, and the first device can authenticate the second device according to the authentication information. In this way, the second device can complete the authentication of the second device without using a highly complex authentication procedure and without requiring the second device to perform complex and large-scale calculation to complete the authentication, which is particularly suitable for the device with lower capability.

### BRIEF DESCRIPTION OF THE DRAWINGS

FIG. 1 is a schematic diagram of an application scenario according to embodiments of the present application.
FIGs. 2 to 4 are various schematic flow charts of an authentication method according to an embodiment of the present application.

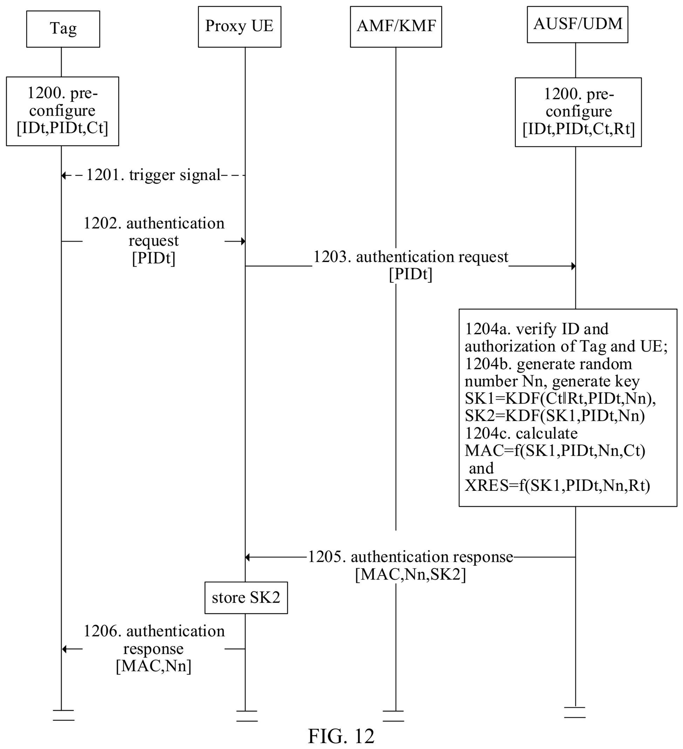

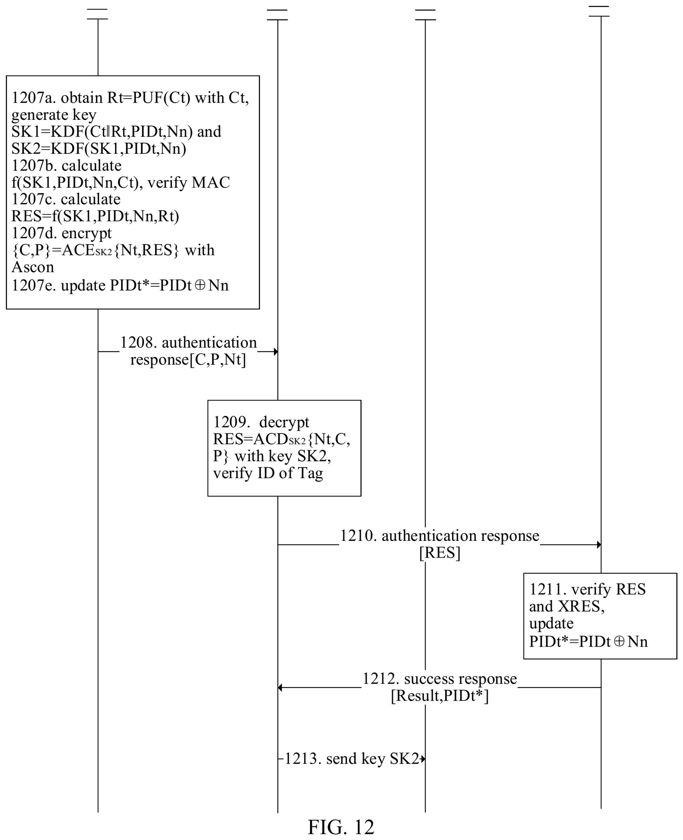

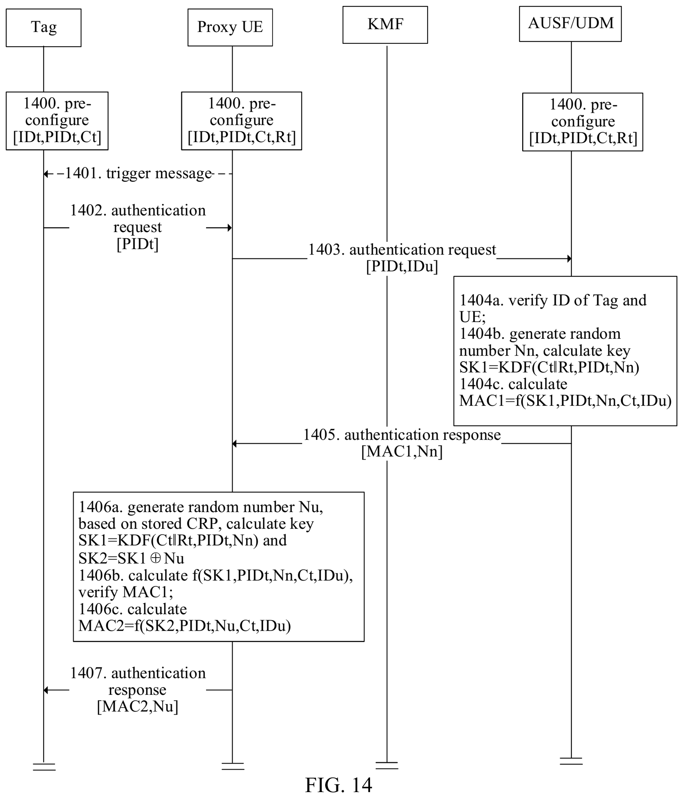

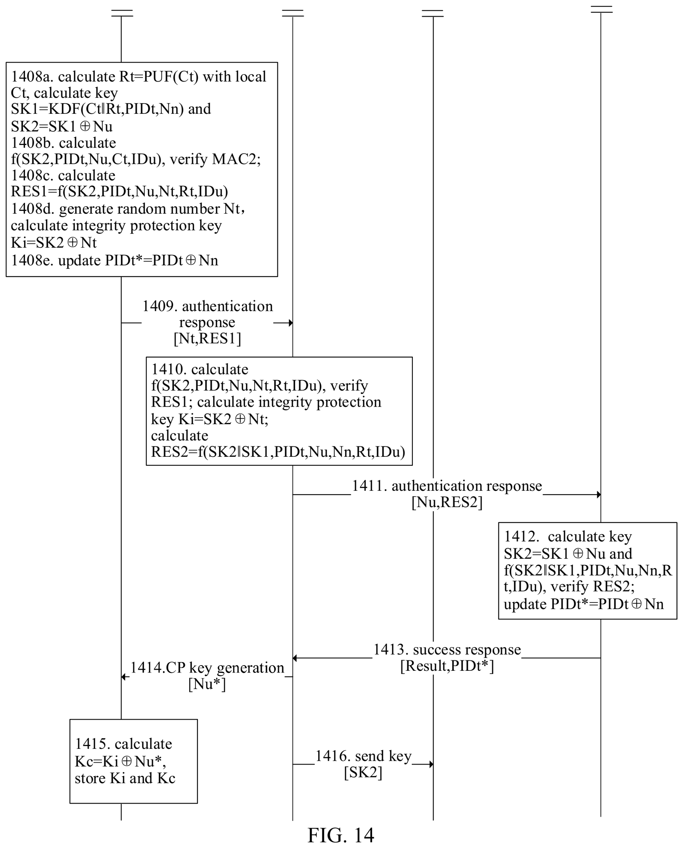

FIGs. 5 to 17 are various exemplary flow charts of an authentication method according to an embodiment of the present application.
FIGs. 18 and 19 are schematic diagrams of two scenarios in which intrinsic characteristics are applied to a key storage and security authentication mode of an authentication method according to an embodiment of the present application.
FIG. 20 is a schematic diagram of an authentication and key agreement (AKA) procedure.
FIG. 21 is a schematic block diagram of a first device according to an embodiment of the present application.
FIG. 22 is a schematic block diagram of a second device according to an embodiment of the present application.
FIG. 23 is a schematic block diagram of a core network side device according to an embodiment of the present application.
FIG. 24 is a schematic block diagram of a communication device according to embodiments of the present application.
FIG. 25 is a schematic block diagram of a chip according to embodiments of the present application.
FIG. 26 is a schematic block diagram of a communication system according to embodiments of the present application.

### DETAILED DESCRIPTION

Technical solutions of embodiments of the present application can be applied to various communication systems, such as long term evolution (LTE), long term evolution-advanced (LTE-A), new radio (NR), NR evolution, wireless local area network (WLAN), wireless fidelity (WiFi), or other communication systems.

The embodiments of the present application describe various embodiments in combination with network devices and terminals. The terminal may be mobile or fixed, and the terminal may also be referred to as a mobile station, a user unit, etc. The terminal may be a site in the WLAN, and may be a smart terminal, a wireless modem, a laptop computer, a tablet computer, or other terminals. In the embodiments of the present application, the terminal may be a virtual reality (VR) terminal/augmented reality terminal (AR) terminal, an industrial control terminal, an autonomous driving terminal, a telemedicine terminal, a smart grid terminal, a transportation safety terminal, a smart city terminal, or a wireless terminal for a smart home, etc. As an example and not a limitation, in the embodiments of the present application, the terminal may also be a wearable device.

In the embodiment of the present application, the network device may be a device for communicating with a terminal, and the network device may be an access point in the WLAN, or an evolved base station in the LTE, or a relay station, or a vehicle-mounted device, a wearable device, and a network device (gNB) in the NR network, or a network device in a future evolved public land mobile network (PLMN) network, or a network device in a non-terrestrial network, etc. As an example and not a limitation, in the embodiments of the present application, the network device may have a mobile feature, for example, the network device may be a mobile device.

It should be understood that the terms "system" and "network" are generally used interchangeably in this article. The term "and/or" in this article is only a description of the association relationship of associated objects, indicating that there can be three relationships. For example, A and/or B can represent: A alone, both A and B, and B alone. In addition, the character "/" in this article generally indicates that the objects associated with each other are in an "or" relationship. It should be understood that "indicate" mentioned in the embodiments of the present application can be a direct indication, an indirect indication, or an indication of an association relationship. Exemplarily, A indicating B can have the following meanings. A directly indicates B, for example, B can be obtained through A. Alternatively, A indirectly indicates B, for example, A indicates C and B can be obtained through C. Alternatively, there is an association relationship between A and B. In the description of the embodiments of the present application, the term "correspondence" can mean that there is a direct or indirect correspondence relationship between the two, or can mean that there is an association relationship between the two, or can mean relationships such as indication and being indicated or configuration and being configured, etc.

To facilitate understanding of the technical solutions of the embodiments of the present application, the relevant technologies of the embodiments of the present application are described below. The following related technologies can be arbitrarily combined with the technical solutions of the embodiments of the present application as optional solutions, which belong to the protection scope of the embodiments of the present application.

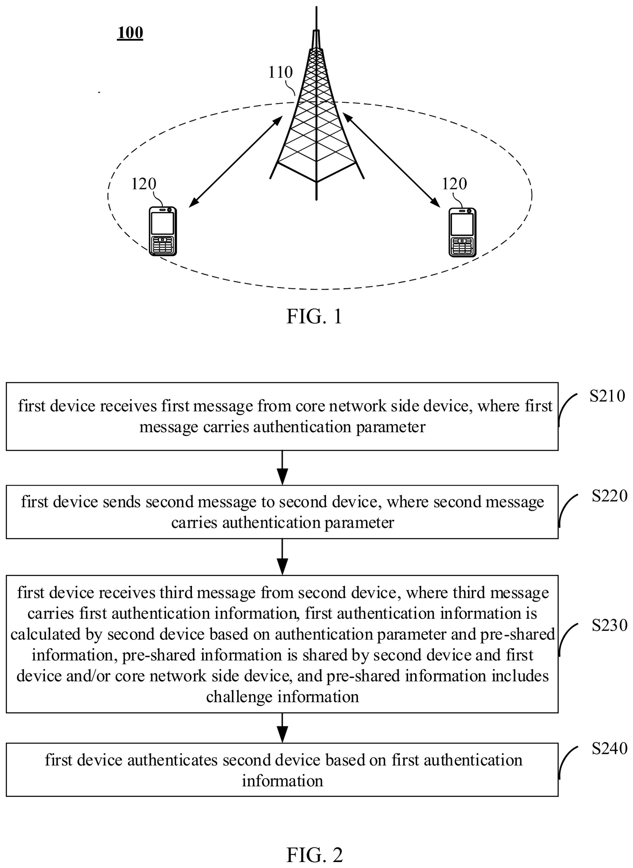

FIG. 1 exemplarily illustrates a communication system 100. The communication system includes one network device 110 and two terminals 120. In a possible implementation, the communication system 100 may include multiple network devices 110, and other number of terminals 120 can be within the coverage area of each network device 110, which is not limited in the embodiments of the present application. In a possible implementation, the communication system 100 may also include a mobility management entity, an access and mobility management function, and other network entities, which are not limited in the embodiments of the present application. The network device may include an access network device and a core network device. That is, the communication system may also include multiple core networks for communicating with the access network device. The access network device may be a base station of an LTE, LTE-A, or NR system. Taking the communication system illustrated in FIG. 1 as an example, a communication device may include a network device and a terminal with a communication function, and the communication device may also include other devices in the communication system, such as a network controller, a mobile management entity, and other network entities, which are not limited in the embodiments of the present application.

To facilitate understanding of the embodiments of the present application, the basic processes and basic concepts involved in the embodiments of the present application are briefly described below. It should be understood that the basic processes and basic concepts introduced below do not limit the embodiments of the present application.

The ambient power-enabled Internet of things (AloT) device is an loT device driven by energy harvesting, without batteries or with limited energy storage capabilities (e.g., using capacitors), using backscattering and low-power computing technology, and its terminal has extremely simple radio frequency and baseband circuit structures, which greatly reduce the cost, size, and circuit energy consumption of the terminal. Compared with existing cellular loT technologies (such as NB-IoT, long term evolution for machine-type communication (LTE-M), reduced capability (RedCap), etc.), IoT services supported by the AIoT can realize battery-free terminals and meet the IoT communication requirements of ultra-low power consumption, extremely small size, and extremely low cost. These devices can meet the following conditions: operating under extreme environmental conditions, such as high voltage, extremely high/low temperature, and humid environments; having ultra-low complexity, very small device size/form factor (e.g., millimeter thickness); maintenance-free (e.g., the device does not need to replace traditional batteries) and longer service life (e.g., 20 years); free from battery or only limited energy storage; free from dedicated radio frequency identification (RFID) tag reader is required.

FIG. 2 is a schematic flow chart of an authentication method according to an embodiment of the present application. The method includes at least part of the following.

S210, a first device receives a first message from a core network side device, where the first message carries an authentication parameter.

S220, the first device sends a second message to a second device, where the second message carries the authentication parameter.

S230, the first device receives a third message from the second device, where the third message carries first authentication information, the first authentication information is calculated by the second device based on the authentication parameter and pre-shared information, the pre-shared information is shared by the second device and the first device and/or the core network side device, and the pre-shared information includes challenge information.

S240, the first device authenticates the second device based on the first authentication information.

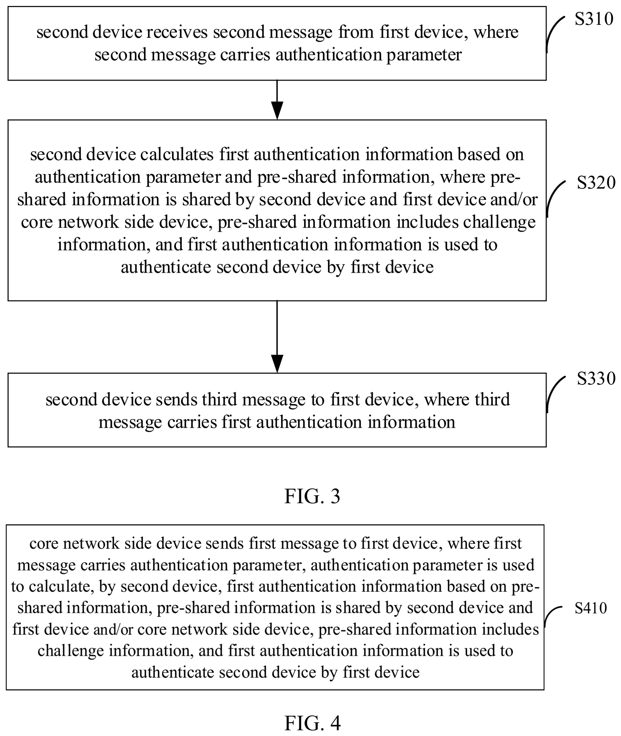

FIG. 3 is a schematic flow chart of an authentication method according to another embodiment of the present application. The method includes at least part of the following.

S310, a second device receives a second message from a first device, where the second message carries an authentication parameter.

S320, the second device calculates first authentication information based on the authentication parameter and pre-shared information, where the pre-shared information is shared by the second device and the first device and/or a core network side device, the pre-shared information includes challenge information, and the first authentication information is used to authenticate the second device by the first device.

S330, the second device sends a third message to the first device, where the third message carries the first authentication information.

FIG. 4 is a schematic flow chart of an authentication method according to yet another embodiment of the present application. The method includes at least part of the following.

S410, a core network side device sends a first message to a first device, where the first message carries an authentication parameter, the authentication parameter is used to calculate, by a second device, first authentication information based on pre-shared information, the pre-shared information is shared by the second device and the first device and/or the core network side device, the pre-shared information includes challenge information, and the first authentication information is used to authenticate the second device by the first device.

The first device is one of a terminal device and an access network device. The second device is one of: an AIoT device and a zero-power device.

Exemplarily, the second device may be called Tag, and the second device may be a zero-power device, such as an active zero-power device, a passive zero-power device, or a semi-passive zero-power device, etc. Exemplarily, the second device may be a terminal with low computing power. All possible names or possible forms of the second device are not exhaustively enumerated herein. Exemplarily, the second device may be connected to a core network through an indirect mode. In the indirect mode, the second device is connected to the core network through a terminal device and an access network device corresponding to the terminal device. In this case, the first device is a terminal device, or the first device may be the access network device corresponding to the terminal device. Exemplarily, the second device may be connected to the core network through a direct mode. In the direct mode, the second device is connected to the core network through a corresponding access network device. In this case, the first device is an access network device. In addition, when the first device is a terminal device, the first device may be a proxy UE or a relay UE, etc.

The core network side device may include one or more core network devices. In some possible examples, the core network side device includes at least one of: authentication server function (AUSF), unified data management function (UDM), or AIoT network element. In some other examples, in addition to AUSF, UDM, and AIoT network element, the one or more core network devices may also include at least one of: authentication credential repository and processing function (ARPF), access and mobility management function (AMF), user plane function (UPF), or security anchor function (SEAF), etc. It should be understood that the above is merely an exemplary description, and in actual processing, the core network side device may also include other devices of the core network, which is not exhaustively enumerated herein. Exemplarily, the AIOT network element may refer to a network element with AIOT function. The network element with AIoT function may be a core network element with AIOT function, or a core network element serving the AIOT function, or a core network element with at least AIoT authentication function, or a network element with at least AIoT authentication function, etc. It should be understood that the AIOT network element may be a separately set up network element specifically used to serve the AIOT function (such as a network element of the core network), or it may be an existing core network element with AIOT function added (or at least AIoT authentication function added, or AIoT-related function added). This embodiment does not enumerate all possible situations.

In some possible implementations, the pre-shared information at least includes challenge information.

Optionally, in addition to the challenge information, the pre-shared information may also include response information, and the response information is related to the challenge information. The challenge information and the response information may be used together as a challenge response pair (CRP). That is, the CRP may be pre-stored as the pre-shared information on the first device and the second device sides, or the CRP may be pre-stored as the pre-shared information on the second device and the core network side device, or the CRP may be pre-stored as the pre-shared information on the first device, the second device, and the core network side device.

For example, if the pre-shared information is stored on the first device side, the pre-shared information may be stored in association with an identifier of the second device and/or a pseudonym of the second device. If the pre-shared information is stored on the core network side device, the pre-shared information may also be stored in association with the identifier of the second device and/or the pseudonym of the second device.

The identifier of the second device may be identification (ID) and/or a network identifier of the second device. The ID may include but is not limited to at least one of: subscription permanent identifier (SUPI), subscription concealed identifier (SUCI), permanent equipment identifier (PEI), 5G globally unique temporary identifier (5G-GUTI), or Internal-group identifier (IGI), generic public subscription identifier (GPSI), etc. The network identifier may include: at least one of an Internet protocol address (IP address), or a media access control (MAC) address, etc. Exemplarily, the identifier of the second device may be expressed as an IDt of the second device, and all possible contents and representation of the identifier of the second device are not exhaustively listed herein.

The pseudonym of the second device can be called a random pseudonym of the second device, or a pseudo-identifier of the second device, or a fake-identifier of the second device, etc. Exemplarily, the pseudonym of the second device can be expressed as PIDt of the second device. All possible alternative names and representations of the pseudonym of the second device are not enumerated herein. As long as the pseudonym of the second device is different from the identifier of the second device, it is within the protection scope of this embodiment.

Optionally, the pre-shared information only includes the challenge information.

In this case, if the pre-shared information is shared by the first device and the second device, the response information may be pre-configured on the first device side, where the response information is related to the challenge information. Alternatively, if the pre-shared information is shared by the second device and the core network side device, the response information may be pre-configured on the core network side device. Alternatively, if the pre-shared information is shared by the first device, the second device, and the core network side device, the response information may be pre-configured on both the core network side device and the first device side.

For example, on the first device side, the response information is related to the challenge information, which refers to the following. On the first device side, the response information and the challenge information are stored in association with the identifier of the second device and/or the pseudonym of the second device, and the first device can query the response information stored therein related to the challenge information based on related information of the second device. On the core network side device, the response information is related to the challenge information, which is similar to the relevant description of the first device mentioned above and will not be repeated.

The processing of the second device side may also include the following. The second device generates the response information based on the challenge information in the pre-shared information. Exemplarily, the second device may generate the response information based on the challenge information in the pre-shared information after receiving the second message from the first device and before calculating the first authentication information.

To further explain in combination with the above example, if the pre-shared information is shared by the first device and the second device, the first device may pre-store the response information, the challenge information, and the identifier of the second device (and/or the pseudonym of the second device). If the pre-shared information is shared by the second device and the core network side device, the core network side device may pre-store the response information, the challenge information, and the identifier of the second device (and/or the pseudonym of the second device). If the pre-shared information is shared by the first device, the second device, and the core network side device, the first device and the core network side device both pre-store the response information, the challenge information, and the identifier of the second device (and/or the pseudonym of the second device).

Next, the processing of pre-storing the response information, the challenge information, and the identifier of the second device (and/or the pseudonym of the second device) by the first device and/or the core network side device is described.

The second device may send a first request message to a third device, where the first request message may carry the identifier of the second device. The second device receives the challenge information and the pseudonym of the second device sent by the third device. The second device inputs the challenge information into a key processing unit, and obtains the response information output by the key processing unit. The second device stores the challenge information and sends the response information to the third device. Accordingly, the third device receives the first request message from the second device, where the first request message carries the identifier of the second device. The third device generates a random pseudonym as the pseudonym of the second device based on the identifier of the second device, and the third device generates a random challenge as the challenge information. The third device sends the challenge information and the pseudonym of the second device to the second device. The third device receives the response information from the second device.

Further, in the case that the third device is the core network side device, if the pre-shared information is shared by the second device and the core network side device, the third device may store the response information and the challenge information in association with the identifier of the second device (and/or the pseudonym of the second device). If the pre-shared information is shared by the second device and the first device, the third device may send the response information, the challenge information, and the identifier of the second device (and/or the pseudonym of the second device) to the first device, which will be stored in association by the first device. If the pre-shared information is shared by the second device, the first device, and the core network side device, the third device may store the response information and the challenge information in association with the identifier of the second device (and/or the pseudonym of the second device), and send the response information, the challenge information, and the identifier of the second device (and/or the pseudonym of the second device) to the first device, and the first device will store the response information, the challenge information in association with the identifier of the second device (and/or the pseudonym of the second device).

In the case that the third device is not the core network side device (for example, the third device is a server), if the pre-shared information is shared by the second device and the core network side device, the third device may send the response information, the challenge information, and the identifier of the second device (and/or the pseudonym of the second device) to the core network side device, which will be stored in association by the core network side device. If the pre-shared information is shared by the second device and the first device, the third device may send the response information, the challenge information, and the identifier of the second device (and/or the pseudonym of the second device) to the first device, which will be stored in association by the first device. If the pre-shared information is shared by the second device, the first device, and the core network side device, the third device may store the response information and the challenge information in association with the identifier of the second device (and/or the pseudonym of the second device) and send them to the first device and the core network side device respectively, and the first device and the core network side device will store the response information, the challenge information in association with the identifier of the second device (and/or the pseudonym of the second device) respectively.

The key processing unit may be a hardware unit or/and software unit of the second device. In one example, the key processing unit is a hardware unit of the second device and may be a physical unclonable function (PUF) of the second device. In some other examples, the key processing unit may also be hardware and/or software that can output unique and unchanged response information based on the input challenge information, which is not limited in this embodiment.

On the second device side, the processing of storing the challenge information may include the following. The second device uses the challenge information as the pre-shared information and stores the pre-shared information in association with the identifier of the second device (and/or the pseudonym of the second device). Alternatively, the second device uses the challenge information and the response information as the pre-shared information and stores the pre-shared information in association with the identifier of the second device (and/or the pseudonym of the second device). For the different situations in which the second device stores the challenge information as the pre-shared information or stores the challenge information and the response information as the pre-shared information, reference can be made to the aforementioned embodiments, which will not be repeated.

The interaction between the second device and the third device may be an offline interaction, that is, the second device and the third device are in a secure communication environment. The manner of establishing a secure channel between the second device and the third device is not limited in this embodiment.

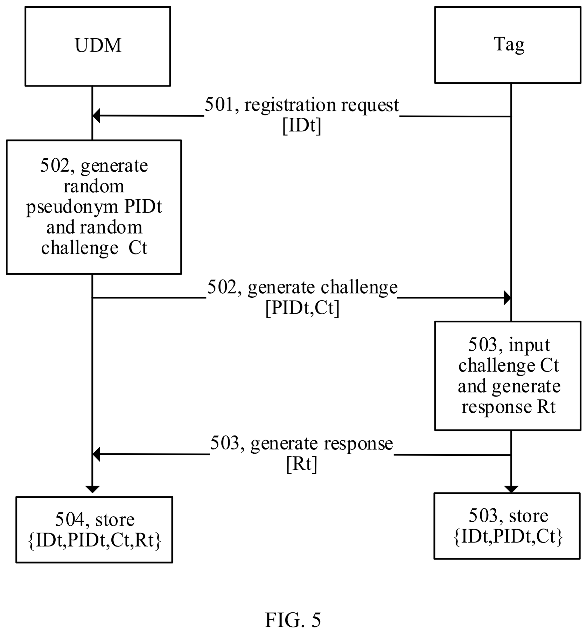

In conjunction with FIG. 5, taking the second device as Tag and the third device as UDM as an example, the processing of pre-configuring the challenge information and the response information is exemplarily described.

At 501, Tag sends a registration request message to the network (i.e., UDM) through a secure channel, where the registration request message contains IDt of Tag. The registration request message in this step is the first request message in the aforementioned embodiment. It should be understood that the registration request message is merely an exemplary description, and in actual processing, the registration request message can also be replaced with other non-access stratum (NAS) messages, which are not exhaustively enumerated herein. In addition, in this example, the pre-configuration process of Tag and UDM is performed offline, that is, Tag and the network (i.e., UDM) are in a secure communication environment.

At 502, after receiving the registration request message from Tag, the network (i.e., UDM) generates a random pseudonym PIDt and a random challenge Ct, and uses the random pseudonym PIDt as the PIDt of Tag, and sends the PIDt of Tag and the challenge Ct to Tag. In this step, the random challenge is represented by Ct, and the random challenge is the challenge information in this embodiment. If there is no special explanation below, the meanings of random challenge, Ct, the challenge information, and challenge are the same, and no repeated explanation is made. If there is no special explanation below, the meanings of random challenge, pseudonym, and PIDt are the same, and no repeated explanation is made.

At 503, Tag inputs the received challenge Ct into PUF to obtain the response Rt=PUF(Ct), and sends Rt to the network side, and then Tag stores IDt, PIDt, and Ct. In this step, PUF is the aforementioned key processing unit, PUF() indicates that the PUF performs the response calculation, and Rt indicates the response information. In the following text, if there is no special explanation, the meanings of response, Rt, and response information are the same and will not be repeated.

At 504, the network side stores the received response Rt, challenge Ct, IDt of Tag, and PIDt of Tag together in the UDM. In FIG. 5, for simplicity, the network side is illustrated as the UDM, so this step may be that the UDM stores the received response Rt, challenge Ct, IDt of Tag, and PIDt of Tag together.

In some possible implementations, the first device authenticates the second device based on the first authentication information as follows. The first device authenticates the second device based on the first authentication information and first expected information.

Specifically, the first device authenticates the second device based on the first authentication information and the first expected information as follows. The first device determines that the authentication of the second device is successful when the first authentication information is the same as the first expected information. The first device determines that the authentication of the second device is failed when the first authentication information is different from the first expected information.

On the first device side, the third message carries a first random number. The method further includes the following. The first device calculates the first expected information based on a first intermediate key, the first random number, the related information of the second device, and a first generation parameter, where the first generation parameter includes at least one of: response information, the challenge information, an identifier of the first device, or the authentication parameter.

On the second device side, the third message carries the first random number. The second device calculates the first authentication information based on the authentication parameter and the pre-shared information as follows. The second device calculates the first intermediate key based on the challenge information, the response information, the related information of the second device, and the authentication parameter, the second device generates the first random number, and the second device calculates the first authentication information based on the first intermediate key and the first random number.

The second device calculates the first authentication information based on the first intermediate key and the first random number as follows. The second device calculates the first authentication information based on the first intermediate key, the first random number, the related information of the second device, and the first generation parameter, where the first generation parameter includes at least one of: the response information, the challenge information, the identifier of the first device, or the authentication parameter.

In some possible embodiments, the pre-shared information may be shared by the first device and the second device. The content included in the pre-shared information is the same as that in the aforementioned embodiment and will not be repeated. It should be understood that regardless of the content included in the pre-shared information, before the first device calculates the first expected information, the first device can store or pre-configure the challenge information and the response information corresponding to the second device. Similarly, before the second device calculates the first authentication information, the second device can obtain the challenge information and the response information, which will not be repeated.

The first intermediate key on the first device side may be calculated by the first device. The processing of the first device may include the following. The first device calculates the first intermediate key based on the challenge information, the response information, the related information of the second device, and the authentication parameter.

Exemplarily, the first device calculates the first intermediate key based on the challenge information, the response information, the related information of the second device, and the authentication parameter as follows. The first device calculates the first intermediate key based on the challenge information, the response information, the related information of the second device, and the authentication parameter by using a third calculation method. The third calculation method may include at least one of: key derivation function (KDF), a first authentication function, a second authentication function, a third authentication function, a Hash algorithm, an advanced encryption standard (AES), Snow third generation (SNOW 3G), ZUChongzhi (ZUC), exclusive OR (XOR) calculation, or direct concatenation calculation . The first authentication function can be expressed as f1(), and the second authentication function can be expressed as f2(); the Hash algorithm can be expressed as HASH(), and the Hash algorithm can include Hash based message authentication code-secure Hash algorithm-256 (HMAC-SHA-256), or other Hash algorithms, which are not exhaustively enumerated in this embodiment. It should be understood that this is only an exemplary description. In actual processing, the third calculation method can also encompass additional possibilities, such as at least one of a third key generation function (such as f3), a fourth key generation function (such as f4), or a fifth key generation function (such as f5), etc. All possible calculation functions (or algorithms) of the third calculation method are not exhaustively listed herein.

The authentication parameter may include an anonymity key (AK) or a second random number.

The related information of the second device may include the identifier of the second device or the pseudonym of the second device.

For example, assuming that the third calculation method includes the KDF and the direct concatenation calculation, the authentication parameter includes the anonymity key and the related information of the second device is the pseudonym of the second device. The processing of calculating the first intermediate key can be expressed by the following formula: SK1=KDF(Ct∥Rt, AK, PIDt), where SK1 is the first intermediate key in this embodiment, KDF() represents the KDF function, "∥" represents the direct concatenation calculation, Ct represents the challenge information, Rt represents the response information, AK represents the anonymity key, and PIDt represents the pseudonym of the second device. It should be understood that this is only an exemplary description. In actual processing, the KDF and the direct concatenation calculation in the above formula can be replaced by one or more other algorithms or functions in the third calculation method. For example, the above KDF can be replaced by the first authentication function, the direct concatenation calculation can be replaced by the XOR calculation, and the authentication parameter can also be replaced by the second random number (for example, expressed as Nn). All possible situations are not exhaustively enumerated herein.

Accordingly, the second device calculates the first intermediate key based on the challenge information, the response information, the related information of the second device, and the authentication parameter as follows. The second device calculates the first intermediate key based on the challenge information, the response information, the related information of the second device, and the authentication parameter by using the third calculation method. It should be noted that the method for calculating the first intermediate key by the first device should be the same as the method for calculating the first intermediate key by the second device, and the first intermediate key obtained by the first device side should also be the same as the first intermediate key obtained by the second device, which will not be described in detail.

The first device calculates the first expected information based on the first intermediate key, the first random number, the related information of the second device, and the first generation parameter as follows. The first device calculates the first expected information based on the first intermediate key, the first random number, the related information of the second device, and the first generation parameter by using a fourth calculation method.

The fourth calculation method may include at least one of: KDF, the first authentication function, the second authentication function, the third authentication function, the Hash algorithm, AES, SNOW 3G, ZUC, the third key generation function, the fourth key generation function, the fifth key generation function, or the like.

The first expected information may include a first expected response (XRES).

Optionally, the first generation parameter may include the response information and the identifier of the first device. That is, in the above, the first authentication information may be calculated as follows. The first device calculates the first expected information based on the first intermediate key, the first random number, the related information of the second device, the response information, and the identifier of the first device by using the fourth calculation method. For example, when the first device is the terminal device, in this example, the first expected information can be calculated by using the following formula: XRES2=f(SK1, PIDt, Nt, Rt, IDu), where XRES2 is the first expected information, i.e., the first XRES, f() is any one of the fourth calculation methods, SK1 is the first intermediate key, PIDt is the pseudonym of the second device, Nt is the first random number, Rt is the response information, and IDu is the identifier of the terminal device. When the first device is an access network device (such as gNB), in this example, the first authentication information can be calculated by using the following formula: XRES2=f(SK1, PIDt, Nt, Rt, gNBu), where gNBu is the identifier of the gNB, and the meaning of the remaining contents is the same as that of the above embodiment, which will not be repeated. It should be noted that the above f() can be any algorithm or function in the above fourth calculation method, which is not exhaustively enumerated herein.

Optionally, the first generation parameter may include the identifier of the first device, and the identifier of the first device may be ID and/or a network identifier of the first device. The relevant descriptions about the ID and the network identifier are the same as those in the aforementioned embodiment and are not repeated herein. That is, in the above, the first expected information may be calculated as follows. The first device calculates the first expected information based on the first intermediate key, the first random number, the related information of the second device, and the identifier of the first device by using the fourth calculation method. Optionally, the first generation parameter may include the response information. That is, in the above, the first expected information may be calculated as follows. The first device calculates the first expected information based on the first intermediate key, the first random number, the related information of the second device, and the response information by using the fourth calculation method. It should be understood that the above is only an exemplary description. In actual processing, the first generation parameter may include one or more of: the response information, the challenge information, the identifier of the first device, and the authentication parameter, which are not exhaustively enumerated herein.

The second device calculates the first authentication information based on the first intermediate key, the first random number, the related information of the second device, and the first generation parameter as follows. The second device calculates the first authentication information based on the first intermediate key, the first random number, the related information of the second device, and the first generation parameter by using the fourth calculation method. The first authentication information may include a first response (RES).

The first generation parameter used to calculate the first authentication information by the second device should be the same as the first generation parameter used to calculate the first expected information by the first device. The fourth calculation method used by the second device should also be the same as the fourth calculation method used by the first device. For example, the first generation parameter can include the response information and the identifier of the first device, and calculating the first authentication information by the second device is exemplarily described. The second device calculates the first authentication information based on the first intermediate key, the first random number, the related information of the second device, the response information, and the identifier of the first device by using the fourth calculation method. For example, when the first device is the terminal device, the second device can calculate the first authentication information by using the following formula: RES2=f(SK1, PIDt, Nt, Rt, IDu), where RES2 is the first authentication information, that is, the first RES, and the meaning of the remaining contents is the same as the above embodiment, and will not be repeated. The above is only an exemplary description. In actual processing, various methods for calculating the first expected information by the first device can be used for calculating the first authentication information by the second device, which are not repeated.

In some possible embodiments, the first message carries a first message authentication code and/or a fifth message authentication code, where the first message authentication code is used to authenticate the core network side device by the second device, and the fifth message authentication code is used to authenticate the core network side device by the first device, and the first message authentication code is used to authenticate the core network side device by the second device, and the fifth message authentication code is used to authenticate the core network side device by the first device.

In this embodiment, the first message at least further carries the first message authentication code, and the second message carries the first message authentication code, where the first message authentication code is used to authenticate the core network side device by the second device.

The processing of the core network side device may also include the following. The core network side device calculates the first message authentication code based on the authentication parameter and a first shared key, where the first shared key is shared by the second device and the core network side device. Then, the core network device carries the first message authentication code in the first message and sends the first message to the first device.

The processing of the second device side also includes the following. The second device calculates a second message authentication code based on the authentication parameter and the first shared key, where the first shared key is shared by the second device and the core network side device. The second device authenticates the core network side device based on the first message authentication code and the second message authentication code. Specifically, the second device authenticates the core network side device based on the first message authentication code and the second message authentication code as follows. The second device determines that the authentication of the core network side device is successful when the first message authentication code is the same as the second message authentication code. The second device determines that the authentication of the core network side device is failed when the first message authentication code is different from the second message authentication code.

The second device may calculate the second message authentication code before calculating the first authentication information, that is, after the second device determines that the authentication of the core network side is successful, the first authentication information may be calculated.

The first shared key may be shared by the second device and the core network side device. The first shared key may be at least one of: a pre-shared key (PSK), a pre-distributed key, a private network key, an application layer key, or a physical layer key, etc. In a preferred example, the first shared key may be a PSK between the second device and the core network side device, such as a root key.

The above authentication parameter may include the AK or the second random number. For example, the authentication parameter includes the AK and the first shared key is the root key, and the second device calculates the second message authentication code based on the authentication parameter and the first shared key as follows. The second device calculates the second message authentication code based on the AK and the root key by using a fifth calculation method. The fifth calculation method may include at least one of: the first authentication function, the second authentication function, the third authentication function, the Hash algorithm, AES, SNOW 3G, ZUC, the third key generation function, the fourth key generation function, the fifth key generation function, or the like. Exemplarily, the processing of calculating by the second device the second message authentication code may be expressed as: f(Kr, AK), where f() is the fifth calculation method, Kr is the root key, and AK is the anonymity key. For example, the authentication parameter includes the second random number and the first shared key is the root key, and the second device calculates the second message authentication code based on the authentication parameter and the first shared key as follows. The second device calculates the AK based on an XOR operation between the second random number and the root key, and calculates the second message authentication code based on the AK and the root key by using the fifth calculation method. The fifth calculation method and the formula for the second device to calculate the second message authentication code can be the same as those in the aforementioned embodiment and will not be described in detail. The second device calculates the AK based on the XOR of the second random number and the root key, which can be expressed as AK=Kr ⊕ Nn, where Nn represents the second random number and ⊕ represents the XOR calculation.

It should be pointed out that the above description is only based on the example of calculating the second message authentication code by the second device. In fact, on the core network side device, the processing of calculating the first message authentication code and the processing of calculating the second message authentication code should be the same as the above. For example, the core network side device also uses f(Kr, AK) to calculate the first message authentication code. To distinguish the message authentication codes obtained by different devices, different ways of expressing the message authentication codes are adopted this embodiment. In the following examples, the first message authentication code can be expressed as MAC, and the second message authentication code can be expressed as MAC'. In some other examples, the first message authentication code can also be expressed as MAC1, and the second message authentication code can also be expressed as MAC1'. Herein, the various possible ways of expressing the first message authentication code and the second message authentication code are not exhaustively enumerated.

It should also be pointed out that the core network side device may include multiple core network devices (or network elements of the core network). If the first core network device on the core network side interacts with the first device and the first core network device itself calculates the first message authentication code, the first core network device may perform the aforementioned processing. If the first core network device on the core network side interacts with the first device and the first core network device itself does not calculate the first message authentication code, the first core network device receives an eighth message from the second core network device, where the eighth message carries at least one of: the authentication parameter, the first message authentication code, the second message authentication code, the second expected information, or the third expected information. For example, the first core network device may be an AUSF, and the second core network device may include an UDM.

In some embodiments, the third message carries second authentication information, where the second authentication information is used to authenticate the second device by the core network side device.

The processing of the first device side may also include the following. The first device sends a fourth message to the core network side device, where the fourth message carries the second authentication information.

The processing of the second device may also include the following. The second device calculates the second authentication information based on the authentication parameter and the first shared key, where the second authentication information is used to authenticate the second device by the core network side device, and the first shared key is shared by the second device and the core network side device.

The processing of the core network side device may also include the following. The core network side device receives the fourth message from the first device, where the fourth message carries at least one of: the second authentication information, third authentication information, or a third random number, the second authentication information is used to authenticate the second device by the core network side device, and the third authentication information is used to authenticate the first device by the core network side device.

The method further includes at least one of the following. The core network side device authenticates the second device based on the second authentication information and the second expected information. The core network side device authenticates the first device based on the third authentication information and the third expected information.

Specifically, the core network side device authenticates the second device based on the second authentication information and the second expected information as follows. The core network side device determines that the authentication of the second device is successful when the second authentication information is the same as the second expected information. The core network side device determines that the authentication of the second device fails when the second authentication information is different from the second expected information. Additionally/alternatively, the core network side device authenticates the first device based on the third authentication information and the third expected information as follows. The core network side device determines that the authentication of the first device is successful when the third authentication information is the same as the third expected information. The core network side device determines that the authentication of the first device fails when the third authentication information is different from the third expected information.

In this embodiment, the processing of the core network side may further include the following. The core network side device calculates the second expected information based on the authentication parameter and the first shared key. For example, the processing of the core network side device may include the following. The core network side device receives the fourth message from the first device, where the fourth message carries the second authentication information. The core network side device calculates the second expected information based on the authentication parameter and the first shared key. The core network side device determines that the authentication of the second device is successful when the second authentication information is the same as the second expected information.

The description of the authentication parameter and the first shared key is the same as that of the aforementioned embodiment. It should be pointed out that although the second device also uses the authentication parameter and the first shared key to calculate the second message authentication code and the second authentication information, the second device uses different methods to calculate the second authentication information and the second message authentication code. Similarly, the core network side device also uses the authentication parameter and the first shared key to calculate the first message authentication code and the second expected information, but uses different methods. Herein, the different methods may refer to at least one of different calculation methods, different calculation processes, or the like, where different calculation methods may refer to different algorithms and/or functions, and different calculation processes may refer to different intermediate calculation processes with the same parameters.

For example, if the authentication parameter includes the AK, the first shared key is the root key, and the second device uses the fifth calculation method to calculate the second message authentication code based on the AK and the root key, then the second device calculates the second authentication information based on the authentication parameter and the first shared key as follows. The second device calculates the second random number based on the XOR of the AK and the root key, and uses a sixth calculation method to calculate the second authentication information based on the second random number and the root key. The sixth calculation method may include at least one of: the first authentication function, the second authentication function, the third authentication function, the Hash algorithm, AES, SNOW 3G, ZUC, the third key generation function, the fourth key generation function, or the fifth key generation function, etc. The sixth calculation method may be the same as or different from the fifth calculation method. For example, calculating the second random number based on the XOR of the AK and the root key can be expressed as: Nn=Kr ⊕ AK. Calculating the second authentication information based on the second random number and the root key by using the sixth calculation method can be expressed as: RES1=f(Kr, Nn), where RES1 represents the second authentication information, f() represents the sixth calculation method, in this example, the sixth calculation method and the fifth calculation method can be the same, Kr represents the root key, and Nn represents the second random number.

For example, if the authentication parameter includes the second random number, the first shared key is the root key, the second device calculates the AK based on the XOR of the second random number and the root key, and the fifth calculation method is used to calculate the second message authentication code based on the AK and the root key, then the second device calculates the second authentication information based on the authentication parameter and the first shared key as follows. The second device calculates the second authentication information based on the second random number and the root key by using the sixth calculation method. The sixth calculation method and the calculation formula of the second authentication information are the same as those in the above embodiment, and no repeated description is given.

The method with which the core network side device calculates the second expected information should be the same as the method with which the second device calculates the second authentication information, for example, both are calculated with the method of f(Kr, Nn). The difference is that they are calculated by different devices, so they are distinguished in this embodiment. For example, the second expected information on the core network side can be represented as XRES1 to be distinguished from the second authentication information represented by RES1.

In some possible embodiments, key agreement is further performed between the first device and the second device.

The processing of the first device also includes at least one of the following. The first device calculates an integrity protection key based on the first random number and the first intermediate key. The first device calculates an encryption key based on the third random number and the first intermediate key.

The processing of the second device may also include at least one of the following. The second device calculates the integrity protection key based on the first random number and the first intermediate key. The second device calculates the encryption key based on the third random number and the first intermediate key.

On the first device side, the integrity protection key can be used to calculate the integrity check code of the message sent by the first device to the second device and send the message carrying the integrity check code, and/or perform integrity check on the message received by the first device from the second device. The encryption key is used to encrypt the information sent by the first device to the second device, and/or decrypt the information received by the first device from the second device. The processing of the second device is the same as that of the first device and will not be described in detail.

The integrity protection key is calculated based on the first random number and the first intermediate key as follows. The XOR calculation is performed on the first random number and the first intermediate key to obtain the integrity protection key, e.g., expressed as: Ki=SK1 ⊕ Nt, where Nt is the first random number, SK1 is the first intermediate key, and Ki is the integrity protection key. The first device and the second device have the same process for calculating the integrity protection key, which will not be described in detail. In some possible examples, the integrity protection keys, generated by the first device and the second device respectively, can both be expressed as Ki. In some possible examples, since the first device and the second device are different in subject, the integrity protection key of the second device can also be expressed as any one of Ki', Ki-t, Ki-tag, etc., and the integrity protection key of the first device can also be expressed as any one of Ki, Ki-u, Ki-gNB, etc. Various possible representations of the integrity protection key are not exhaustively listed herein.

The first device calculates the encryption key based on the third random number and the first intermediate key as follows. The first device performs the XOR calculation on the third random number and the first intermediate key to obtain the encryption key, e.g., expressed as: Kc=SK1 ⊕Nu, where Nu is the third random number, SK1 is the first intermediate key, and Kc is the encryption key. The second device calculates the encryption key in the same way as the first device, which is not repeated. In some possible examples, the encryption keys generated by the first device and the second device respectively can both be expressed as Kc. In some possible examples, since the first device and the second device are different in subject, the encryption key of the second device can also be expressed as any one of Kc', Kc-t, Kc-tag, etc., and the encryption key of the first device can also be expressed as any one of Kc, Kc-u (for example, the first device is a terminal device), Kc-gNB (for example, the first device is an access network device), etc. Various possible representations of the encryption key are not exhaustively listed herein.

In some possible examples, the second message carries the third random number. Alternatively, the method further includes the following. The first device sends the fifth message to the second device, where the fifth message is in response to the third message, and the fifth message carries the third random number.

The second message carries the third random number. Alternatively, the method further includes the following. The second device receives the fifth message from the first device, where the fifth message is in response to the third message, and the fifth message carries the third random number.

Optionally, the second device may generate the first random number after receiving the second message and before calculating the first authentication information. The second device may also calculate the integrity protection key before or after calculating the first authentication information. Accordingly, the first device may obtain the first random number from the third message and calculate the integrity protection key after receiving the third message.

Regarding the process of using the integrity protection key, for example, when the second device sends the third message, the third message may also carry an integrity check code of the third message. The integrity check code of the third message is obtained by performing integrity protection calculation based on the integrity protection key and the original content of the third message. The specific integrity protection calculation method adopted is not limited in this embodiment. As long as the second device and the first device use the same integrity protection calculation method, it is within the protection scope of this embodiment. The original content of the third message may refer to all possible contents carried by the third message except the integrity check code of the third message, which are not exhaustively enumerated herein. If the third message carries the integrity check code of the third message, the first device checks the integrity check code of the third message based on the integrity protection key after receiving the third message. If it is determined that the integrity check of the third message passes, the first device performs subsequent processing. The integrity check code of the third message can be checked based on the integrity protection key as follows. A verification code of the third message is obtained by calculating the original content of the third message based on the integrity protection key, and determine that the integrity check of the third message passes when the verification code and the integrity check code of the third message are consistent.

The timing and specific message when the second device and the first device use the integrity protection key are not limited in this embodiment.

Optionally, if the second message carries the third random number, the second device obtains the third random number carried by the second message after receiving the second message, and the second device can calculate the encryption key before sending the third message.

The first device may generate the third random number before sending the second message, and carry the third random number in the second message. After successfully authenticating the second device, the first device calculates the encryption key based on the third random number.

For example, when the second device sends the third message, the second device can use the encryption key to encrypt the third message, or the second device can first store the third message and use the encryption key in subsequent communication between the second device and the first device. This embodiment does not limit the use of the encryption key by the first device and the second device and the use timing of the encryption key.

Optionally, the first device may generate the third random number after successfully authenticating the second device, and carry the third random number when sending the fifth message. The first device may calculate the encryption key after generating the third random number. After receiving the fifth message, the second device obtains the third random number carried in the fifth message, and then calculates the encryption key.

This embodiment does not limit the timing when the first device and the second device use the encryption key.

In some possible examples, the first device may also send the first intermediate key to a key management device. The key management device may be at least one of: a key management function (KMF), an AMF, a network element with a key management function, or a network element with a key management function related to an AIoT device. The key management device stores the first intermediate key for mobility management of the first device and/or the second device.

In some possible examples, the processing of the second device may also include the following. The second device sends a sixth message to the first device, where the sixth message is used to request authentication, and the sixth message carries the related information of the second device.

Accordingly, the processing of the first device may also include the following. The first device receives the sixth message from the second device, where the sixth message is used to request authentication, and the sixth message carries the related information of the second device. The first device sends a seventh message to the core network side device, where the seventh message is used to request authentication, and the seventh message carries the related information of the second device and the identifier of the first device.

The processing of the core network side device may also include the following. The core network side device receives the seventh message from the first device, where the seventh message is used to request authentication, and the seventh message carries the related information of the second device and the identifier of the first device.

Before the second device sends the sixth message to the first device, the second device receives a trigger message, where the trigger message can be used to activate the second device. The trigger message can be sent by the fifth device. The fifth device can be the aforementioned first device, that is, the fifth device can be a terminal device or an access network device. Alternatively, the fifth device can be different from the aforementioned first device, for example, another terminal or another access network device. Alternatively, the fifth device can be a core network side device, and the fifth device can be any device on the core network side, which is not limited herein.

After the core network side device receives the seventh message from the first device, the core network side device checks whether the first device and the second device are authorized based on the related information of the second device and the identifier of the first device that are carried in the seventh message. If the authorization is successful, the core network side device performs the processing of calculating the first message authentication code and/or calculating the second expected information. Then, the core network side device can send the first message to the first device, and the subsequent processing will not be repeated.

Whether the first device and the second device are authorized is checked as follows. The subscription data of the first device and subscription data of the second device are obtained, whether the first device is authorized to act as a communication agent for the second device is checked and/or whether the second device is authorized to use the communication service is detected. Accordingly, determining that the authorization is successful may include: determining that the first device is authorized to act as the communication agent for the second device and/or that the second device is authorized to use the communication service.

For example, the subscription data of each of the first device and the second device may be stored in the UDM, and the content, acquisition method, and storage method thereof are not limited in this embodiment.

For another example, the core network side device may include multiple core network devices, the device receiving the seventh message may be the first core network device (such as AUSF), and the device performing the aforementioned check may be the second core network device (such as UDM). The processing of calculating the aforementioned first message authentication code and calculating the second expected information may be performed by the second core network device. The processing of sending the first message may be performed by the first core network device. That is, the second core network device may send the first message authentication code, the second expected information, and the authentication parameter to the first core network device, and then the first core network device may send the first message carrying the authentication parameter and the first message authentication code to the first device.

In some possible examples, after generating the second authentication information, the second device may update the pseudonym of the second device based on the second random number, obtain and store the updated pseudonym of the second device. For example, the following formula may be used for calculation: PIDt*=PIDt ⊕ Nn, where PIDt* is the updated pseudonym of the second device. Accordingly, after the core network side device successfully authenticates the second device, the core network side device updates the pseudonym of the second device based on the second random number, and obtains and stores the updated pseudonym of the second device. The specific calculation method is the same as that of the second device, which will not be repeated. The pseudonym of the second device is for use in performing authentication or other interactions with the core network device next time.

Optionally, after the core network side device generates the updated pseudonym of the second device, the core network side device sends an eighth message to the first device, the eighth message is used to indicate that the authentication of the second device is successful, and the eighth message carries the updated pseudonym of the second device. Accordingly, the first device may also receive the eighth message from the core network side device.

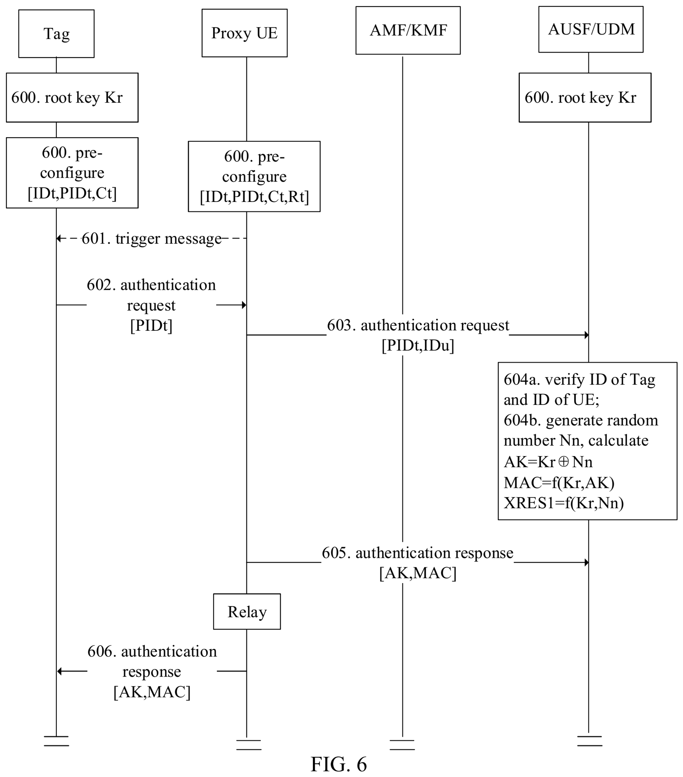

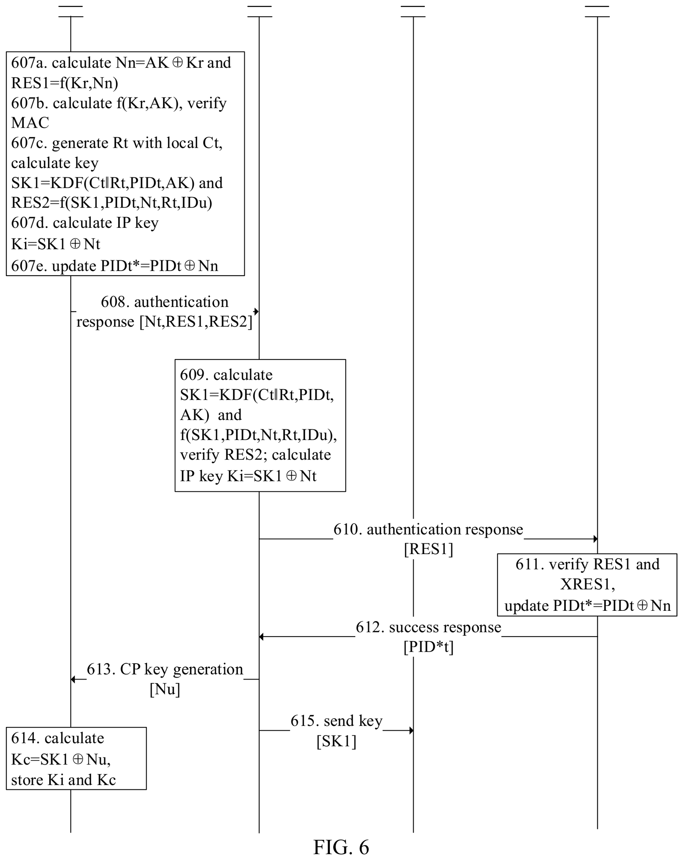

In conjunction with FIG. 6, the authentication method provided in the foregoing implementation is exemplarily described in an example where the first device is UE (or referred to as a proxy UE, UE and Proxy UE have the same meaning hereinafter and are not described repeatedly), the second device is Tag, and the core network side device includes AUSF and UDM.

At 600, Tag and UE pre-share Ct, Tag and the core network side device share the root key Kr. Herein, Tag and UE pre-share Ct, that is, the aforementioned pre-shared information includes challenge information. Further, UE can also associate and store the pre-shared information [Ct] with Rt, IDt, and PIDt of Tag, that is, as illustrated in FIG. 6, UE pre-stores [IDt, PIDt, Ct, Rt]. Tag can pre-share Ct, and associate and store Ct with IDt and PIDt, that is, as illustrated in FIG. 6, Tag pre-stores [IDt, PIDt, Ct]. It should be understood that this is only an example, and in some other possible examples, the pre-shared information may include Ct, Rt, that is, UE and Tag both pre-store [IDt, PIDt, Ct, Rt]. It should be noted that in this example, UE can also be replaced by a base station.

At 601, UE (or network) sends a trigger message to activate Tag.

At 602, Tag sends an authentication request message to UE, the authentication request message carrying the pseudonym PIDt of Tag. Herein, the authentication request message is the sixth message in the above embodiment.

At 603, UE as a proxy sends an authentication request message to the core network side device (indicated as AUSF/UDM in FIG. 6), the authentication request message including the pseudonym PIDt of Tag and UE ID (IDu). The authentication request message in this step may be the seventh message in the aforementioned embodiment.

At 604, UDM generates a second random number Nn and calculates MAC (i.e., the first message authentication code) and XRES1 (i.e., the second expected information).

Specifically, at 604a, UDM (indicated as AUSF/UDM in FIG. 6) queries the subscription data of UE and Tag according to UE ID and Tag PIDt, and checks whether UE is authorized as the communication agent of A-IoT and whether Tag is authorized to use A-IoT communication services. At 604b, if the authorization is successful, UDM generates the second random number Nn, and UDM calculates AK=Kr ⊕ Nn, MAC=f(Kr, AK) and XRES1=f(Kr, Nn).

The device that receives the authentication request message in step 603 may be AUSF, and the device that performs the authorization check and calculates MAC and XRES 1 in step 604 may be UDM. After UDM calculates MAC and XRES1, UDM may send the above AK, MAC, and XRES1 to AUSF.

At 605, AUSF sends an authentication response message to proxy UE, the authentication response message containing [AK, MAC]. In this step, AUSF can store the received XRES 1 locally and only send AK (i.e., an example of the authentication parameter of the aforementioned embodiment) and MAC (i.e., the first message authentication code). The above authentication response message is the first message of the aforementioned embodiment.

At 606, proxy UE sends an authentication response message to Tag, the authentication response message containing [AK, MAC]. The authentication response message in this step is the second message in the above embodiment.

At 607, Tag calculates MAC' (i.e., the second message authentication code) based on AK. When MAC and MAC' are the same, authentication of the core network side device is successful, and then RES2 (i.e., the first authentication information) is calculated.

Specifically, as illustrated in FIG. 6, step 607a may include the following. Tag uses PSK shared with the network side to calculate Nn=Kr ⊕ AK, RES1=f(Kr, Nn), where PSK is the first shared key in the aforementioned embodiment, and in this example, the first shared key is specifically the root key Kr, and RES 1 is the second authentication information, which is used for the core network side device to authenticate Tag.

At 607b, Tag uses AK and the root key to calculate MAC'=f(Kr, AK). Tag verifies whether MAC', i.e. f(Kr, AK), is consistent with MAC. If not, authentication of the network (core network side device) by Tag fails. If consistent, authentication of the network (core network side device) by Tag succeeds.

At 607c, Tag inputs the locally stored Ct into PUF, obtains the corresponding Rt=PUF(Ct), calculates the first intermediate key SK1=KDF(Ct∥Rt, PIDt, AK), calculates RES2=f(SK1, PIDt, Nt, Rt, IDu), where RES2 is the first authentication information, used to authenticate Tag by UE, and Nt is the first random number generated by Tag.

At 607d, Tag generates an integrity protection key Ki=SK1 ⊕ Nt.

At 607e, Tag updates the pseudonym PIDt*=PIDt ⊕ Nn for use in the next round of authentication.

At 608, Tag returns an authentication response message to UE, the authentication response message including [Nt, RES1, RES2]. The authentication response message may be the third message in the above embodiment.

At 609, UE uses CRP pre-shared with Tag to calculate the first intermediate key SK1=KDF(Ct∥Rt, PIDt, AK) and XRES2=f(SK1, PIDt, Nt, Rt, IDu), and verifies whether XRES2 is consistent with RES2. If not, authentication of Tag by UE is failed; if consistent, authentication of Tag by UE is successful. UE uses SK1 (i.e., the first intermediate key) and Nt to generate the integrity protection key Ki=SK1 ⊕ Nt.

At 610, UE sends an authentication response message to UDM/AUSF, the authentication response message including RES1. The authentication response message may be the fourth message in the above embodiment.

At 611, UDM/AUSF verifies whether RES1 is consistent with XRES1. If not, authentication of Tag by the network fails. If consistent, the authentication of Tag by the network succeeds. UDM/AUSF updates the pseudonym of Tag: PIDt*=PIDt ⊕ Nn, for use in the next authentication.

At 612, UDM/AUSF returns a success response to UE, where the success response contains the updated pseudonym PIDt*. The success response may be the eighth message in the aforementioned embodiment.

At 613, UE generates a third random number Nu, calculates the encryption key Kc=SK1 ⊕ Nu, and sends the third random number to Tag. The message carrying the third random number herein may be the fifth message in the above embodiment.

At 614, Tag receives the third random number Nu, calculates the encryption key Kc=SK1 ⊕ Nu, and stores Ki and Kc.

At 615, UE sends SK1 to the key management function KMF for use in mobility management.

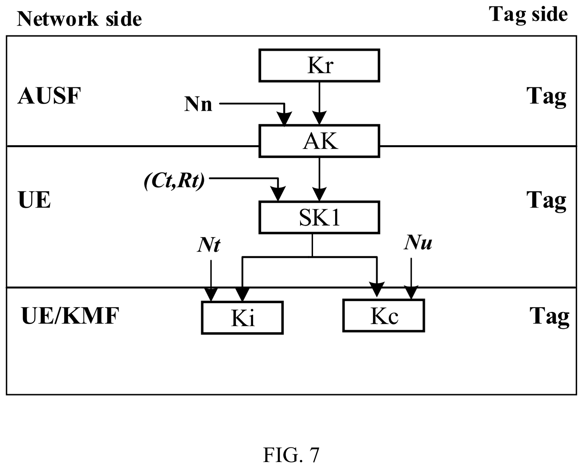

In conjunction with FIG. 7, an exemplary illustration of the key architecture in the scenario provided in FIG. 6 is given. As can be seen in FIG. 7, on the network side, specifically AUSF on the core network side shares the root key Kr with Tag, and AK can be derived based on the root key Kr and the second random number Nn. UE and Tag can derive the first intermediate key (i.e., SK1 in FIG. 7) based on AK and CRP (that is, (Ct, Rt)). UE and Tag can derive the integrity protection key Ki based on the first intermediate key SK1 and the first random number Nt (the calculation method adopted is Ki=SK1 ⊕Nt), and can derive the encryption key Kc based on SK1 and the third random number Nu (the calculation method adopted is Kc=SK1 ⊕Nu). UE will also send SK1 to the KMF for sharing.

In some possible embodiments, the pre-shared information may be shared by the core network side device and the second device. The content that may be included in the pre-shared information is the same as that in the above embodiment, and will not be described repeatedly.

The first intermediate key on the first device side may be sent by the core network side device to the first device, that is, the first message carries the first intermediate key. The core network side device calculates the first intermediate key as follows. The core network side device calculates the first intermediate key based on the challenge information, the response information, the related information of the second device, and the authentication parameter.

Optionally, the core network side device calculates the first intermediate key based on the challenge information, the response information, the related information of the second device, and the authentication parameter as follows. The core network side device calculates the second intermediate key based on the challenge information, the response information, the related information of the second device, and the authentication parameter. The core network side device calculates the first intermediate key based on the second intermediate key. Accordingly, the second device calculates the first intermediate key based on the challenge information, the response information, the related information of the second device, and the authentication parameter as follows. The second device calculates the second intermediate key based on the challenge information, the response information, the related information of the second device, and the authentication parameter. The second device calculates the first intermediate key based on the second intermediate key.

The second device calculates the second intermediate key based on the challenge information, the response information, the related information of the second device, and the authentication parameter as follows. The second device calculates the second intermediate key based on the challenge information, the response information, the related information of the second device, and the authentication parameter by using the third calculation method. The third calculation method is the same as the above embodiment and is not described in detail. The authentication parameter may include the anonymity key (AK) or the second random number. The related information of the second device may include the identifier of the second device or the pseudonym of the second device.

For example, assume that the third calculation method includes KDF and direct concatenation calculation, and the authentication parameter includes the second random number Nn and the related information of the second device is the pseudonym of the second device. The processing of calculating the second intermediate key can be expressed by the following formula: SK1=H(PIDt, Nn, Ct, Rt), where SK1 is the second intermediate key in this embodiment, H() represents the function used in the third calculation method, Ct represents the challenge information, Rt represents the response information, Nn represents the second random number, and PIDt represents the pseudonym of the second device. Alternatively, the processing of calculating the second intermediate key can be expressed as: SK1=KDF(Ct∥Rt, PIDt, Nn), where KDF() represents the KDF function, "∥" represents the direct concatenation calculation, and the meaning of the other contents in the formula is the same as that of the above formula, and no further description is given. It should be understood that this is only an exemplary description. In actual processing, the KDF and direct concatenation calculation in the above formula can be replaced by one or more other algorithms or functions in the third calculation method. For example, the above KDF can be replaced by the first authentication function, the direct concatenation calculation can be replaced by the XOR calculation, and the authentication parameter can also be replaced by AK. All possible situations are not exhaustively listed herein.

The second device calculates the first intermediate key based on the second intermediate key as follows. The second device calculates the first intermediate key based on the second intermediate key, the pseudonym of the second device, and the second random number by using a seventh calculation method. Alternatively, the second device calculates the first intermediate key based on the second intermediate key and the pseudonym of the second device by using the seventh calculation method. Alternatively, the second device calculates the first intermediate key based on the second intermediate key and the second random number by using the seventh calculation method. Alternatively, the second device calculates the first intermediate key based on the second intermediate key by using the seventh calculation method. The seventh calculation method may include at least one of: KDF, the first authentication function, the second authentication function, the third authentication function, the Hash algorithm, the advanced encryption standard, SNOW 3G, ZUC, the XOR calculation, or the direct concatenation calculation . The seventh calculation method may be the same as or different from the aforementioned third calculation method.

For example, assuming that the seventh calculation method includes KDF, the first intermediate key is calculated based on the second intermediate key, the pseudonym of the second device, and the second random number by using the seventh calculation method, which can be expressed by the following formula: SK2=KDF(SK1, PIDt, Nn), where SK2 is the first intermediate key in this embodiment, KDF() represents the KDF function, Nn represents the second random number, and PIDt represents the pseudonym of the second device. It should be understood that this is only an exemplary description. In actual processing, the KDF in the above formula can be replaced by the first authentication function, etc., and the above calculation can also only adopt PIDt, such as SK2=KDF(SK1, PIDt), and all possible situations are not exhaustively enumerated herein.

It should be pointed out that the way in which the core network side device calculates the first intermediate key should be the same as the way in which the second device calculates the first intermediate key. The first intermediate key obtained by the core network side device should also be the same as the first intermediate key obtained by the second device. The way in which the core network side device calculates the second intermediate key should be the same as the way in which the second device calculates the second intermediate key. The second intermediate key obtained by the core network side device should also be the same as the second intermediate key obtained by the second device, so no repeated explanation is given herein.

The first device calculates the first expected information based on the first intermediate key, the first random number, the related information of the second device, and the first generation parameter as follows. The first device calculates the first expected information based on the first intermediate key, the first random number, the related information of the second device, and the first generation parameter by using the fourth calculation method. The description of the fourth calculation method is the same as that of the above embodiment and is not repeated herein. The first expected information may include the first expected response (XRES).

Optionally, the first generation parameter may include the identifier of the first device and the authentication parameter, and the first device calculates the first expected information based on the first intermediate key, the first random number, the related information of the second device, the identifier of the first device, and the authentication parameter by using the fourth calculation method. For example, when the first device is a terminal device and the authentication parameter includes the second random number, the first expected information can be calculated by the following formula in this example: XRES2=f(SK2, PIDt, Nn, Nt, IDu), where XRES2 is the first expected information, i.e., the first XRES, f() is the fourth calculation method, SK2 is the first intermediate key in this embodiment, PIDt is the pseudonym of the second device, Nn is the second random number, Nt is the first random number, and IDu is the identifier of the terminal device. When the first device is an access network device (such as a gNB), the first authentication information can be calculated by the following formula in this example: XRES2=f(SK2, PIDt, Nn, Nt, gNBu), where gNBu is the identifier of the gNB, and the meaning of the remaining contents is the same as that in the above embodiment, and will not be repeated. It should be noted that the above f() can be any algorithm or function in the above fourth calculation method, which is not exhaustively enumerated herein.

Optionally, the first generation parameter may include the identifier of the first device, the response information, and the authentication parameter, and the first device calculates the first expected information based on the first intermediate key, the first random number, the related information of the second device, the identifier of the first device, the response information, and the authentication parameter by using the fourth calculation method. For example, the first device is a terminal device, and the authentication parameter includes the second random number. In this example, the first expected information may be calculated by using the following formula: XRES2=f(SK2, PIDt, Nn, Nt, Rt, IDu), where Rt is the response information, and the meaning of the remaining contents is the same as in the above embodiment, and no further description is given. In the case where the first device is an access network device (such as a gNB), the first authentication information may be calculated by using the following formula: XRES2=f(SK2, PIDt, Nn, Nt, Rt, gNBu), where gNBu is the identifier of the gNB, and the meaning of the remaining contents is the same as in the above embodiment, and no further description is given.

Optionally, the first generation parameter may include the identifier of the first device. This processing method is the same as the aforementioned embodiment and will not be described in detail. Optionally, the first generation parameter may include the response information. This processing method is the same as the aforementioned embodiment and will not be described in detail. Optionally, the first generation parameter may include the response information and the identifier of the first device. This processing method is the same as the aforementioned embodiment and will not be described in detail. It should be understood that the above is only an exemplary description of using one or more combinations in the first generation parameter. In actual processing, other combinations of the various parameters in the first generation parameter can also be used to calculate the first expected information, but this embodiment does not exhaustively list all possible combinations.

The second device calculates the first authentication information based on the first intermediate key, the first random number, the related information of the second device, and the first generation parameter as follows. The second device calculates the first authentication information based on the first intermediate key, the first random number, the related information of the second device, and the first generation parameter by using the fourth calculation method.

The first generation parameter used to calculate the first authentication information by the second device should be the same as the first generation parameter used to calculate the first expected information by the first device. The fourth calculation method used by the second device should also be the same as the fourth calculation method used by the first device. For example, when the first device is a terminal device, the second device can use the following formula to calculate the first authentication information: RES2=f(SK2, PIDt, Nn, Nt, IDu), where RES2 is the first authentication information, i.e., the first RES, SK2 is the first intermediate key in this embodiment, and the meaning of the remaining contents is the same as that of the aforementioned embodiment, and will not be repeated. The above is only an exemplary explanation. In actual processing, various methods for the first device to calculate the first expected information can be used for the second device to calculate the first authentication information, but they are not repeated exhaustively.

In some embodiments, the third message carries second authentication information, and the second authentication information is used to authenticate the second device by the core network side device.

The processing of the first device side may also include the following. The first device sends the fourth message to the core network side device, where the fourth message carries the second authentication information.

The processing of the second device may also include the following. The second device calculates the second authentication information based on the second intermediate key, the authentication parameter, and a second generation parameter by using the first calculation method, where the second generation parameter includes the response information and/or the challenge information, and the second authentication information is used to authenticate the second device by the core network side device.

In this embodiment, the processing of the core network side device may also include the following. The core network side device receives the fourth message from the first device, where the fourth message carries the second authentication information, and the second authentication information is used to authenticate the second device by the core network side device. The method further includes the following. The core network side device authenticates the second device based on the second authentication information and the second expected information. The authentication method of authenticating by the core network side device the second device based on the second authentication information and the second expected information is the same as the above embodiment and is not repeated herein.

The processing of the core network side device may also include at least one of the following. The core network side device calculates the first message authentication code based on the authentication parameter and the first shared key, where the first shared key is shared by the second device and the core network side device. The core network side device calculates the second expected information based on the authentication parameter and the first shared key. The core network side device adopts the first calculation method to calculate the second expected information based on the second intermediate key, the authentication parameter, and the second generation parameter, where the second generation parameter includes the response information and/or the challenge information. The core network side device calculates the first message authentication code based on the second intermediate key, the authentication parameter, and a third generation parameter by using the second calculation method, where the third generation parameter includes the response information and/or the challenge information, the first calculation method and the second calculation method are different, and/or the second generation parameter and the third generation parameter are at least partially different. The core network side device calculates the first message authentication code based on the first intermediate key, the authentication parameter, and the challenge information. The core network side device calculates the second expected information based on the second intermediate key, the related information of the second device, and the first generation parameter, where the first generation parameter includes at least one of: the response information, the challenge information, the identifier of the first device, or the authentication parameter. The core network side device calculates the third expected information based on the first intermediate key, the second intermediate key, the third random number, and a fifth generation parameter, where the fifth generation parameter includes at least one of: the identifier of the first device, the related information of the second device, the response information, the challenge information, or the authentication parameter. The core network side device calculates the third expected information based on a group key, the identifier of the device group where the second device is located, the authentication parameter, the third random number, and the identifier of the first device. The core network side device calculates the fifth message authentication code based on the second intermediate key, the related information of the second device, the authentication parameter, the challenge information, and the identifier of the first device.

In this embodiment, the processing of the core network side may include the following. The core network side device calculates the second expected information based on the second intermediate key, the authentication parameter, and the second generation parameter by using the first calculation method, where the second generation parameter includes the response information and/or the challenge information. The first calculation method may include at least one of: the first authentication function, the second authentication function, the third authentication function, the Hash algorithm, AES, SNOW 3G, ZUC, the third key generation function, the fourth key generation function, the fifth key generation function, SPECK, SIMON, the XOR calculation, or the direct concatenation calculation, etc.

For example, if the authentication parameter includes the second random number and the second generation parameter includes the response information, the second device calculates the second authentication information based on the second intermediate key, the second random number, and the response information by using the first calculation method, for example, expressed by the following formula: RES1=H(SK1, Nn, Rt), where RES1 is the second authentication information, SK1 is the second intermediate key, Nn is the second random number, and Rt is the response information. Further, in the above processing of calculating the second authentication information, the pseudonym of the second device can also be added, for example, expressed by the following formula: RES1=H(SK 1, PIDt, Nn, Rt), where PIDt is the pseudonym of the second device, and the meanings of the remaining contents in the formula are the same as those in the above example, and are not repeated herein. In the above formula, the authentication parameter being the second random number is only for illustrative explanation. In actual processing, the above authentication parameter may include the AK, for example, the following formula can be used to calculate RES1=H(SK1, PIDt, AK, Rt). In the above formula, H() represents the first calculation method, which may be any algorithm or function in the first calculation method, for example, the first authentication function f1.

The specific manner in which the core network side device calculates the second expected information should be the same as the manner in which the second device calculates the second authentication information. For example, the core network side device can use the following formula for calculation: XRES1=H(SK1, PIDt, Nn, Rt), where XRES1 is the second expected information, SK1 is the second intermediate key, and the meaning of the remaining contents in the formula is the same as in the aforementioned embodiment and will not be repeated herein.

In some possible embodiments, the first message also at least carries the first message authentication code, and the second message carries the first message authentication code. The first message authentication code is used to authenticate the core network side device by the second device.

The processing of the core network side device may also include the following. The core network side device calculates the first message authentication code based on the second intermediate key, the authentication parameter, and the third generation parameter by using the second calculation method, where the third generation parameter includes the response information and/or the challenge information, the first calculation method is different from the second calculation method, and/or the second generation parameter is at least partially different from the third generation parameter. Then, the core network device carries the first message authentication code in the first message to send to the first device.

The processing of the second device side also includes the following. The second device calculates the second message authentication code based on the second intermediate key, the authentication parameter, and the third generation parameter by using the second calculation method, where the third generation parameter includes the response information and/or the challenge information. The first calculation method and the second calculation method are different, and/or the second generation parameter and the third generation parameter are at least partially different. The second device authenticates the core network side device based on the first message authentication code and the second message authentication code. The specific processing of authenticating by the second device the core network side device based on the first message authentication code and the second message authentication code is the same as the embodiment and will not be repeated.

The above authentication parameter may include the AK or the second random number.

Optionally, the second generation parameter is at least partially different from the third generation parameter, which has the following meaning. If the second generation parameter includes the response information, the third generation parameter includes the challenge information, or vice versa. Alternatively, the second generation parameter includes the response information and the challenge information, and the third generation parameter only includes the challenge information or the response information, or vice versa.

Optionally, the first calculation method and the second calculation method may include at least one of: the first authentication function, the second authentication function, the third authentication function, the Hash algorithm, AES, SNOW 3G, ZUC, the third key generation function, the fourth key generation function, the fifth key generation function, SPECK, or SIMON, etc. The first calculation method and the second calculation method are different, which has the following meaning. In actual calculation, the first calculation method may be selected from at least one of the above algorithms or functions, and the second calculation method may be selected from other algorithms or functions in the above algorithms or functions except the first calculation method. For example, the first calculation method is specifically the first authentication function, and the second calculation method may be the Hash algorithm, which is only an exemplary description here. Other selection methods may be used in actual processing, which are not exhaustively enumerated herein.

Optionally, the second generation parameter and the third generation parameter are different, and/or the first calculation method and the second calculation method are different. For example, the second generation parameter is the same as the third generation parameter, but the first calculation method is different from the second calculation method. Alternatively, the second generation parameter is different from the third generation parameter, but the first calculation method is the same as the second calculation method. Alternatively, the second generation parameter is different from the third generation parameter, and the first calculation methods is different from the second calculation method.

It should be pointed out that the parameters and algorithms used for the core network side device and the second device to calculate the second expected information and the second authentication information should be the same. The parameters and algorithms used for the core network side device and the second device to calculate the first message authentication code and the second message authentication code should also be the same.

For example, if the authentication parameter includes the second random number, the second generation parameter includes the response information, the third generation parameter, which is different from the second generation parameter, can be the challenge information, and the first calculation method is the same as the second calculation method, then the second device uses the second calculation method to calculate the second message authentication code based on the second intermediate key, the authentication parameter, and the third generation parameter as follows. The second device uses the second calculation method to calculate the second message authentication code based on the second intermediate key, the second random number, and the challenge information, e.g., expressed by the following formula: MAC'=H(SK1, Nn, Ct), where MAC' is the second message authentication code, SK1 is the second intermediate key, Nn is the second random number, and Ct is the challenge information. Further, in the processing of calculating the second message authentication code, the pseudonym of the second device can also be added, for example, expressed by the following formula: MAC'=H(SK1, PIDt, Nn, Ct), where PIDt is the pseudonym of the second device, and the meaning of the remaining contents in the formula is the same as the above example, and will not be repeated. H() in the above formula may be any of the aforementioned algorithms or functions, for example, the first authentication function f1. In this example, the first calculation method and the second calculation method are the same, for example, they may both be the first authentication function.

For another example, if the authentication parameter includes the AK and the second generation parameter includes the response information, the second device may calculate the second authentication information by using the following formula: RES1=H(SK 1', PIDt, AK, Rt). The third generation parameter is different from the second generation parameter and may be the challenge information, and the first calculation method is also different from the second calculation method. Then, the second device may calculate the second message authentication code by using the following formula: MAC'=H'(SK1, PIDt, AK, Ct), where the meaning of the remaining contents in the formula is the same as in the above example and is not described in detail. H'() in the above formula may be any algorithm or function in the aforementioned second calculation method. In this example, the first calculation method and the second calculation method are different. For example, the first calculation method H() may specifically be the first authentication function f1(), and the second calculation method H'() may specifically be the third authentication function f3().

It should be pointed out that the above description is only based on the example of calculating the second message authentication code by the second device. In fact, on the core network side device, the processing of calculating the first message authentication code and the processing of calculating the second message authentication code should be the same. For example, the core network side device also uses MAC=H'(SK1, PIDt, AK, Ct) to calculate the first message authentication code. To distinguish the message authentication codes obtained by different devices, different ways of expressing the message authentication code are adopted in this embodiment. In some other examples, the first message authentication code can also be expressed as MAC1, and the second message authentication code can also be expressed as MAC1'. Herein, various possible ways of expressing the first message authentication code and the second message authentication code are not exhaustively enumerated.

It should also be pointed out that the core network side device may include multiple core network devices (or network elements of the core network). In this case, the relevant description of the device on the core network side device for calculating the first message authentication code and the second expected information and the device for interacting with the first device are the same as those in the aforementioned embodiment and will not be repeated.

In some possible embodiments, key agreement is further performed between the first device and the second device.

The processing of the first device also includes at least one of the following. The first device calculates the integrity protection key based on the first random number and the first intermediate key. The first device calculates the encryption key based on the third random number and the first intermediate key.

The processing of the second device may also include at least one of the following. The second device calculates the integrity protection key based on the first random number and the first intermediate key. The second device calculates the encryption key based on the third random number and the first intermediate key.

The processing of calculating the integrity protection key based on the first random number and the first intermediate key by the first device is the same as that in the above embodiment. The only difference from the above embodiment is that the calculation method and representation of the first intermediate key in this embodiment are different. For example, the first device performs the XOR calculation on the first random number and the first intermediate key to obtain the integrity protection key, which can be expressed as: Ki=SK2 ⊕ Nt, where SK2 is the first intermediate key in this embodiment. The calculation and acquisition method of the first intermediate key in this embodiment have been described in detail in the above embodiment and will not be repeated. The processing of calculating the integrity protection key based on the first random number and the first intermediate key by the second device should be the same as that of the first device and will not be repeated.

The processing of calculating by the first device the encryption key based on the third random number and the first intermediate key is the same as that in the above embodiment, and the difference from the above embodiment is that the calculation method and the expression method of the first intermediate key are different in this embodiment. For example, the first device performs the XOR calculation on the third random number and the first intermediate key to obtain the encryption key, which is expressed as: Kc=SK2 ⊕ Nu. The processing of calculating the encryption key by the second device based on the third random number and the first intermediate key may be the same as that of the first device, and no repeated description is given.

The transmission method of the third random number in this embodiment is also the same as that in the above embodiment, for example, the second message carries the third random number. Alternatively, the method further includes the following. The first device sends the fifth message to the second device, where the fifth message is in response to the third message, and the fifth message carries the third random number. Accordingly, the second device receives the fifth message from the first device, where the fifth message is in response to the third message, and the fifth message carries the third random number. The description of the first device and the second device calculating their respective integrity protection keys, the timing of calculating their respective encryption keys, and the use timing is also the same as that in the above embodiment, and will not be repeated.

In this embodiment, the first device may also send the first intermediate key to the key management device. The specific processing is the same as that in the above embodiment and will not be described in detail.

In this embodiment, the second device sends the sixth message to the first device, the first device sends the seventh message to the core network side device to request authentication, the second device receives the trigger message before sending the sixth message, and the second device updates the pseudonym, which are the same as the above embodiment and will not be repeated.

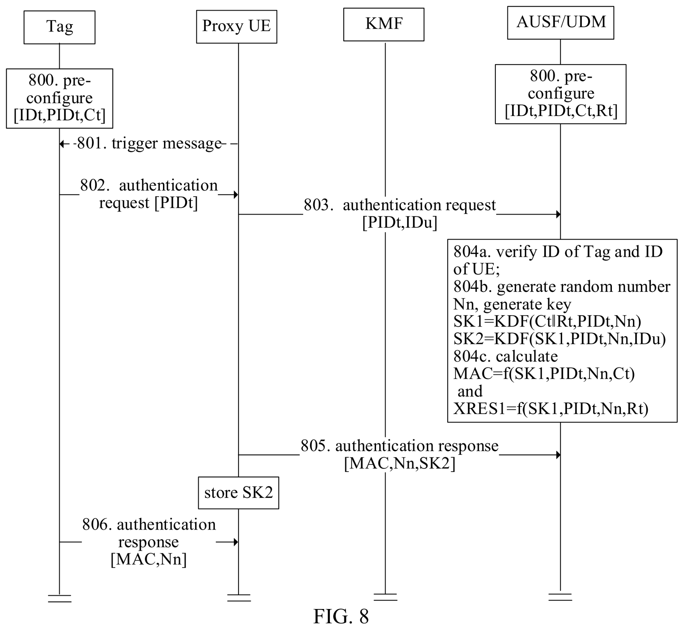

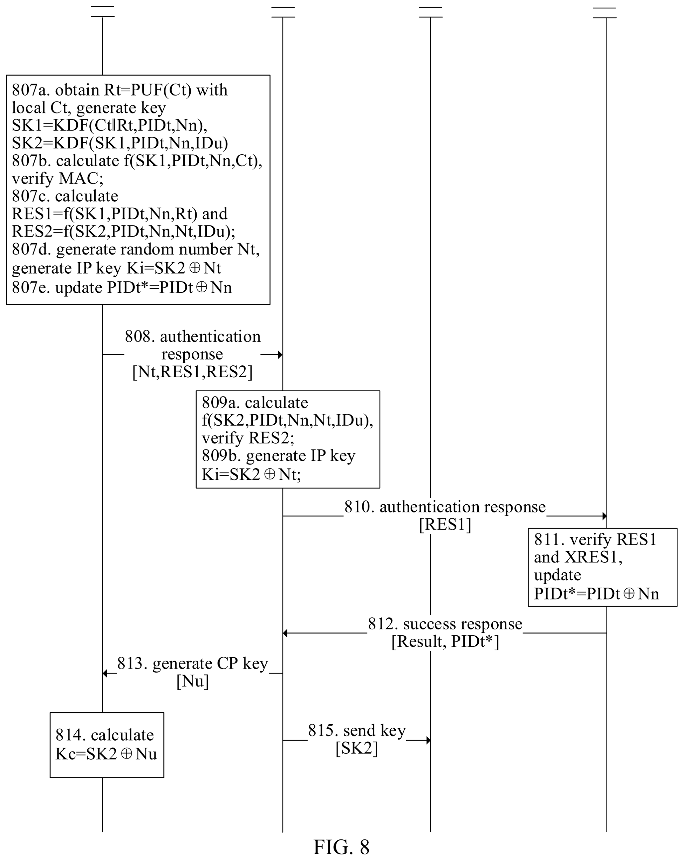

In conjunction with FIG. 8, the authentication method provided in the aforementioned implementation is exemplarily described in an example in which the first device is UE (or referred to as a proxy UE, illustrated as Proxy UE in FIG. 8), the second device is Tag, and the core network side device includes AUSF and UDM.

At 800, under the secure channel, Tag and UDM pre-configure [IDt, PIDt, Ct, Rt]. Herein, Tag and UDM pre-share Ct, that is, the aforementioned pre-shared information includes challenge information. Further, UDM can also associate and store the pre-shared information [Ct] with Rt, IDt, and PIDt of Tag, that is, as illustrated in FIG. 8, UDM pre-stores [IDt, PIDt, Ct, Rt]. Tag can pre-share Ct, and associate and store Ct with IDt and PIDt, that is, as illustrated in FIG. 8, Tag pre-stores [IDt, PIDt, Ct]. It should be understood that this is only an example, and in some other possible examples, the pre-shared information may include Ct, Rt, that is, UDM and Tag both pre-store [IDt, PIDt, Ct, Rt].

At 801, UE (or network) sends a trigger message to activate Tag.

At 802, Tag sends an authentication request message to UE, the authentication request message including pseudonym PIDt of Tag. Herein, the authentication request message is the sixth message in the above embodiment.

At 803, UE, acted as a proxy, sends an authentication request message to the network, the authentication request message including the pseudonym PIDt of Tag and UE ID (IDu). The authentication request message in this step may be the seventh message in the aforementioned embodiment.

At 804, UDM generates a second random number Nn and calculates MAC (i.e., the first message authentication code) and XRES1 (i.e., the second expected information).

Specifically, at 804a, UDM verifies the ID of Tag and ID of UE, for example, based on UE IDu and Tag PIDt, queries the subscription data of UE and Tag, checks whether UE is authorized as the communication agent of A-IoT, and whether Tag is authorized to use the A-IoT communication service. At 804b, if the authorization is successful, UDM generates the second random number Nn, uses PIDt to retrieve the corresponding Ct and Rt to calculate the second intermediate key SK1=KDF(Ct∥Rt, PIDt, Nn), and derives the first intermediate key SK2=KDF(SK1, PIDt, Nn, IDu) based on SK1. At 804c, UDM calculates MAC=f(SK1, PIDt, Nn, Ct) and XRES1=f(SK1, PIDt, Nn, Rt). The KDF function can be the HMAC-SHA256 function or other Hash function defined in 3GPP. The f function can be the f1-f5 function, the AES function, the Hash function, or other lightweight functions (such as SPECK, SIMON algorithm) defined in 3GPP.

At 805, UDM/AUSF sends an authentication response message to UE, where the authentication response message contains [MAC, Nn, SK2]. In this step, AUSF can store XRES1 sent by UDM locally, and AUSF sends Nn (i.e., an example of the authentication parameter of the aforementioned embodiment), MAC (i.e., the first message authentication code), and the first intermediate key SK2 to UE. The above authentication response message is the first message of the aforementioned embodiment.

At 806, UE stores the key SK2 and sends an authentication response message to Tag, where the authentication response message contains [MAC, Nn]. The authentication response message in this step is the second message in the above embodiment.

At 807, Tag calculates MAC' (i.e., the second message authentication code). When MAC and MAC' are the same, authentication of the core network side device is successful, and then RES2 (i.e., the first authentication information) is calculated.

Specifically, at 807a, Tag inputs the locally stored Ct into PUF, obtains the corresponding Rt=PUF(Ct), and calculates the second intermediate key SK1=KDF(Ct∥Rt, PIDt, Nn) and derives the first intermediate key SK2=KDF(SK1, PIDt, Nn, IDu). At 807b, Tag calculates f(SK1, PIDt, Nn, Ct) to verify whether the value is consistent with the received MAC. If not, authentication of the network by Tag fails. If consistent, authentication of the network by Tag succeeds. At 807c, Tag calculates the response RES1=f(SK 1, PIDt, Nn, Rt) for the network (core network side device) to authenticate Tag, and Tag generates the first random number Nt to calculate RES2=f(SK2, PIDt, Nn, Nt, IDu) for UE to authenticate Tag. At 807d, Tag generates the integrity protection key Ki=SK2 ⊕ Nt. At 807e, Tag updates the pseudonym PIDt*=PIDt ⊕ Nn for use in the next round of authentication.

Tag verifies the network by verifying the MAC, but Tag authenticates UE implicitly. That is, Tag provides authentication by successfully using the key generated from authentication and key agreement in the subsequent process. The integrity protection key Ki and the encryption key Kc between Tag and UE are derived from the key SK2, as illustrated in the subsequent key architecture.

At 808, Tag sends an authentication response message to UE, the authentication response message including [Nt, RES1, RES2]. The authentication response message may be the third message in the above embodiment.

At 809, UE verifies RES2 (first authentication information).

Specifically, at 809a, UE uses the stored first intermediate key SK2 to calculate f(SK2, PIDt, Nn, Nt, IDu) to verify whether it is consistent with RES2. If not, authentication of Tag by UE fails; if consistent, authentication of Tag by UE succeeds. At 809b, UE uses the random number Nt to calculate the integrity protection key Ki=SK2 ⊕ Nt.

At 810, UE sends an authentication response message to UDM/AUSF, the authentication response message including RES1. The authentication response message may be the fourth message in the foregoing embodiment.

At 811, UDM/AUSF verifies whether RES1 is consistent with XRES1. If not, authentication of Tag by the network fails. If consistent, authentication of Tag by the network succeeds. UDM updates the pseudonym of Tag: PIDt*=PIDt ⊕ Nn, for use in the next authentication.

At 812, UDM/AUSF returns a success response to UE, where the success response contains the updated pseudonym PIDt*. The success response may be the eighth message in the aforementioned embodiment.

At 813, UE generates a third random number Nu, calculates the encryption key Kc=SK2 ⊕ Nu, and sends the third random number to Tag. The message carrying the third random number herein may be the fifth message in the aforementioned embodiment.

At 814, Tag uses the third random number Nu to calculate the encryption key Kc=SK2 ⊕ Nu and stores Ki and Kc.

At 815, UE sends the key SK2 to KMF for use in mobility management.

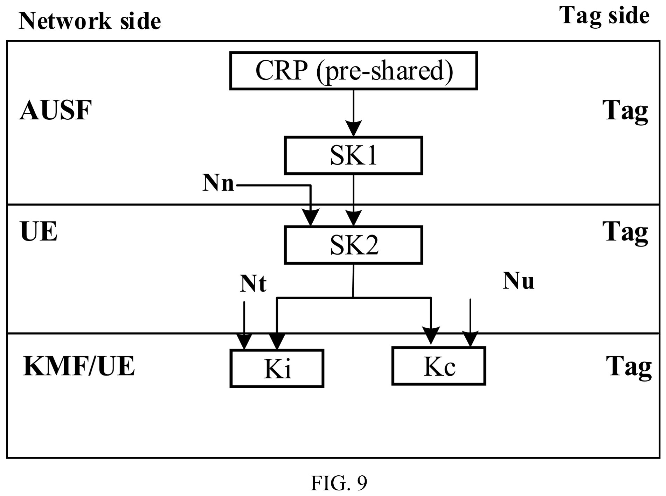

In conjunction with FIG. 9, an exemplary description of the key architecture is given for the scenario provided in FIG. 8. It can be seen in FIG. 9 that: CRP is a preconfigured challenge-response pair between UDM/AUSF on the network side and Tag. AUSF and Tag can derive the second intermediate key SK1 (for example, SK1=KDF(Ct∥Rt, PIDt, Nn)) based on CRP (that is, (Ct, Rt)), that is, SK1 is a key generated based on CRP, that is, SK1=KDF(Ct∥Rt, PIDt, Nn), and the key will not leave UDM/AUSF on the network side. AUSF and Tag can derive the first intermediate key SK2 based on the second random number and SK1, where SK2 is a session key derived from SK1 and used between UE and Tag, and SK2=KDF(SK1, PIDt, Nn, IDu). UE and Tag can derive the integrity protection key Ki based on the first intermediate key SK2 and the first random number Nt (Ki is the integrity protection key for protecting messages transmitted between Tag and UE, Ki=SK2 ⊕ Nt). The encryption key Kc can be derived based on SK2 and the third random number Nu (Kc is the encryption key for protecting messages transmitted between Tag and UE, Kc=SK2 ⊕ Nu). UE will also send SK2 to the KMF for sharing.

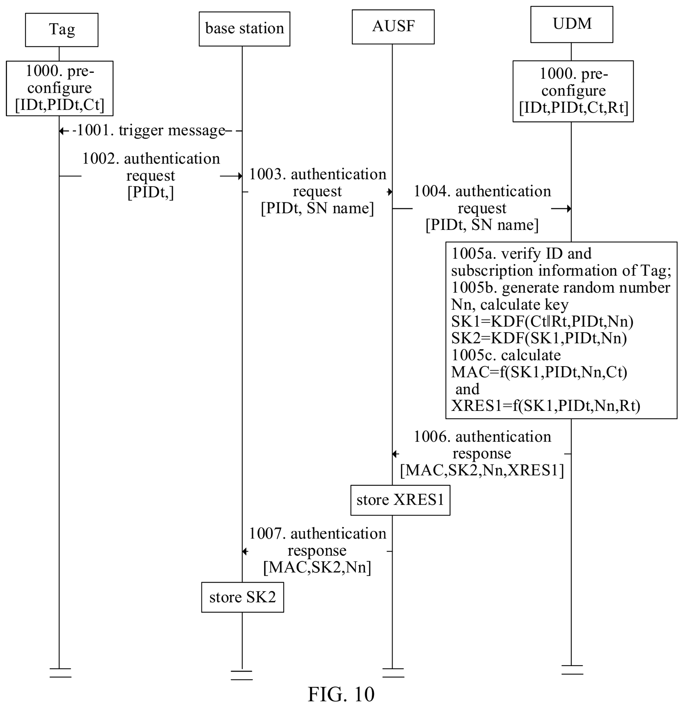

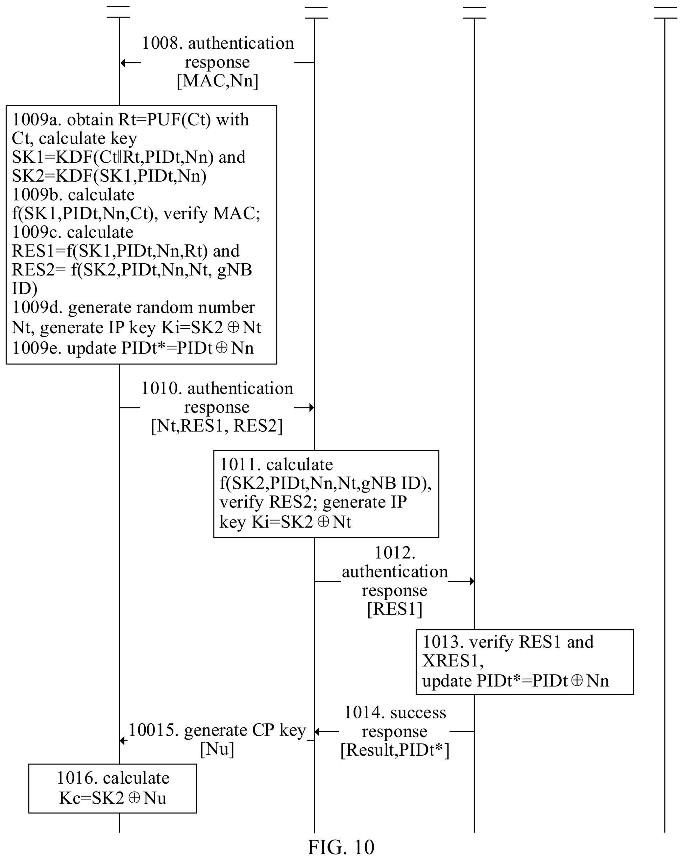

In conjunction with FIG. 10, taking the first device as a base station, the second device as Tag, and the core network side device including AUSF and UDM as an example, the authentication method provided in the aforementioned implementation is exemplarily described.

At 1000, under the secure channel, Tag and UDM pre-configure [IDt, PIDt, Ct, Rt]. Herein, Tag and UDM pre-share Ct, that is, the aforementioned pre-shared information includes challenge information. Further, UDM can also associate and store the pre-shared information [Ct] with Rt, IDt, and PIDt of Tag, that is, as illustrated in FIG. 10, UDM pre-stores [IDt, PIDt, Ct, Rt]. Tag can pre-share Ct, and associate and store Ct with IDt and PIDt, that is, as illustrated in FIG. 10, Tag pre-stores [IDt, PIDt, Ct]. It should be understood that this is only an example, and in some other possible examples, the pre-shared information may include Ct and Rt, that is, UDM and Tag both pre-store [IDt, PIDt, Ct, Rt].

At 1001, the base station sends a trigger message to activate Tag.

At 1002, Tag sends an authentication request message to the base station, where the authentication request message includes the pseudonym PIDt of Tag. Herein, the authentication request message is the sixth message in the aforementioned embodiment.

At 1003, the base station sends an authentication request message to AUSF, where the authentication request message includes PIDt and SN name. The authentication request message in this step may be the seventh message in the aforementioned embodiment.

At 1004, AUSF sends an authentication request message to UDM, where the authentication request message includes PIDt and SN name.

At 1005, UDM generates a second random number Nn, and calculates MAC (i.e., the first message authentication code) and XRES1 (i.e., the second expected information).

Specifically, at 1005a, UDM queries the subscription data of Tag according to Tag PID to check whether Tag is authorized to use the A-IoT communication service. At 1005b, if the authorization is successful, UDM generates the second random number Nn and uses Ct and Rt corresponding to Tag PIDt to calculate the second intermediate key SK1=KDF(Ct∥Rt, PIDt, Nn), and derive the first intermediate key SK2=KDF(SK1, PIDt, Nn) based on SK1. At 1005c, UDM calculates MAC=f(SK1, PIDt, Nn, Ct) and XRES1=f(SK1, PIDt, Nn, Rt).

At 1006, UDM returns an authentication response message to AUSF, where the authentication response message contains [MAC, Nn, SK2, XRES1].

At 1007, AUSF stores XRES1 and returns an authentication response message to the base station, where the authentication response message contains [MAC, SK2, Nn]. The above authentication response message is the first message of the above embodiment.

At 1008, the base station stores SK2 and sends an authentication response message to Tag, where the authentication response message contains [MAC, Nn]. The authentication response message in this step is the second message in the aforementioned embodiment.

Step 1009 is the same as step 807 in the above example.

Specifically, at 1009a, Tag inputs the locally stored Ct into PUF, obtains the corresponding Rt=PUF(Ct), and calculates the second intermediate key SK1=KDF(Ct∥Rt, PIDt, Nn) and derives the first intermediate key SK2=KDF(SK1, PIDt, Nn). At 1009b, Tag calculates f(SK1, PIDt, Nn, Ct) to verify whether the value is consistent with the received MAC. If not, authentication of the network by Tag fails. If consistent, authentication of the network by Tag succeeds. At 1009c, Tag calculates response RES1=f(SK1, PIDt, Nn, Rt) for network (core network side equipment) to authenticate Tag, Tag generates the first random number Nt and calculates RES2=f(SK2, PIDt, Nn, Nt, gNB ID) for authentication of Tag by the base station. At 1009d, Tag generates the integrity protection key Ki=SK2 ⊕ Nt. At 1009e, Tag updates the pseudonym PIDt*=PIDt ⊕ Nn for use in the next round of authentication.

At 1010, Tag returns an authentication response message to the base station, the authentication response message including [Nt, RES1, RES2]. The authentication response message may be the third message in the aforementioned embodiment.

At 1011, the base station verifies RES2 (i.e., first authentication information).

Specifically, the base station uses SK2 to calculate f(SK2, PIDt, Nn, Nt, gNB ID) to verify whether it is consistent with RES2. If inconsistent, authentication of Tag by the base station fails. If not consistent, authentication of Tag by the base station succeeds. The base station uses SK2 and the random number Nt to calculate the integrity protection key Ki=SK2 ⊕ Nt.

At 1012, the base station sends an authentication response message to AUSF, where the authentication response message includes RES1. The authentication response message may be the fourth message in the aforementioned embodiment.

At 1013, AUSF verifies whether RES1 is consistent with XRES1. If not, authentication of Tag by the network fails. If consistent, authentication of Tag by the network succeeds. AUSF updates the pseudonym of Tag: PIDt*=PIDt ⊕ Nn, for the next authentication.

At 1014, AUSF returns a success response to the base station, where the success response contains the updated pseudonym PIDt*. The success response may be the eighth message in the aforementioned embodiment.

At 1015, the base station generates a third random number Nu, calculates the encryption key Kc=SK2 ⊕ Nu between the base station and Tag, and sends the third random number to Tag. The message carrying the third random number here may be the fifth message in the aforementioned embodiment.

In this step, the base station may also send the SK2 key to KMF for mobility management.

At 1016, Tag uses the received third random number Nu to calculate the encryption key Kc=SK2 ⊕ Nu between Tag and UE, and stores Ki and Kc.

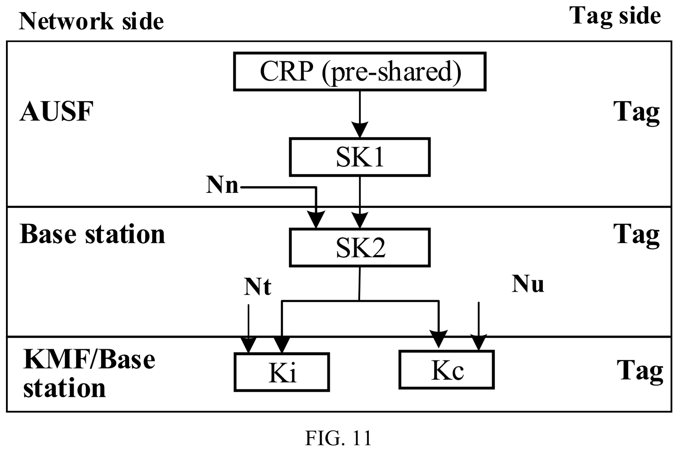

In conjunction with FIG. 11, an exemplary description of the key architecture is given for the scenario provided in FIG. 10. It can be seen from FIG. 11 that: CRP is a preconfigured challenge-response pair between UDM/AUSF on the network side and Tag. AUSF and Tag can derive the second intermediate key SK1 (for example, SK1=KDF(Ct||Rt, PIDt, Nn)) based on CRP (that is, (Ct, Rt)), that is, SK1 is a key generated based on CRP, that is, SK1=KDF(Ct||Rt, PIDt, Nn), and the key will remain on UDM/AUSF on the network side. AUSF and Tag can derive the first intermediate key SK2 based on the second random number and SK1, where SK2 is a session key derived from SK1 and used between the base station and Tag, and SK2=KDF(SK1, PIDt, Nn). The base station and Tag can derive the integrity protection key Ki based on the first intermediate key SK2 and the first random number Nt (Ki is the integrity protection key for protecting messages transmitted between Tag and the base station, Ki=SK2⊕ Nt). The encryption key Kc can be derived based on SK2 and the third random number Nu (Kc is the encryption key for protecting messages transmitted between Tag and the base station, Kc=SK2 ⊕ Nu). The base station will also send SK2 to KMF for sharing.

In some possible implementations, the aforementioned pre-shared information may be shared by the core network side device and the second device. The content included in the pre-shared information is the same as that in the aforementioned embodiment, and will not be described repeatedly.

The first intermediate key on the first device side may be sent by the core network side device to the first device, that is, the first message carries the first intermediate key.

In this embodiment, the core network side device and the second device also need to calculate the second intermediate key and the first intermediate key. For example, the specific processing of calculating, by the second device, the second intermediate key based on the challenge information, the response information, the related information of the second device, and the authentication parameter is the same as the above embodiment. For example, it can be calculated by the following formula: SK1=H(PIDt, Nn, Ct, Rt), where SK1 represents the second intermediate key in this embodiment. The second device calculates the first intermediate key based on the second intermediate key, which is also the same as the above embodiment, for example, expressed as SK2=KDF(SK1, PIDt, Nn), where SK2 represents the first intermediate key in this embodiment. The various possible ways for the core network side device and the second device side to calculate the second intermediate key and the first intermediate key in this embodiment are the same as those in the above embodiment, and no repeated description is given.

The second device calculates the first authentication information based on the first intermediate key, the first random number, the related information of the second device, and the first generation parameter as follows. The second device calculates the second authentication information based on the second intermediate key, the related information of the second device, and the first generation parameter, where the second authentication information is used to authenticate the second device by the core network side device. The second device calculates ciphertext information and a verification parameter based on the first intermediate key, the first random number, and the second authentication information, and uses the ciphertext information and the verification parameter as the first authentication information.

Accordingly, the first authentication information includes the ciphertext information and the verification parameter, and the third message carries the first random number. The first device authenticates the second device based on the first authentication information as follows. The first device authenticates the second device based on the first intermediate key, the first random number, the ciphertext information, and the verification parameter, to obtain the second authentication information. Herein, the first device authenticates the second device based on the first intermediate key, the first random number, the ciphertext information, and the verification parameter, to obtain the second authentication information as follows. The first device decrypts the ciphertext information and the verification parameter based on the first intermediate key and the first random number. When the decryption is successful, the first device determines that the authentication of the second device is successful, and obtains the second authentication information.

The second authentication information may include a second response (RES). The definition of the first generation parameter is the same as that in the above embodiment, and will not be repeated.

Optionally, the second device calculates the second authentication information based on the second intermediate key, the related information of the second device, and the first generation parameter as follows. The second device calculates the second authentication information based on the second intermediate key, the related information of the second device, and the first generation parameter by using an eighth calculation method. The eighth calculation method may include at least one of: the first authentication function, the second authentication function, the third authentication function, the Hash algorithm, AES, SNOW 3G, ZUC, the third key generation function, the fourth key generation function, the fifth key generation function, SPECK, SIMON, the XOR calculation, or the direct concatenation calculation, etc.

In some possible examples, the first generation parameter may include the response information, and the second authentication information may be calculated by using the following formula: RES1=H(SK1, PIDt, Rt), where RES1 is the second authentication information, i.e., the second RES, H() is the eighth calculation method, SK1 is the second intermediate key in this embodiment, PIDt is the pseudonym of the second device, and Rt is the response information. It should be noted that the above H() may be any one or more algorithms or functions in the aforementioned eighth calculation method, which are not exhaustively listed herein. In some possible examples, the first generation parameter includes the response information and the authentication parameter. For example, the authentication parameter includes the second random number, and the second authentication information may be calculated by using the following formula: RES1=H(SK1, PIDt, Nn, Rt), where Nn is the second random number, and the meaning of the rest of the formula is the same as that of the aforementioned embodiment, and is not repeated. In other possible examples, the first generation parameter includes the response information and the challenge information, and the second authentication information is calculated by using the following formula: RES1=H(SK1, PIDt, Rt||Ct). In some possible examples, the first generation parameter includes the response information, the challenge information, and the authentication parameter. For example, the second authentication information is calculated by using the following formula: RES1=H(SK1, PIDt, Nn, Rt, Ct). It should be understood that the above is only an exemplary description. In actual processing, various combinations of the first generation parameter are not exhaustively listed herein, and various possible variations of the second authentication information are not exhaustively listed in this embodiment.

Optionally, the second device calculates the ciphertext information and the verification parameter based on the first intermediate key, the first random number, and the second authentication information as follows. The second device calculates the ciphertext information and the verification parameter based on the first intermediate key, the first random number, and the second authentication information by using a ninth calculation method. The ninth calculation method may be any algorithm that can obtain both the ciphertext and the verification parameter. In a preferred example, the ninth calculation method may be Ascon. For example, the above calculation of the ciphertext information and the verification parameter may be expressed by the following formula: {C, P}=ACESK2{RES1, Nt}, where C represents the ciphertext information, P represents the verification parameter, ACE{} represents the Ascon encryption algorithm or encryption function, SK2 represents the use of the first intermediate key, RES1 is the aforementioned second authentication information, and Nt is the first random number, and the first random number is generated by the second device. Herein, the Ascon-AEAD (authenticated encryption with associated data) algorithm integrates the encryption algorithm and the message authentication code to protect the confidentiality, integrity, and reliability of the data. While ensuring lightweight, the Ascon algorithm uses a more complex initialization and post-processing process, so the attacker cannot recover the key or forge messages even if the attacker obtains the intermediate state information. It is therefore very suitable for resource-constrained zero-power devices.

The first device decrypts the ciphertext information and the verification parameter based on the first intermediate key and the first random number, and the first device determines that the authentication of the second device is successful and obtains the second authentication information when the decryption is successful as follows. The first device uses the ninth calculation method to decrypt the ciphertext information and the verification parameter based on the first intermediate key and the first random number. If the decryption fails, it is determined that the authentication of the second device fails. If the decryption is successful, it is determined that the authentication of the second device is successful, and the second authentication information after decryption is obtained. The ninth calculation method is the same as the above embodiment and is not repeated. Taking the ninth calculation method as Ascon as an example, the above decryption calculation method can be expressed as: ACDSK2 {C, P, Nt}, where ACD{} can represent the Ascon decryption algorithm or decryption function, and the remaining contents is the same as the above embodiment and is not repeated. If the above decryption calculation is successful, the second authentication information can be obtained. For example, the above formula is expressed as: RES1=ACDSK2{C, P, Nt}, where RES1 is the second authentication information obtained after decryption, and the other descriptions of the formula are the same as the above embodiment and are not repeated.

Optionally, the second device calculates the ciphertext information and the verification parameter based on the first intermediate key, the first random number, and the second authentication information as follows. The second device calculates the encryption key based on the first intermediate key and the first random number, and calculates the ciphertext information and the verification parameter based on the encryption key and the second authentication information. Accordingly, the first device authenticates the second device based on the first intermediate key, the first random number, the ciphertext information, and the verification parameter as follows. The first device calculates the encryption key based on the first intermediate key and the first random number, and authenticates the second device based on the encryption key, the ciphertext information, and the verification parameter. Specifically, the second device is authenticated based on the encryption key, the ciphertext information and the verification parameter as follows. The ciphertext information and the verification parameter are decrypted based on the encryption key, and the first device determines that the authentication of the second device is successful when the decryption is successful. Further, if the authentication of the second device is successful, the second authentication information may be obtained.

The first device calculates the encryption key based on the first intermediate key and the first random number as follows. The first device performs the XOR calculation on the first intermediate key and the first random number to obtain the encryption key. For example, it can be expressed by the following formula: Kc=SK2 ⊕ Nt, where Kc is the encryption key, and the meaning of other contents in the formula is the same as that in the above embodiment, and will not be repeated.

The ciphertext information and the verification parameter are calculated based on the encryption key and the second authentication information as follows. The ciphertext information and the verification parameter are calculated based on the encryption key and the second authentication information by using the ninth calculation method. Alternatively, the ciphertext information and the verification parameter are calculated based on the encryption key, the second authentication information, and the first random number by using the ninth calculation method. The description of the ninth calculation method is the same as the embodiment and is not repeated herein. Taking the ninth calculation method as Ascon as an example, the calculation of the ciphertext information and the verification parameter can be expressed by the following formula: {C, P}=ACEKc{RES1}, or {C, P}=ACEKc{RES1, Nt}, where C represents the ciphertext information, P represents the verification parameter, ACE{} represents the Ascon encryption algorithm or encryption function, Kc represents the use of the encryption key, RES 1 is the second authentication information, and Nt is the first random number.

The way in which the first device calculates the encryption key is the same as the way in which the second device calculates the encryption key, and will not be described in detail. The ciphertext information and the verification parameter are decrypted based on the encryption key as follows. The first device uses the ninth calculation method to decrypt the ciphertext information and the verification parameter based on the encryption key. If the decryption fails, it is determined that the authentication of the second device fails. If the decryption is successful, it is determined that the authentication of the second device is successful, and the second authentication information after decryption is obtained. Alternatively, the first device uses the ninth calculation method to decrypt the ciphertext information and the verification parameter based on the encryption key and the first random number. If the decryption fails, it is determined that the authentication of the second device fails. If the decryption is successful, it is determined that the authentication of the second device is successful, and the second authentication information after decryption is obtained. The ninth calculation method is the same as the above embodiment, and will not be described in detail. Taking the ninth calculation method as Ascon as an example, the above decryption calculation method can be expressed as: ACDKc{C, P}, or ACDKc{C, P, Nt}, where ACD{} can represent the Ascon decryption algorithm or decryption function, and the remaining contents is the same as the above embodiment, and will not be repeated. If the above decryption calculation is successful, the second authentication information can be obtained. For example, the above formula is expressed as: RES1=ACDKc{C, P}, or RES1=ACDKc{C, P, Nt}.

In some embodiments, the processing of the first device side may also include the following. The first device sends the fourth message to the core network side device, and the fourth message carries the second authentication information.

The processing of the core network side device may also include the following. The core network side device receives the fourth message from the first device, where the fourth message carries second authentication information, and the second authentication information is used to authenticate the second device by the core network side device. The method further includes the following. The core network side device authenticates the second device based on the second authentication information and the second expected information. The processing of authenticating the second device by the core network side is the same as the above embodiment and is not repeated herein.

In this embodiment, the processing of the core network side may also include the following. The core network side device calculates the second expected information based on the second intermediate key, the related information of the second device, and the first generation parameter. The description of the first generation parameter is the same as the description of the above embodiment and is not repeated. Specifically, the core network side device uses the eighth calculation method to calculate the second expected information based on the second intermediate key, the related information of the second device, and the first generation parameter. Herein, the description of the eighth calculation method is the same as that of the above embodiment and is not repeated.

It should be understood that the way in which the core network side device calculates the second expected information should be the same as the way in which the second device calculates the second authentication information. For example, the first generation parameter may include the response information, and the second authentication information may be calculated by using the following formula: RES1=H(SK1, PIDt, Rt). Accordingly, the second expected information is calculated by using XRES1=H(SK1, PIDt, Rt), where the meaning of each content in the formula is the same as in the aforementioned embodiment, and will not be repeated. Various methods for the second device to generate the second authentication information can be used for the core network side device to generate the second expected information, as long as the same method is adopted, they are within the protection scope of this embodiment, and will not be exhaustively listed herein.

In some possible embodiments, the first message also carries at least the first message authentication code, and the second message carries the first message authentication code. The first message authentication code is used to authenticate the core network side device by the second device.

The processing of the core network side device may also include the following. The core network side device uses the second calculation method to calculate the first message authentication code based on the second intermediate key, the authentication parameter, and the third generation parameter, where the third generation parameter includes the response information and/or the challenge information. Accordingly, the processing of the second device side also includes the following. The second device uses the second calculation method to calculate the second message authentication code based on the second intermediate key, the authentication parameter, and the third generation parameter, where the third generation parameter includes the response information and/or the challenge information.

The above-mentioned processing of calculating the first message authentication code by the core network side device and calculating the second message authentication code by the second device side as well as the processing of verifying the first message authentication code by the second device are the same as those in the above embodiment and will not be repeated herein.

In some possible embodiments, the first device and the second device may further make an agreement on the encryption key.

In one possible example, the encryption key (i.e., Kc) can already be calculated in the processing of calculating the first authentication information by the second device. Accordingly, the encryption key is also calculated in the processing of decrypting the first authentication information by the first device. The specific method is not repeated herein. In another possible example, in the processing of calculating the first authentication information, the second device does not calculate the encryption key. In this case, the second device calculates the encryption key based on the first random number and the first intermediate key. Similarly, the first device calculates the encryption key based on the first random number and the first intermediate key. The specific calculation method of the encryption key is the same as that in the above embodiment and is not repeated. It should be noted that in this example, the timing of generating by the first device the encryption key may be after the decryption is successful, and the timing of generating by the second device the encryption key may be after the first authentication information is generated. This embodiment does not enumerate all possible timing of generating the encryption key and use timing of the encryption key.

In this embodiment, the first device may also send the first intermediate key to the key management device. The specific processing is the same as that in the aforementioned embodiment and will not be described in detail. In this embodiment, the second device sends the sixth message to the first device, the first device sends the seventh message to the core network side device to request authentication, the second device receives the trigger message before sending the sixth message, and the second device updates the pseudonym, which are the same as those in the aforementioned embodiment and will not be described repeatedly.

In conjunction with FIG. 1 and FIG. 2, taking the first device as a proxy UE (UE and Proxy UE have the same meaning hereinafter, and no repeated description is given), the second device as Tag, and the core network side device including AUSF and UDM as an example, the authentication method provided in the above implementation mode is exemplarily described.

Step 1200 to step 1206 are the same as step 800 to step 806 in the above example, and will not be repeated. It should be noted that in this example, UE can also be replaced by a base station.

At 1207, Tag calculates MAC' (i.e., the second message authentication code). When MAC and MAC' are the same, authentication of the core network side device is successful. Then, the ciphertext information and the verification parameter are calculated and used as the first authentication information.

Specifically, at 1207a, Tag inputs the locally stored Ct into PUF, obtains the corresponding Rt=PUF(Ct), and uses the obtained Nn to calculate the second intermediate key SK1=KDF(Ct||Rt, PIDt, Nn) and derive the first intermediate key SK2=KDF(SK1, PIDt, Nn). At 1207b, Tag calculates f(SK1, PIDt, Nn, Ct) and verifies whether the value is consistent with the received MAC. If not, authentication of the network by Tag fails. If consistent, authentication of the network (core network side device) by Tag succeeds. At 1207c, Tag generates the first random number Nt and calculates RES=f(SK1, PIDt, Nn, Rt) for the network (core network side device) to verify Tag. At 1207d, Tag uses the Ascon authentication encryption algorithm to generate a ciphertext, that is, {C, P}=ACE_{SK2}{Nt, RES}, where C is the ciphertext and P is the verification parameter. At 1207e, Tag updates the pseudonym PIDt*=PIDt ⊕ Nn for the next round of authentication. Note: in 1207d, Tag can also derive the encryption key Kc=SK2 ⊕ Nt based on SK2. Tag uses Kc to generate Ascon ciphertext, that is, {C, P}=ACE_{Kc}{Nt, RES}.

At 1208, Tag sends an authentication response message to UE, the authentication response message including [Nt, C, P]. The authentication response message may be the third message in the aforementioned embodiment.

At 1209, UE uses the stored first intermediate key SK2 to decrypt the ciphertext C to verify ID of Tag, that is, RES=ACD_{SK2}{Nt, C, P}, if decrypted successfully, authentication of Tag by UE is successful. Corresponding to the note of step 1207d, Tag uses Nt and SK2 to calculate the encryption key Kc=SK2 ⊕ Nt, and decrypts the ciphertext C to verify ID of Tag, that is, RES=ACDKc{Nt, C, P}, and if decrypted successfully, authentication of Tag by UE is successful.

Step 1210 to step 1212 are the same as step 810 to step 812 in FIG. 8 in the aforementioned example, and description thereof will not be repeated.

At 1213, UE sends the key SK2 to KMF for use in mobility management.

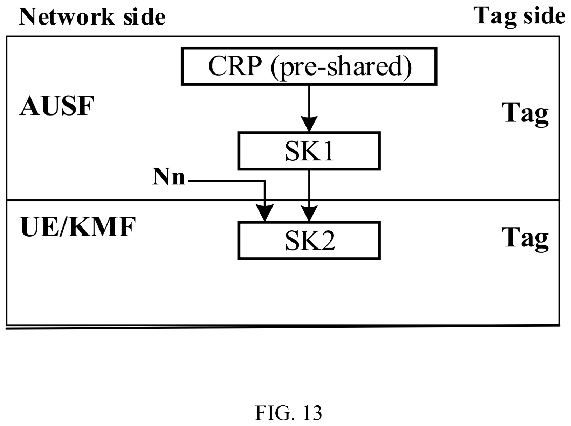

In combination of FIG. 13, the key architecture in this embodiment is described, CRP is a challenge response pair pre-shared between UDM/AUSF and Tag; SK1 is a key generated based on C RP, SK1=KDF(Ct||Rt, PIDt, Nn), and this key will not leave UDM/AUSF on the network side; SK2 is the session key between UE and Tag and derived from SK1, SK2=KDF (SK1, PIDt, Nn), and this key is used for Ascon algorithm to provide encryption and integrity protection of UE and Tag.

In some possible embodiments, the core network side device performs mutual authentication with the first device, and the first device performs mutual authentication with the second device. In this embodiment, the aforementioned pre-shared information may be shared by the core network side device, the first device, and the second device.

The first device calculates the first intermediate key based on the challenge information, the response information, the related information of the second device, and the authentication parameter as follows. The first device calculates the second intermediate key based on the challenge information, the response information, the related information of the second device, and the authentication parameter. The first device calculates the first intermediate key based on the second intermediate key.

The specific manner in which the first device calculates the second intermediate key based on the challenge information, the response information, the related information of the second device, and the authentication parameter, and the various possible processing methods in which the second device calculates the second intermediate key are the same as the aforementioned embodiments, and therefore are not repeated herein.

The second message carries the third random number, and the first device calculates the first intermediate key based on the second intermediate key as follows. The first device calculates the first intermediate key based on the second intermediate key and the third random number. Herein, the first device calculates the first intermediate key based on the second intermediate key and the third random number as follows. The first device performs the XOR calculation on the second intermediate key and the third random number to obtain the first intermediate key, for example, expressed by the following formula: SK2=SK1 ⊕ Nu, where SK2 is the first intermediate key, SK1 is the second intermediate key, ⊕ is the XOR calculation, and Nu is the third random number.

On the second device side, the second message carries the third random number, and the second device calculates the first intermediate key based on the second intermediate key as follows. The second device calculates the first intermediate key based on the second intermediate key and the third random number. The manner in which the second device calculates the first intermediate key is the same as that of the first device, and is not described in detail.

The first device calculates the first expected information based on the first intermediate key, the first random number, the related information of the second device, and the first generation parameter as follows. The first device uses the fourth calculation method to calculate the first expected information based on the first intermediate key, the first random number, the related information of the second device, and the first generation parameter.

Optionally, the method for calculating the first expected information may be the same as that in the aforementioned embodiment and will not be described repeatedly.

Optionally, in this embodiment, since the third random number is carried in the second message, the third random number may also be used to calculate the first expected information. For example, the first device uses the fourth calculation method to calculate the first expected information based on the first intermediate key, the first random number, the related information of the second device, the first generation parameter, and the third random number. For example, the first generation parameter may include the identifier of the first device and the response information, and the first expected information may be calculated by the following formula: XRES2=f(SK2, PIDt, Nu, Nt, Rt, IDu), where XRES2 is the first expected information, i.e., the first XRES, f() is the fourth calculation method, SK2 is the first intermediate key in this embodiment, PIDt is the pseudonym of the second device, Nu is the third random number, Nt is the first random number, Rt is the response information, IDu is the identifier of the first device (for example, the first device is a terminal device), and the above f() may be any algorithm or function in the aforementioned fourth calculation method, which is not exhaustively listed herein. For another example, the first generation parameter may include the identifier of the first device, the response information, and the challenge information, and the first expected information XRES2=f(SK2, PIDt, Nu, Nt, Ct, Rt, IDu) can be calculated by using the following formula, where Ct is the challenge information and the meaning of the remaining contents is the same as in the above embodiment. In addition, Ct and Rt in the above formula may also be subjected to the direct concatenation calculation or the XOR calculation, and this embodiment does not enumerate all possible methods.

The second device may calculate the first authentication information based on the first intermediate key, the first random number, the related information of the second device, and the first generation parameter as follows. The second device calculates the first authentication information based on the first intermediate key, the first random number, the related information of the second device, and the first generation parameter by using the fourth calculation method. The first generation parameter used to calculate the first authentication information by the second device should be the same as the first generation parameter used to calculate the first expected information by the first device. The fourth calculation method used by the second device should also be the same as the fourth calculation method used by the first device. So the processing of generating the first authentication information by the second device is not repeated.

In some embodiments, the second message carries the third message authentication code, and the third message authentication code is used to authenticate the first device by the second device.

In the processing of the first device, the method further includes the following. The first device calculates the third message authentication code based on the first intermediate key, the third random number, the identifier of the first device, and the fourth generation parameter, where the fourth generation parameter includes at least one of: the challenge information, the response information, or the related information of the second device.

In the processing of the second device, the method further includes the following. The second device calculates the fourth message authentication code based on the first intermediate key, the third random number, the identifier of the first device, and the fourth generation parameter, where the fourth generation parameter includes at least one of: the challenge information, the response information, or the related information of the second device. The second device authenticates the first device based on the third message authentication code and the fourth message authentication code. The authentication of the first device by the second device based on the third message authentication code and the fourth message authentication code may include at least one of the following. The second device determines that the authentication of the first device is successful when the third message authentication code and the fourth message authentication code are the same. The second device determines that the authentication of the first device fails when the third message authentication code and the fourth message authentication code are different.

The first device calculates the third message authentication code based on the first intermediate key, the third random number, the identifier of the first device, and the fourth generation parameter as follows. The first device calculates the third message authentication code based on the first intermediate key, the third random number, the identifier of the first device, and the fourth generation parameter by using the second calculation method. The description of the second calculation method is the same as that of the aforementioned embodiment and is not repeated herein.

Optionally, the fourth generation parameter may include the challenge information Ct and the pseudonym PIDt of the second device, and the third message authentication code may be calculated by using the following formula: MAC2=f(SK2, PIDt, Nu, Ct, IDu), where MAC2 is the third message authentication code, SK2 is the first intermediate key, and the meaning of the remaining contents is the same as that of the aforementioned embodiment, and no further description is given. Optionally, the fourth generation parameter may include the challenge information Ct and the response information Rt, and the third message authentication code may be calculated by using the following formula: MAC2=f(SK2, Rt, Nu, Ct, IDu), where MAC2 is the third message authentication code, SK2 is the first intermediate key, and the meaning of the remaining contents is the same as that of the aforementioned embodiment, and no further description is given. In the above formula, Ct and Rt can also be subjected to the XOR calculation or the direct concatenation calculation, and all possible methods are not exhaustively enumerated herein. The above is only an exemplary description. In actual processing, as long as the parameters for calculating the third message authentication code contain at least one of the above fourth generation parameter, it is within the protection scope of this embodiment and is not exhaustively enumerated.

The specific processing method of calculating by the second device the fourth message authentication code based on the first intermediate key, the third random number, the identifier of the first device, and the fourth generation parameter should be the same as the method of calculating by the first device the third message authentication code. For example, the third message authentication code can be calculated by using the following formula: MAC2=f(SK2, PIDt, Nu, Ct, IDu). Accordingly, the fourth message authentication code is calculated by using the formula for calculating the third message authentication code: MAC2'=f(SK2, PIDt, Nu, Ct, IDu), where MAC2' represents the fourth message authentication code, and the rest of the meaning is the same as the aforementioned embodiment. It should be understood that all possible examples of calculating the fourth message authentication code are also the same as those of calculating the third message authentication code, which are not repeated.

In some possible embodiments, the first message carries the fifth message authentication code, and the fifth message authentication code is used to authenticate the core network side device by the first device. The method further includes the following. The first device calculates a sixth message authentication code based on the second intermediate key, the related information of the second device, the authentication parameter, the challenge information, and the identifier of the first device. The first device authenticates the core network side device based on the fifth message authentication code and the sixth message authentication code. The authentication of the core network side device by the first device based on the fifth message authentication code and the sixth message authentication code may include at least one of the following. The first device determines that the authentication of the core network side device is successful when the fifth message authentication code and the sixth message authentication code are the same. The first device determines that the authentication of the core network side device fails when the fifth message authentication code and the sixth message authentication code are different.

Accordingly, the processing of the core network side device may include the following. The fifth message authentication code is calculated based on the second intermediate key, the related information of the second device, the authentication parameter, the challenge information, and the identifier of the first device.

For example, the authentication parameter includes the second random number, and the related information of the second device is the pseudonym of the second device. The first device calculates the sixth message authentication code by using the following formula: MAC1'=f(SK1, PIDt, Nn, Ct, IDu), where MAC1' is the sixth message authentication code, SK1 is the second intermediate key, PIDt is the pseudonym of the second device, Nn is the second random number, Ct is the challenge information, IDu is the identifier of the first device, and f() can be any algorithm and/or function contained in the aforementioned second calculation method. The description of the second calculation method is not repeated herein. The method for the core network side device to calculate the fifth message authentication code should be the same as the method for the first device to calculate the sixth message authentication code, such as using the same formula for calculation: MAC1=f(SK1, PIDt, Nn, Ct, IDu), where MAC1 is the fifth message authentication code, and the meanings of the remaining contents in the formula are the same as those in the aforementioned embodiment and are not repeated. For another example, the parameters used to calculate the sixth message authentication code or the fifth message authentication code, in addition to the parameters exemplified above, may also include the response information, for example, MAC1 or MAC1' may be calculated using f(SK1, PIDt, Nn, Ct, Rt, IDu). It should be understood that the above is only an exemplary description, and the parameters used for the sixth message authentication code or the fifth message authentication code may be deleted in actual processing, for example, the identifier of the first device and/or the related information of the second device may not be used. For example, MAC1 or MAC1' may be calculated using f(SK1, PIDt, Nn, Ct), or f(SK1, Nn, Ct), or f(SK1, Nn, Ct, IDu). Alternatively, in actual processing, the parameter used in the sixth message authentication code or the fifth message authentication code may be replaced, for example, Ct may be replaced by Rt, SK1 may be replaced by SK2, and so on. This embodiment does not enumerate all possible calculation methods that may be used to calculate the sixth message authentication code or the fifth message authentication code.

In some possible embodiments, the method further includes the following. The first device calculates the third authentication information based on the first intermediate key, the second intermediate key, the third random number, and the fifth generation parameter, where the third authentication information is used to authenticate the first device by the core network side device, and the fifth generation parameter includes at least one of: the identifier of the first device, the related information of the second device, the response information, the challenge information, or the authentication parameter. The first device sends the fourth message to the core network side device, where the fourth message carries the third authentication information and the third random number.

Accordingly, the core network side device receives the fourth message from the first device, where the fourth message carries the third authentication information and the third random number, and the third authentication information is used to authenticate the first device by the core network side device. Further, the core network side device authenticates the first device based on the third authentication information and the third expected information. The specific authentication method is the same as the above embodiment and will not be described in detail.

The core network side device may calculate the third expected information as follows. The core network side device calculates the third expected information based on the first intermediate key, the second intermediate key, the third random number, and the fifth generation parameter, where the fifth generation parameter includes at least one of: the identifier of the first device, the related information of the second device, the response information, the challenge information, or the authentication parameter.

Optionally, the fifth generation parameter may include: the related information of the second device, the identifier of the first device, the response information, and the authentication parameter. The third authentication information may be calculated as follows. The first device uses the first calculation method to calculate the third authentication information based on the first intermediate key, the second intermediate key, the related information of the second device, the identifier of the first device, the response information, the authentication parameter, and the third random number. The first calculation method is the same as the above embodiment and is not repeated herein. For example, the authentication parameter includes the second random number, and the following formula may be used to calculate the third authentication information: RES1=f(SK2∥SK1, PIDt, Nu, Nn, Rt, IDu), where RES1 is the third authentication information, "f" is any algorithm or function in the first calculation method, SK2 is the first intermediate key, SK1 is the second intermediate key, "∥" is the direct concatenation calculation in the first calculation method, PIDt is the pseudonym of the second device, Nu is the third random number, Nn is the second random number, Rt is the response information, and IDu is the identifier of the first device. Optionally, the fifth generation parameter may include the identifier of the first device, and the third authentication information may be calculated as follows. The first device uses the first calculation method to calculate the third authentication information based on the first intermediate key, the second intermediate key, the identifier of the first device, and the third random number. For example, the authentication parameter includes the second random number, and the third authentication information may be calculated by using the following formula: RES1=f(SK2∥SK1, Nu, IDu), and the meaning of each content in the formula is the same as that in the above embodiment, and is not repeated herein. In this example, since the response information, the challenge information, the pseudonym of the second device, and the authentication parameter can be used in calculating SK1 and SK2, the above parameters may no longer be used in calculating the third authentication information, which can reduce the amount of calculation. It should be understood that the above is only an exemplary description. In actual processing, as long as at least one parameter in the fifth generation parameter is used to calculate the third authentication information for authentication of the first device by the network, it is within the protection scope of this embodiment, and this embodiment does not exhaustively list all possibilities.

In the core network side device, the method of calculating the third expected information should be the same as the method of calculating the third authentication information by the first device. To represent the information generated by different devices, the third expected information calculated by the core network side device is represented as XRES1 and will not be described in detail.

In this embodiment, after the first device receives the first message, if the core network side device is successfully authenticated based on the fifth message authentication code in the first message, the first device calculates the third authentication information and sends the fourth message to the core network side device. Then, the first device can receive from the core network side device the response to the successful authentication of the first device, and then send the aforementioned second message to the second device, and perform mutual authentication with the second device, for example, the first device sends the third message authentication code to the second device, and receives the second authentication information through the third message. Alternatively, after the first device sends the fourth message, without waiting for the response to the successful authentication of the first device from the core network side device, the first device can send the aforementioned second message to the second device and perform mutual authentication with the second device. Alternatively, after the first device receives the first message, if the core network side device is successfully authenticated based on the fifth message authentication code in the first message, the first device sends the second message to the second device and performs mutual authentication with the second device. After the second device successfully authenticates the first device, the second device calculates the third authentication information and sends the fourth message to the core network side device. It should be understood that this is only an exemplary description of the timing of each device receiving and sending each message. In actual processing, it is not limited to the above possibilities. As long as messages with the above functions are transmitted between the devices, they are within the protection scope of this embodiment.

In this embodiment, key agreement is also performed between the first device and the second device. The specific manner in which the first device and the second device calculate the integrity protection key and the encryption key is the same as in the above embodiment, which will not be described repeatedly.

In this embodiment, the first device may also send the first intermediate key to the key management device. The specific processing is the same as that in the aforementioned embodiment and will not be described in detail. In addition, the second device sends the sixth message to the first device, the first device sends the seventh message to the core network side device to request authentication, the second device receives the trigger message before sending the sixth message, and the second device updates the pseudonym, which are the same as those in the aforementioned embodiment and will not be described repeatedly.

In conjunction with FIGs. 1 to 4, taking the first device as a proxy UE (hereinafter, UE, proxy UE, and Proxy UE have the same meaning and are not repeated), the second device as Tag, and the core network side device including AUSF and UDM as an example, the authentication method provided in the above implementation is exemplarily described.

At 1400, under the secure channel, Tag, UE, and UDM pre-configure [IDt, PIDt, Ct, Rt]. It should be noted that in this example, UE can also be replaced by a base station.

Step 1401 to step 1403 are the same as step 801 to step 803 of FIG. 8 in the aforementioned example, and will not be described repeatedly.

At 1404a, UDM verifies ID of Tag and ID of UE. Specifically, according to UE ID and Tag PID, query the subscription data of UE and Tag, check whether UE is authorized as the communication agent of A-IoT, and whether Tag is authorized to use A-IoT communication services. At 1404b, if the authorization is successful, UDM generates a second random number Nn, and uses the retrieved corresponding Ct and Rt to calculate the second intermediate key SK1=KDF(Ct∥Rt, PIDt, Nn). At 1404c, UDM calculates MAC1=f(SK1, PIDt, Nn, Ct, IDu). MAC1 in this embodiment is the fifth message authentication code mentioned above, which is used for UE to authenticate the core network side device.

At 1405, UDM/AUSF sends an authentication response message to UE, the authentication response message containing [MAC1, Nn]. In this step, AUSF can send [MAC1, Nn] sent by UDM to UE. The above authentication response message is the first message of the above embodiment.

At 1406a, proxy UE generates a third random number Nu, calculates SK1=KDF(Ct∥Rt, PIDt, Nn) based on the shared CRP, and derives the first intermediate key SK2=SK1 ⊕ Nu based on SK1 for subsequent UE and Tag authentication. At 1406b, UE calculates f(SK1, PIDt, Nn, Ct, IDu), verifies whether the value (i.e., the sixth message authentication code) is consistent with the received MAC1, if not, authentication of the network (core network side device) by UE fails, if consistent, authentication of the network (core network side device) by UE succeeds. At 1406c, UE calculates MAC2=f(SK2, PIDt, Nu, Ct, IDu) for Tag and UE authentication, where MAC2 is the third message authentication code in the aforementioned embodiment.

At 1407, UE sends an authentication response message to Tag, the authentication response message including [MAC2, Nu]. The authentication response message in this step is the second message in the above embodiment. The authentication response message may also include Nn (i.e., the second random number in the authentication parameter).

At 1408a, Tag inputs the locally stored Ct into PUF, obtains the corresponding Rt=PUF(Ct), and uses the obtained Nn to calculate the second intermediate key SK1=KDF(Ct∥Rt, PIDt, Nn) and derive the first intermediate key SK2=SK1 ⊕ Nu. At 1408b, Tag calculates f(SK2, PIDt, Nu, Ct, IDu) to verify whether the value (i.e., the fourth message authentication code) is consistent with the received MAC2. If not, authentication of UE by Tag fails. If consistent, authentication of UE by Tag succeeds. At 1408c, Tag calculates the response RES1=f(SK2, PIDt, Nu, Nt, Rt, IDu). The RES1 is the first authentication information, which is used for UE to authenticate Tag. At 1408d, Tag generates the first random number Nt and generates the integrity protection key Ki=SK2 ⊕ Nt. At 1408e, Tag updates the pseudonym PIDt*=PIDt ⊕ Nn for use in the next round of authentication.

Note: since Tag, UE, and the network share CRP and UE has verified the network (MAC1), verification of UE by Tag (MAC2) is optional, that is, step 1408b is optional.

At 1409, Tag returns an authentication response message to UE, the authentication response message including [Nt, RES1]. The authentication response message may be the third message in the aforementioned embodiment.

At 1410, UE calculates f(SK2, PIDt, Nn, Nt, IDu) and verifies whether the value is consistent with RES1. If not, authentication of Tag by UE fails; if consistent, authentication of Tag by UE succeeds. UE calculates the integrity protection key Ki=SK2 ⊕ Nt. UE calculates RES2=f(SK2∥SK1, PIDt, Nu, Nn, Rt, IDu) based on SK1 and SK2 for verification of UE by the network. RES2 is the aforementioned third authentication information.

At 1411, UE sends an authentication response message to UDM/AUSF on the network side, where the authentication response message includes RES1. The authentication response message may be the fourth message in the aforementioned embodiment.

At 1412, UDM/AUSF calculates the key SK2=SK1 ⊕ Nu and f(SK2∥SK1, PIDt, Nu, Nn, Rt, IDu), verifies whether RES1 is consistent with XRES1 (i.e., the third expected information), if not, authentication of UE by the network fails, and if consistent, authentication of UE by the network succeeds. UDM updates the pseudonym of Tag: PIDt*=PIDt ⊕ Nn, for use in the next authentication.

At 1413, UDM/AUSF returns a success response to UE, and the success response contains the updated pseudonym PIDt*. The success response may be the eighth message in the aforementioned embodiment.

At 1414, UE generates a third random number Nu, calculates the encryption key Kc=SK2 ⊕ Nu, and sends the third random number to Tag. The message carrying the third random number here may be the fifth message in the aforementioned embodiment.

At 1415, Tag uses the received third random number Nu to calculate the encryption key Kc=SK2 ⊕ Nu of Tag and UE, and stores Ki and Kc.

At 1416, UE sends the SK2 key to the key management function KMF.

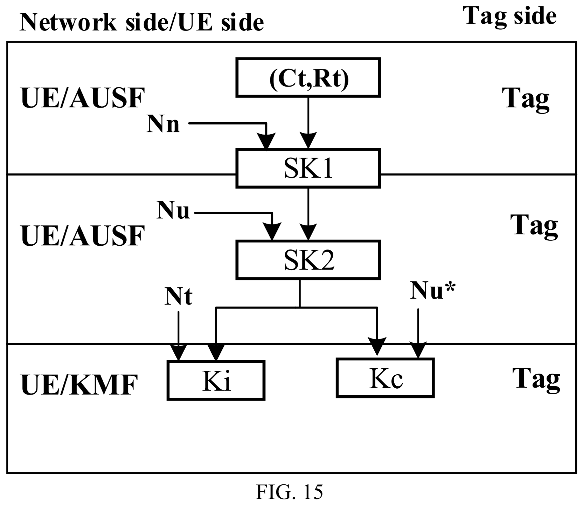

The key architecture in this embodiment is explained in conjunction with FIG. 15. CRP is a challenge-response pair pre-shared by the network AUSF, UE, and Tag; SK1 is a key generated based on CRP, SK1=KDF(Ct∥Rt, PIDt, Nn), and this key exists on all of the network side, UE, and Tag; SK2 is a session key derived based on SK1, SK2=SK1 ⊕ Nu, and this key exists on all of the network side, UE, and Tag; Kc is the encryption key (Kc=SK2 ⊕ Nu) for protecting messages transmitted between Tag and UE, and Ki is the integrity protection key (Ki=SK2 ⊕ Nt) for protecting messages transmitted between Tag and UE, both of which are derived from SK2.

In some possible embodiments, the first device can manage multiple electronic devices, that is, the core network side device and the first device can complete mutual authentication with each of the multiple electronic devices. In this embodiment, the second device can be any one of the multiple electronic devices, and any one of the multiple electronic devices can be any one of an AIoT device and a zero-power device. The description of the zero-power device is the same as the above embodiment and will not be repeated. In this embodiment, the multiple electronic devices form a device group.

In this embodiment, the aforementioned pre-shared information may be shared by the core network side device, the first device, and the second device. The content that the pre-shared information may include is the same as that in the aforementioned embodiment, and is not repeated. In addition, since this embodiment corresponds to the multiple electronic devices, the pre-shared information of each electronic device is shared by the multiple electronic devices, the core network side device, and the first device.

Optionally, the second message carries a group key, and the group key is a key corresponding to the device group to which the second device belongs. The method further includes the following. The first device sends a key request message to the key management device, where the key request message carries an identifier of the device group to which the second device belongs. The first device receives a key response message from the key management device, where the key response message is in response to the key request message, and the key response message carries the group key. The description of the key management device is the same as that in the above embodiment, and is not repeated herein.

Optionally, the second message carries a group-key generation parameter.

In the processing of the first device, the method further includes the following. The first device calculates the first intermediate key based on the pre-shared information, the related information of the second device, and the authentication parameter. The first device generates the third random number. The first device calculates the group key based on the third random number, the identifier of the device group to which the second device belongs, and the identifier of the first device. The first device calculates the group-key generation parameter based on the first intermediate key and the third random number.

In the processing of the second device, the method further includes the following. The second device calculates the first intermediate key based on the pre-shared information, the related information of the second device, and the authentication parameter. The second device calculates the third random number based on the group-key generation parameter and the first intermediate key, and calculates the group key based on the third random number, the identifier of the device group to which the second device belongs, and the identifier of the first device.

In this example, the first intermediate key may be the first intermediate key corresponding to the second device. That is, the second device is any one of the multiple electronic devices, and the first device may calculate the first intermediate key corresponding to each electronic device. For the sake of convenience, the second device is still used as an example for explanation.

The first device calculates the first intermediate key based on the pre-shared information, the related information of the second device, and the authentication parameter. Specifically, the first device calculates the first intermediate key based on the pre-shared information, the related information of the second device, and the authentication parameter by using the third calculation method. For example, the second device is the i-th device among the multiple electronic devices, the authentication parameter includes the second random number, and the pre-shared information includes the challenge information and the response information. Then, the following formula can be used to calculate the first intermediate key corresponding to the second device: SKi=KDF(Ci∥Ri, PIDi, Nn), where Ski is the first intermediate key corresponding to the second device, KDF is one of the third calculation methods, Ci is the challenge information of the second device, Ri is the response information of the second device, PIDi is the pseudonym of the second device, and Nn is the second random number.

The first device calculates the group key based on the third random number, the identifier of the device group to which the second device belongs, and the identifier of the first device as follows. The first device calculates the group key based on the third random number, the identifier of the device group to which the second device belongs, and the identifier of the first device by using the third calculation method. For example, it can be expressed by the following formula: GK=KDF(Nu, GID, IDu), where GK is the group key, KDF is one of the third calculation methods, Nu is the third random number, GID is the identifier of the device group, and IDu is the identifier of the first device.

The first device calculates the group-key generation parameter based on the first intermediate key and the third random number as follows. The first device performs the XOR calculation based on the first intermediate key and the third random number to obtain the group-key generation parameter. For example, it can be expressed as: XORi=SKi ⊕ Nu, where XORi is the group-key generation parameter corresponding to the second device, SKi is the first intermediate key corresponding to the second device, and Nu is the third random number.

The specific manner in which the second device calculates the first intermediate key based on the pre-shared information, the related information of the second device, and the authentication parameter should be the same as the manner in which the first device calculates the first intermediate key, which is not elaborated herein.

The second device calculates the third random number based on the group-key generation parameter and the first intermediate key as follows. The second device performs the XOR calculation on the group-key generation parameter and the first intermediate key to obtain the third random number. For example, it can be expressed as: Nu=XORi ⊕ Ski, and the meaning of each parameter in the formula is the same as in the above embodiment, and will not be repeated.

The method for calculating the group key by the second device based on the third random number, the identifier of the device group to which the second device belongs, and the identifier of the first device is the same as the method for calculating the group key by the first device, and no repeated explanation is given.

The first device calculates the first expected information as follows. The first device calculates the first expected information based on the pre-shared information, the group key, the authentication parameter, the related information of the second device, and the identifier of the first device. It should be noted that since the first device can act as an agent for the multiple electronic devices, the calculation of the first expected information in this embodiment may specifically refer to the calculation of the first expected information corresponding to the second device. The first device may determine that the authentication of the second device is successful when the first expected information corresponding to the second device and the first authentication information corresponding to the second device are the same.

The second device calculates the first authentication information based on the authentication parameter and the pre-shared information as follows. The second device calculates the first authentication information based on the pre-shared information, the group key, the authentication parameter, the related information of the second device, and the identifier of the first device.

Optionally, the pre-shared information corresponding to the second device may include the response information and the challenge information, and the first device may adopt the fourth calculation method to calculate the first expected information based on the authentication parameter, the response information, the group key, the related information of the second device, and the identifier of the first device. The fourth calculation method is the same as the description of the aforementioned embodiment. For example, the authentication parameter may include the second random number, and the above calculation of the first expected information may be expressed as: XRES1i=f(GK, PIDi, Nn, Ri, IDu), where "f" is any one of the fourth calculation methods, GK is the group key, PIDi is the pseudonym of the second device, Nn is the second random number, Ri is the response information of the second device, and IDu is the identifier of the first device.

Alternatively, the first device may calculate the first expected information based on the authentication parameter, the response information, the challenge information, the group key, the related information of the second device, and the identifier of the first device by using the fourth calculation method. For example, it may be expressed as: XRES1i=f(GK, PIDi, Nn, Ci, Ri, IDu), where Ci is the challenge information of the second device, and the remaining contents is the same as that in the foregoing embodiment and will not be elaborated on.

Optionally, the pre-shared information corresponding to the second device may include the challenge information, and the first device may search for the response information of the second device configured by itself based on the challenge information of the second device, and then calculate the first expected information based on the authentication parameter, the response information, the group key, the related information of the second device, and the identifier of the first device by using the fourth calculation method. The above calculation of the first expected information can be expressed as: XRES1i=f(GK, PIDi, Nn,Ri, IDu), and each content in the formula is the same as that in the aforementioned embodiment and will not be described in detail.

Alternatively, the first device can search for the response information of the second device configured by itself based on the challenge information of the second device, and the first device can use the fourth calculation method to calculate the first expected information based on the authentication parameter, the response information, the challenge information, the group key, the related information of the second device, and the identifier of the first device.

The specific processing method for the second device to calculate the first authentication information should be the same as that for the first device to calculate the first expected information. The difference is that the second device represents the first authentication information as RES1i, which is not repeated herein.

In some possible embodiments, the second message carries the first message authentication code.

In the processing of the second device, the method further includes the following. The second device calculates the second message authentication code based on the first intermediate key, the authentication parameter, and the challenge information. The second device determines that the authentication of the core network side device is successful when the second message authentication code is the same as the first message authentication code.

The processing of the core network side device may include the following. The core network side device calculates the first message authentication code based on the first intermediate key, the authentication parameter, and the challenge information.

Specifically, the second device calculates the second message authentication code based on the first intermediate key, the authentication parameter, and the challenge information as follows. The second device calculates the second message authentication code based on the first intermediate key, the authentication parameter, and the challenge information by using the second calculation method. Further, in the processing of calculating the second message authentication code, the related information of the second device can also be added, such as the pseudonym of the second device. The processing of calculating the second message authentication code can be expressed as: MACi'=f(SKi, PIDi, Nn, Ci), where MACi' is the second message authentication code, "f" is any one of the second calculation methods, Ski is the first intermediate key, PIDi is the pseudonym of the second device, Nn is the second random number (i.e., the authentication parameter), and Ci is the challenge information of the second device. The processing of calculating the first message authentication code (for example, denoted as MACi, i.e., the first message authentication code of the second device) by the core network side device should be the same as the processing of calculating the second message authentication code by the second device, which will not be repeated.

In some possible embodiments, the core network side device also authenticates the first device.

In the processing of the first device, the method further includes the following. The first device calculates the third authentication information based on the group key, the identifier of the device group to which the second device belongs, the authentication parameter, the third random number, and the identifier of the first device, where the third authentication information is used to authenticate the first device by the core network side device. The first device sends the fourth message to the core network side device, where the fourth message carries the third authentication information and the third random number.

Accordingly, in the processing of the core network side device, the core network side device receives the fourth message from the first device, the fourth message carries at least one of: the third authentication information or the third random number, and the third authentication information is used to authenticate the first device by the core network side device. The core network side device determines that the authentication of the first device is successful when the third authentication information is the same as the third expected information.

The core network side device calculates the third expected information as follows. The core network side device calculates the third expected information based on the group key, the identifier of the device group to which the second device belongs, the authentication parameter, the third random number, and the identifier of the first device. Herein, the core network side device can obtain the group key. For example, if the first device obtains the group key from the key management device, the key management device can simultaneously store the group key and the identifier of the device group in the core network side device. If the first device generates the group key, the group key can be carried in the fourth message.

The first device calculates the third authentication information based on the group key, the identifier of the device group to which the second device belongs, the authentication parameter, the third random number, and the identifier of the first device as follows. The first device calculates the third authentication information based on the group key, the identifier of the device group to which the second device belongs, the authentication parameter, the third random number, and the identifier of the first device by using the first calculation method. For example, it can be expressed as: RES2=f(GK, GID, Nu, Nn, IDu), where RES2 is the third authentication information, "f is any one of the first calculation methods, GK is the group key, GID is the identifier of the device group, Nu is the third random number, Nn is the second random number included in the authentication parameter, and IDu is the identifier of the first device. It should be understood that this is only an exemplary description. In some possible examples, the RES2 may also include related information of each electronic device. For example, the calculation of the above RES2 may also include the result of the direct concatenation calculation or the XOR calculation on the challenge information of each electronic device, and/or the calculation of the above RES2 may also include the result of the direct concatenation calculation or the XOR calculation on the response information of each electronic device, etc. All possible parameters that may be used are not enumerated herein.

The way in which the core network side device calculates the third expected information should be the same as the way in which the first device calculates the third authentication information, for example, XRES2=f(GK, GID, Nu, Nn, IDu), where XRES2 is the third expected information, and the meaning of other contents in the formula is the same as the above example and will not be repeated.

In this embodiment, the second device sends the sixth message to the first device, the first device sends the seventh message to the core network side device to request authentication, the second device receives the trigger message before sending the sixth message, and the second device updates the pseudonym, which are the same as the above embodiments and will not be repeated.

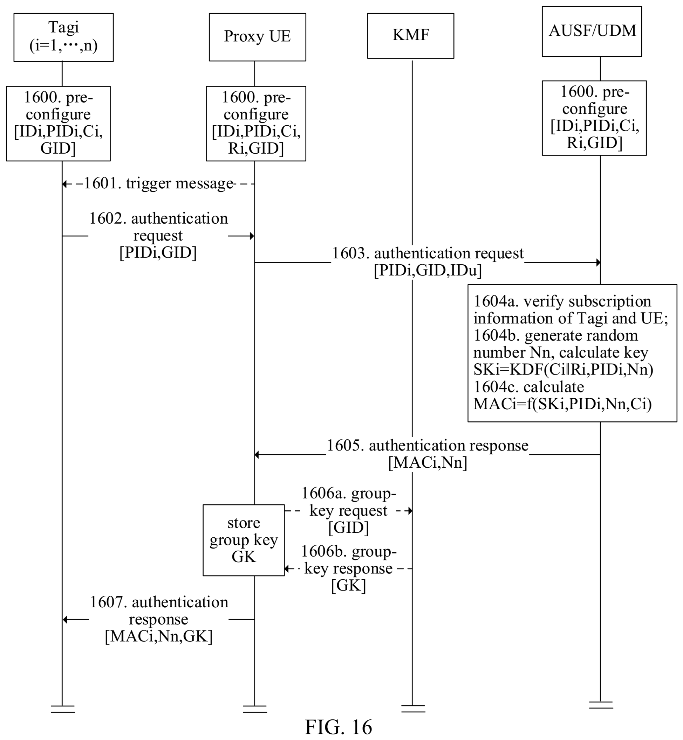

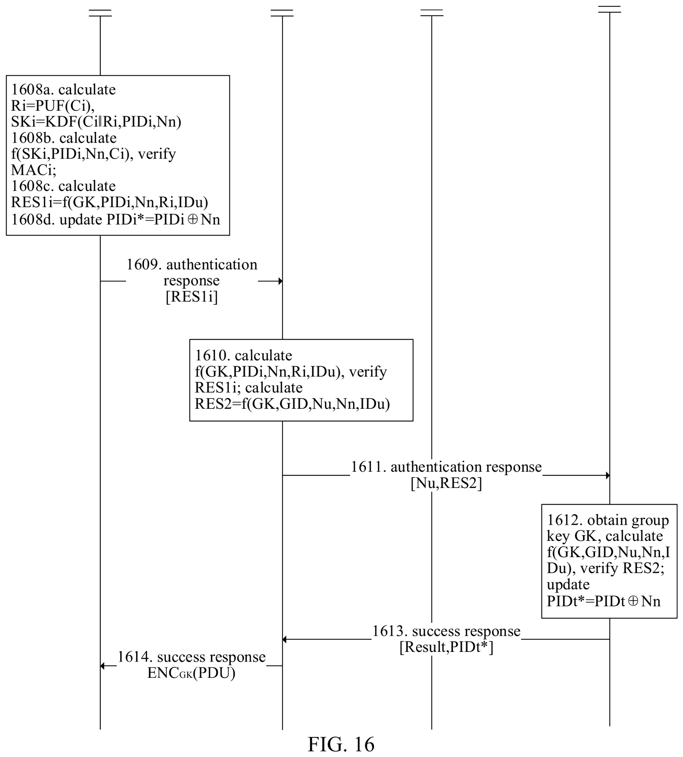

In conjunction with FIG. 16, taking the first device as a proxy UE (hereinafter, UE, proxy UE, and Proxy UE have the same meaning and are not repeated), the second device as Tagi (that is, Tag is the i-th electronic device among 1~n electronic devices as an example, n is an integer greater than or equal to 2, i=1,..., n, that is, i is an integer greater than or equal to 1 and less than or equal to n), and the core network side device including AUSF and UDM as an example, the authentication method provided in the above implementation is exemplarily described.

At 1600, under the secure channel, Tagi, UE and, UDM pre-configure [IDi, PIDi, Ci, Ri]. In this example, UE can also be a base station.

Step 1601 is the same as step 801 illustrated in FIG. 8, and will not be described again.

At 1602, Tagi sends an authentication request message to UE, where the authentication request message includes pseudonym PIDi of Tag and group GID. Herein, the authentication request message is the sixth message in the aforementioned embodiment.

At 1603, UE acts as a proxy to send an authentication request message to the network, where the authentication request message includes PIDi, GID and UE ID (IDu). The authentication request message in this step may be the seventh message in the aforementioned embodiment.

At 1604a, according to UE ID and Tagi PIDi, UDM queries the subscription data of UE and Tagi, checks whether UE is authorized as the communication agent of A-IoT, and whether Tagi is authorized to use A-IoT communication services. At 1604b, if the authorization is successful, UDM generates a random number Nn, and uses the retrieved corresponding Ci and Ri to calculate the key SKi=KDF(Ci∥Ri, PIDi, Nn). At 1604c, UDM calculates MACi=f(SKi, PIDi, Nn, Ci), where MACi is the first message authentication code corresponding to Tagi.

At 1605, UDM/AUSF sends an authentication response message to UE, where the authentication response message contains [MACi, Nn]. The authentication response message in this step is the second message in the aforementioned embodiment.

At 1606a, UE sends a group-key request message to KMF, where the group-key request message at least includes GID. At 1606b, KMF returns the group key GK to UE.

At 1607, UE stores the group key and sends an authentication response message to Tagi, where the authentication response message includes [MACi, Nn, GK].

At 1608a, Tagi inputs the locally stored Ci into PUF, obtains the corresponding Ri=PUF(Ci), and calculates the first intermediate key SKi=KDF(Ci∥Ri, PIDi, Nn). At 1608b, Tagi calculates f(SKi, PIDi, Nn, Ci) to verify whether the value (i.e., the second message authentication code) is consistent with the received MACi. If not, Tagi fails to authenticate the network. If consistent, Tagi succeeds in authenticating the network. At 1608c, Tagi calculates the response RES1i=f(GK, PIDi, Nn, Ri, IDu) for UE to authenticate Tagi. The RES1i is the first authentication information of Tagi. At 1608d, Tagi updates the pseudonym PIDt*=PIDt ⊕ Nn for use in the next round of authentication.

At 1609, Tagi returns an authentication response message to UE, the authentication response message including [RES1i]. The authentication response message may be the third message in the aforementioned embodiment.

At 1610, UE calculates f(GK, PIDi, Nn, Ri, IDu) and verifies whether the value (i.e., the first expected information) is consistent with RES1i. If not, UE fails to authenticate Tagi. If consistent, UE succeeds in authenticating Tagi. UE generates a random number Nu and calculates RES2=f(GK, GID, Nu, Nn, IDu) based on GK for the network to perform verification, where RES2 is the third authentication information mentioned above.

At 1611, UE sends an authentication response message to UDM/AUSF on the network side, where the authentication response message includes RES2, Nu. The authentication response message may be the fourth message in the aforementioned embodiment.

At 1612, UDM/AUSF obtains the group key GK, calculates f(GK, GID, Nu, Nn, IDu), verifies whether the value (i.e., the third expected information) is consistent with the received RES2, if not, authentication of UE by the network fails, if consistent, authentication of UE by the network succeeds. UDM updates The pseudonym of Tag: PIDt*=PIDt ⊕ Nn, for use in the next authentication.

At 1613, UDM/AUSF returns a success response to UE, where the success response contains the updated pseudonym PIDt*.

At 1614, UE returns a success response to Tagi, and UE can forward the received data to all Tagi, and each Tagi can decrypt the corresponding downlink data according to the corresponding group key.

Optionally, in the processing of step 1606a to step 1606b, in addition to the generation of the group key GK at KMF, step 1606a to step 1606b can also be replaced by: generating the group key at the UE end, and after the authentication is completed, sending, by UE, GK to KMF. The specific process is as follows. At 1606, UE generates a random number Nu, calculates SKi=KDF(Ci∥Ri, PIDi, Nn) based on the shared CRP, and generates a group key GK=KDF(Nu, GID, IDu) for group Tag to perform authentication. UE calculates XORi=SKi ⊕ Nu, to hide the random number Nu. At 1607, UE sends [MACi, Nn, XORi]. In step 1608a, Tagi also needs to calculate the random number Nu=XORi ⊕ Ski and the group key GK=KDF(Nu, GID, IDu). Additionally, at 1615, UE sends GK to KMF.

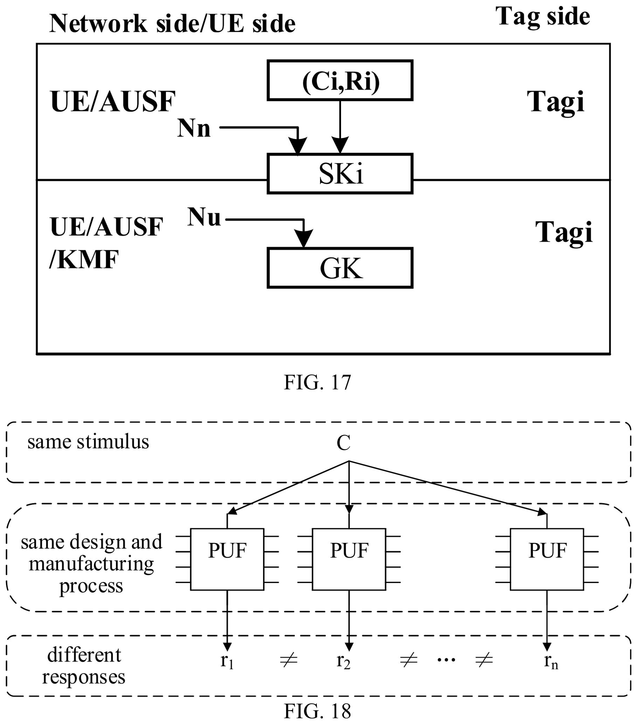

The key architecture of the above example is explained in conjunction with FIG. 17. CRP is a challenge-response pair pre-shared by the network AUSF, UE, and Tagi. SKi is the key generated based on CRP, SKi=KDF(Ci∥Ri, PIDi, Nn), and this key exists on all of the network side, UE, and Tagi. GK is the UE group key, GK=KDF(Nu, GID, IDu), and this key exists on all of the network side, UE, and Tag.

Finally, in combination with relevant technologies, the advantageous effects of the authentication method provided by this embodiment are described.

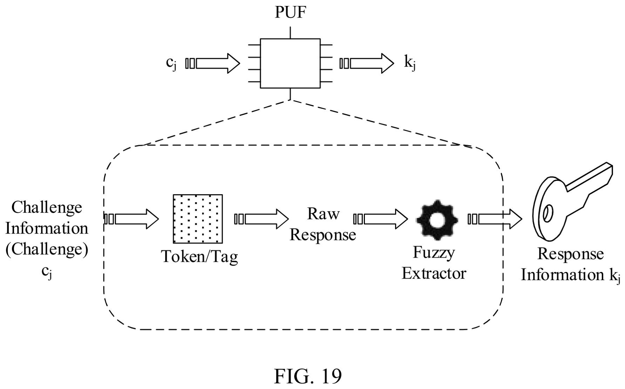

Firstly, PUF is explained. PUF is a hardware security technology that uses inherent device variations to produce a unclonable unique device response to a given input. Due to nano-scale manufacturing differences in the integrated circuit manufacturing process, even chips generated on the same wafer based on the same mask have different physical differences and intrinsic characteristics. This difference may come from a variety of factors such as random dopant fluctuations (RDF) and nano-scale line width differences. PUF circuits are sensitive to the above manufacturing differences and can extract this unique manufacturing difference in the form of challenge response pairs (CRP). That is, by inputting a specific challenge, PUF can be mapped to an unpredictable, unique, random, and unclonable response, thereby applying intrinsic characteristics to scenarios such as key storage and security authentication. As illustrated in FIG. 18, the same stimulus (i.e., challenge information) input into different PUFs with the same design and manufacturing process will result in different responses (i.e., response information). For example, in FIG. 18, the response information r1 obtained from the first PUF, the response information r2 obtained from the second PUF, and the response information rn obtained from the n-th PUF are all different from each other. The key extraction of PUF can be illustrated in FIG. 19. Any challenge information cj is input into PUF to obtain response information kj. In PUF, cj is first input into PUF to extract token to obtain the raw response, and then the raw response is input into the fuzzy extractor to finally obtain the response information Kj, where the response information can be binary. Compared with the traditional security mechanism, PUF has the following security features. Even the designer and manufacturer cannot predict and control the nano-level manufacturing differences, so the intrinsic characteristics of PUF are difficult to predict and control. Even invasive attacks cannot extract the nano-level manufacturing differences of the chip, so PUF can resist physical attacks including reverse engineering and has the characteristics of being difficult to clone. The key storage and security authentication mechanism based on PUF does not require the key burning process in the supply chain, and the key is extracted from the manufacturing differences of the integrated circuit, which can ensure the security of the supply chain. Compared with the relevant storage mechanism, PUF can be extracted from the general digital circuit, which is lower in cost. In the traditional NVM-based security mechanism, the key is permanently stored in the NVM, and the attacker can easily obtain the key through physical attacks. The key based on PUF is only generated in use, and has a smaller security window. Ideally, PUF has the characteristics of easy calculation, repeatability, unclonability, unpredictability, and unidirectionality. Therefore, PUF has important application prospects in the security authentication and key storage of lightweight IoT devices. In a preferred example, the second device in this embodiment can also use SRAM as a memory. SRAM is usually used as a cache, buffer, and register, etc., and are mostly integrated into the chip of the MCU. The state of SRAM at power-on has a random fingerprint characteristic, which can be extracted through a standard SRAM interface and used in a security system. Therefore, the PUF based on SRAM, as an inherent PUF, can be a better solution for the security requirements of key generation, security authentication, random number generation, chip counterfeiting, recycling detection, etc. of A-IoT devices, and then PUF is adopted to pre-configure Ct and Rt in this embodiment, which can ensure the security of processing.

Again, the authentication processing and key architecture of related technologies are explained.

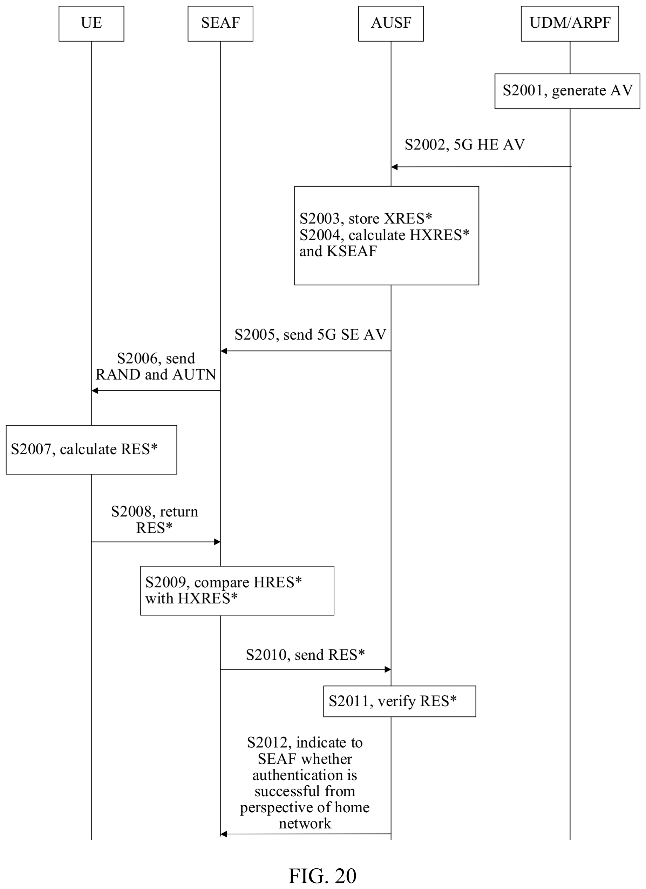

For security requirements and mechanisms of 5G systems, the main purpose of the 5G authentication and key agreement (AKA) procedure is to achieve mutual authentication between UE and the network side, and to provide keys that can be used between UE and the service network in subsequent security processes. The enhanced capabilities of 5G AKA include the visited network providing a proof of successful authentication of UE to the home network, and the proof is sent in the authentication confirmation message chosen by the visited network. The specific process of the authentication procedure for 5G AKA, as illustrated in FIG. 20, may include the following. At S2001, for the received authentication request, UDM/ARPF generates an authentication vector (AV). That is, UDM/ARPF creates a 5G HE AV (home environment authentication vector), in which the authentication management field (AMF) separation bit is set to "1". Then, UDM/ARPF should derive key authentication server function (KAUSF) and calculate XRES* (Expected Response). Finally, UDM/ARPF shall create 5G HE AV from RAND (random number), AUTN (authentication token), XRES*, and KAUSF. At S2002, UDM shall return the 5G HE AV to AUSF. At S2003, AUSF shall store XRES*, in other words, temporarily store XRES* together with the received SUCI or SUPI. At S2004, AUSF shall generate 5G AV based on the 5G HE AV received from UDM/ARPF, calculate HXRES* from XRES* and KSEAF from KAUSF, replace XRES* in the 5G HE AV with HXRES*, and replace KAUSF with KSEAF. At S2005, AUSF removes KSEAF and returns the 5G SE AV to SEAF. S1106, SEAF sends RAND and AUTN to UE. At S2007, USIM calculates the response RES. USIM shall return RES, CK, and IK to ME. ME shall then calculate RES* from RES. At S2008, UE returns RES* to SEAF. At S2009, SEAF calculates HRES* from RES* and compares HRES* with HXRES*. If HRES* and HXRES* are consistent, SEAF shall consider that the authentication is successful from the perspective of the serving network. Otherwise, SEAF shall consider that the authentication is failed and indicate the failure to AUSF. At S2010, SEAF sends RES* received from UE to AUSF. At S2011, AUSF compares the received RES* with the stored XRES*. If RES* and XRES* are the same, AUSF shall consider that the authentication is successful. AUSF shall notify the UDM of the authentication result. At S2012, AUSF indicates to SEAF whether the authentication is successful.

In the above processing, in the process of generating the authentication vector on the network side, the message authentication code is generated by using the calculation method of MAC=f1K(SQN∥RAND∥AMF), the expected response is generated by XRES=f2K(RAND), the encryption key is generated by using CK=f3K(RAND), the integrity key is generated by IK=f4K(RAND), and the anonymity key AK=f5K(RAND), where f1 is a MAC function, f2 is a MAC function; f3 is a key generation function (KDF), f4 is a KDF, and f5 is a KDF. The process of generating the authentication vector on the UE side includes the following. Once RNAD and AUTN are received, USIM first calculates the anonymity key AK=f5K(RAND) and extracts the sequence number SQN=(SQN ⊕AK) ⊕AK. USIM checks whether SQN is in the correct range, and uses SQN, AMF, and its own key K to calculate and verify XMAC=MAC. If verification passes, USIM should calculate the response RES and return RES, CK, IK to ME. Finally, ME calculates RES* from RES, and ME derives KAUSF from CK∥IK. It can be seen that the processing of calculating the authentication vector on the network side and UE side in the related technology requires a large number of complex calculations.

In the related technologies, A-IoT research is in its infancy in 3GPP, and the security standards for A-IoT have not yet been determined. AIoT devices have low cost, computing and storage capabilities, making it difficult to provide strong security protection for stored PSK. Attackers may obtain PSK through disassembly, intrusion, side channel attacks, etc. Especially for some unattended application scenarios, it is necessary to design a secure and low-cost key storage mechanism. A-IoT devices have low cost, computing and storage capabilities, making it difficult to support authentication and key agreement protocols with high complexity. As can be seen from the above introduction, the root key K-based authentication vector generation, key derivation, and encryption and integrity protection algorithm in the existing 5G AKA security architecture are limited. Therefore, it is necessary to design a secure, efficient, and lightweight authentication and key agreement mechanism suitable for A-IoT devices.

The solutions provided in this embodiment, the challenge information can be prestored as the pre-shared information in the first device and/or the core network side device and the second device. Thus, in the processing of authentication, only by transmitting the authentication parameter from the first device to the second device, the second device can calculate the authentication information based on the authentication parameter and the pre-shared information, and the first device can authenticate the second device according to the authentication information. In this way, the second device can achieve security of the authentication of the second device without using a highly complex authentication procedure and without requiring to perform complex and large-scale calculation to complete the authentication, which is particularly suitable for the device with lower capability.

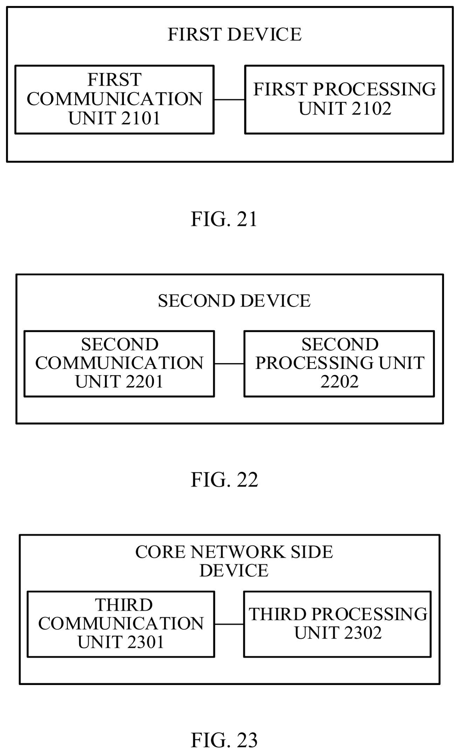

FIG. 21 is a schematic diagram of a structure of a first device according to an embodiment of the present application. The first device includes a first communication unit 2101 and a first processing unit 2102.

The first communication unit 2101 is configured: receive a first message from a core network side device, where the first message carries an authentication parameter; send a second message to a second device, where the second message carries the authentication parameter; and receive a third message from the second device, where the third message carries first authentication information, the first authentication information is calculated by the second device based on the authentication parameter and pre-shared information, the pre-shared information is shared by the second device and at least one of the first device or the core network side device, and the pre-shared information includes challenge information.

The first processing unit 2102 is configured to authenticate the second device based on the first authentication information.

FIG. 22 is a schematic diagram of a structure of a second device according to an embodiment of the present application. The second device includes a second communication unit 2201 and a second processing unit 2202.

The second communication unit 2201 is configured to: receive a second message from a first device, where the second message carries an authentication parameter; and send a third message to the first device, where the third message carries first authentication information.

The second processing unit 2202 is configured to calculate the first authentication information based on the authentication parameter and pre-shared information, where the pre-shared information is shared by the second device and at least one of the first device or a core network side device, the pre-shared information includes challenge information, and the first authentication information is used to authenticate the second device by the first device.

FIG. 23 is a schematic diagram of a structure of a core network side device according to an embodiment of the present application. The core network side device includes a third communication unit 2301.

The third communication unit 2301 is configured to send a first message to a first device, where the first message carries an authentication parameter, the authentication parameter is used to calculate, by a second device, first authentication information based on pre-shared information, the pre-shared information is shared by the second device and the first device and/or the core network side device, the pre-shared information includes challenge information, and the first authentication information is used to authenticate the second device by the first device.

The core network side device also includes a third processing unit 2302. The third processing unit 2302 is configured to perform at least one of the following. The core network side device authenticates the second device based on the second authentication information and the second expected information. The core network side device authenticates the first device based on the third authentication information and the third expected information.

The device of the embodiment of the present application can realize the corresponding functions of each device in the aforementioned authentication method embodiment. The corresponding processes, functions, implementations, and advantageous effects of each module (sub-module, unit, or component, etc.) in the first device, or the second device, or the core network side device can be found in the corresponding description in the above method embodiment, which will not be repeated herein. It should be noted that the functions described in the first device, or the second device, or each module (sub-module, unit, or component, etc.) in the core network side device of the embodiment of the application can be implemented by different modules (sub-modules, units, or components, etc.) or by the same module (sub-module, unit, or component, etc.).

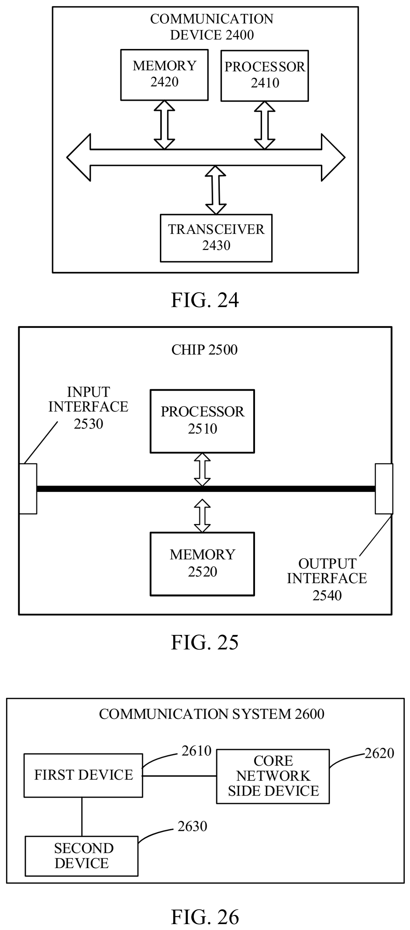

FIG. 24 is a schematic structural diagram of a communication device 2400 according to embodiments of the present application. The communication device 2400 includes a processor 2410. The processor 2410 can invoke and run a computer program from a memory to cause the communication device 2400 to implement the method in the embodiments of the present application.

In a possible implementation, the communication device 2400 may further include a memory 2420. The processor 2410 may invoke and run the computer program from the memory 2420, to cause the communication device 2400 to implement the method in the embodiments of the present application.

The memory 2420 may be a separate device independent of the processor 2410, or may be integrated into the processor 2410.

In a possible implementation, the communication device 2400 may further include a transceiver 2430. The processor 2410 may control the transceiver 2430 to communicate with other devices, specifically, may send information or data to other devices, or receive information or data sent by other devices.

The transceiver 2430 may include a transmitter and a receiver. The transceiver 2430 may further include an antenna, and the number of antennas may be one or more.

In one possible implementation, the communication device 2400 may be the first device, or the second device, or the core network side device of the embodiments of the present application. The communication device 2400 may implement the corresponding processes implemented by the first device in each method of the embodiments of the present application. For the sake of brevity, they will not be repeated herein.

FIG. 25 is a schematic structural diagram of a chip 2500 according to embodiments of the present application. The chip 2500 includes a processor 2510. The processor 2510 can invoke and run a computer program from a memory to implement the method in the embodiments of the present application.

In a possible implementation, the chip 2500 may further include a memory 2520. The processor 2510 may invoke and run the computer program from the memory 2520 to implement the method performed by the access network device or the first core network device in the embodiments of the present application. The memory 2520 may be a separate device independent of the processor 2510, or may be integrated in the processor 2510.

In a possible implementation, the chip 2500 may further include an input interface 2530. The processor 2510 may control the input interface 2530 to communicate with other devices or chips, and specifically, may obtain information or data sent by other devices or chips. In a possible implementation, the chip 2500 may further include an output interface 2540. The processor 2510 may control the output interface 2540 to communicate with other devices or chips, and specifically, may output information or data to other devices or chips.

In one possible implementation, the chip can be applied to the first device, or the second device, or the core network side device in the embodiments of the present application, and the chip can implement the corresponding processes implemented by the first device, or the second device, or the core network side device in the various methods of the embodiments of the present application. For the sake of brevity, they will not be repeated herein.

It should be understood that the chip mentioned in the embodiments of the present application can also be called a system-level chip, a system chip, a chip system or a system-on-chip chip, etc.

The processor mentioned above can be a general-purpose processor, a digital signal processor (DSP), a field programmable gate array (FPGA), an application specific integrated circuit (ASIC) or other programmable logic devices, transistor logic devices, discrete hardware components, etc.

The memory may be a volatile memory or a nonvolatile memory, or may include both volatile and nonvolatile memories.

The memory in the embodiments of the present application are intended to include, but are not limited to, these and any other suitable types of memories.

FIG. 26 is a schematic block diagram of a communication system 2600 according to embodiments of the present application. The communication system 2600 includes a first device 2610, a core network side device 2620, and a second device 2630. In the above embodiments, it can be implemented in whole or in part by software, hardware, firmware, or any combination thereof. When implemented using software, it can be implemented in whole or in part in the form of a computer program product. The computer program product includes one or more computer instructions. When the computer program instructions are loaded and executed on a computer, the process or function in accordance with the embodiments of the present application is generated in whole or in part. The computer may be a general-purpose computer, a special-purpose computer, a computer network, or other programmable device. The computer instructions may be stored in a computer-readable storage medium, or transmitted from one computer-readable storage medium to another computer-readable storage medium.

It should be understood that in the various embodiments of the present application, the magnitude of the sequence numbers of the processes does not mean the order of execution. The execution order of each process should be determined by its function and internal logic, and should not constitute any limitation on the implementation process of the embodiments of the present application.

Those skilled in the art can clearly understand that, for the convenience and brevity of description, the specific working processes of the systems, devices and units described above can refer to the corresponding processes in the aforementioned method embodiments and will not be repeated herein.

The above is only a specific implementation of the present application, but the protection scope of the present application is not limited thereto. Any person skilled in the art, familiar with the present technical field, can easily conceive of changes or substitutions within the technical scope disclosed in the present application, which should be included in the protection scope of the present application. Therefore, the protection scope of the present application should be based on the protection scope of the claims.

## Claims

1. An authentication method, comprising:
receiving, by a first device, a first message from a core network side device, wherein the first message carries an authentication parameter;
sending, by the first device, a second message to a second device, wherein the second message carries the authentication parameter;
receiving, by the first device, a third message from the second device, wherein the third message carries first authentication information, the first authentication information is calculated by the second device based on the authentication parameter and pre-shared information, the pre-shared information is shared by the second device and the first device and/or the core network side device, and the pre-shared information comprises challenge information; and
authenticating, by the first device, the second device based on the first authentication information.

2. The method of claim 1, wherein authenticating, by the first device, the second device based on the first authentication information comprises:
authenticating, by the first device, the second device based on the first authentication information and first expected information.

3. The method of claim 2, wherein the third message carries a first random number, and the method comprises:
calculating, by the first device, the first expected information based on a first intermediate key, the first random number, related information of the second device, and a first generation parameter, wherein the first generation parameter comprises at least one of: response information, the challenge information, an identifier of the first device, or the authentication parameter.

4. The method of claim 1, wherein the first authentication information comprises ciphertext information and a verification parameter and the third message carries a first random number, and authenticating, by the first device, the second device based on the first authentication information comprises:
authenticating, by the first device, the second device based on a first intermediate key, the first random number, the ciphertext information, and the verification parameter to obtain second authentication information.

5. The method of claim 4, wherein authenticating, by the first device, the second device based on the first intermediate key, the first random number, the ciphertext information, and the verification parameter comprises:
calculating, by the first device, an encryption key based on the first intermediate key and the first random number, and authenticating the second device based on the encryption key, the ciphertext information, and the verification parameter.

6. The method of any one of claims 3 to 5, wherein the first message carries the first intermediate key.

7. The method of claim 3, further comprising:
calculating, by the first device, the first intermediate key based on the challenge information, the response information, related information of the second device, and the authentication parameter.

8. The method of claim 7, wherein calculating, by the first device, the first intermediate key based on the challenge information, the response information, the related information of the second device, and the authentication parameter comprises:
calculating, by the first device, a second intermediate key based on the challenge information, the response information, the related information of the second device, and the authentication parameter; and
calculating, by the first device, the first intermediate key based on the second intermediate key.

9. The method of claim 8, wherein the second message carries a third random number and calculating, by the first device, the first intermediate key based on the second intermediate key comprises:
calculating, by the first device, the first intermediate key based on the second intermediate key and the third random number.

10. The method of claim 9, wherein the second message carries a third message authentication code and the third message authentication code is used to authenticate the first device by the second device, and the method further comprises:
calculating, by the first device, the third message authentication code based on the first intermediate key, the third random number, the identifier of the first device, and a fourth generation parameter, wherein the fourth generation parameter comprises at least one of: the challenge information, the response information, or the related information of the second device.

11. The method of any one of claims 8 to 10, wherein the first message carries a fifth message authentication code and the fifth message authentication code is used to authenticate the core network side device by the first device, and the method further comprises:
calculating, by the first device, a sixth message authentication code based on the second intermediate key, the related information of the second device, the authentication parameter, the challenge information, and the identifier of the first device; and
authenticating, by the first device, the core network side device based on the fifth message authentication code and the sixth message authentication code.

12. The method of any one of claims 8 to 11, further comprising:
calculating, by the first device, third authentication information based on the first intermediate key, the second intermediate key, a third random number, and a fifth generation parameter, wherein the third authentication information is used to authenticate the first device by the core network side device, and the fifth generation parameter comprises at least one of: the identifier of the first device, the related information of the second device, the response information, the challenge information, or the authentication parameter; and
sending, by the first device, a fourth message to the core network side device, wherein the fourth message carries the third authentication information and the third random number.

13. The method of claim 2, wherein the second message carries a group key and the group key corresponds to a device group to which the second device belongs, and the method further comprises:
sending, by the first device, a key request message to a key management device, wherein the key request message carries an identifier of the device group to which the second device belongs; and
receiving, by the first device, a key response message from the key management device, wherein the key response message is in response to the key request message and the key response message carries the group key.

14. The method of claim 2, wherein the second message carries a group-key generation parameter and the method further comprises:
calculating, by the first device, a first intermediate key based on the challenge information, response information, related information of the second device, and the authentication parameter;
generating, by the first device, a third random number;
calculating, by the first device, a group key based on the third random number, an identifier of a device group to which the second device belongs, and an identifier of the first device; and
calculating, by the first device, the group-key generation parameter based on the first intermediate key and the third random number.

15. The method of claim 13 or 14, further comprising:
calculating, by the first device, the first expected information based on the authentication parameter, the pre-shared information, the group key, related information of the second device, and an identifier of the first device.

16. The method of any one of claims 13 to 15, further comprising:
calculating, by the first device, third authentication information based on the group key, the identifier of the device group to which the second device belongs, the authentication parameter, a third random number, and an identifier of the first device, wherein the third authentication information is used to authenticate the first device by the core network side device; and
sending, by the first device, a fourth message to the core network side device, wherein the fourth message carries the third authentication information and the third random number.

17. The method of any one of claims 1 to 5 and 13 to 16, wherein the first message carries a first message authentication code, and the second message carries the first message authentication code, wherein the first message authentication code is used to authenticate the core network side device by the second device.

18. The method of any one of claims 1 to 3, wherein the third message carries second authentication information, and the second authentication information is used to authenticate the second device by the core network side device.

19. The method of any one of claims 4, 5, and 18, further comprising:
sending, by the first device, a fourth message to the core network side device, wherein the fourth message carries the second authentication information.

20. The method of any one of claims 1 to 19, wherein the pre-shared information further comprises response information, or the response information is pre-configured.

21. The method of any one of claims 1 to 19, wherein the authentication parameter comprises: an anonymity key or a second random number.

22. The method of any one of claims 3, 4, 7, and 8, wherein the second message carries a third random number, or the method further comprises:
sending, by the first device, a fifth message to the second device, wherein the fifth message is in response to the third message and the fifth message carries the third random number.

23. The method of any one of claims 9, 10, and 22, further comprising at least one of:
calculating, by the first device, an integrity protection key based on the first random number and the first intermediate key;
calculating, by the first device, an encryption key based on the first random number and the first intermediate key; or
calculating, by the first device, the encryption key based on the third random number and the first intermediate key.

24. The method of any one of claims 1 to 23, wherein the second device is one of: a zero-power device and an ambient power-enabled Internet of things (AIoT) device, the first device is one of: a terminal device and an access network device, and the core network side device comprises at least one of: an authentication server function (AUSF), a unified data management function (UDM), or an AIoT network element.

25. An authentication method, comprising:
receiving, by a second device, a second message from a first device, wherein the second message carries an authentication parameter;
calculating, by the second device, first authentication information based on the authentication parameter and pre-shared information, wherein the pre-shared information is shared by the second device and at least one of the first device or a core network side device, the pre-shared information comprises challenge information, and the first authentication information is used to authenticate the second device by the first device; and
sending, by the second device, a third message to the first device, wherein the third message carries the first authentication information.

26. The method of claim 25, further comprising:
generating, by the second device, response information based on the challenge information in the pre-shared information.

27. The method of claim 26, wherein the pre-shared information further comprises the response information, and the response information is related to the challenge information.

28. The method of claim 26 or 27, wherein the third message carries a first random number, and calculating, by the second device, the first authentication information based on the authentication parameter and the pre-shared information comprises:
calculating, by the second device, a first intermediate key based on the challenge information, the response information, related information of the second device, and the authentication parameter;
generating, by the second device, the first random number; and
calculating, by the second device, the first authentication information based on the first intermediate key and the first random number.

29. The method of claim 28, wherein calculating, by the second device, the first authentication information based on the first intermediate key and the first random number comprises:
calculating, by the second device, the first authentication information based on the first intermediate key, the first random number, the related information of the second device, and a first generation parameter, wherein the first generation parameter comprises at least one of: the response information, the challenge information, an identifier of the first device, or the authentication parameter.

30. The method of claim 29, wherein calculating, by the second device, the first intermediate key based on the challenge information, the response information, the related information of the second device, and the authentication parameter comprises:
calculating, by the second device, a second intermediate key based on the challenge information, the response information, the related information of the second device, and the authentication parameter; and
calculating, by the second device, the first intermediate key based on the second intermediate key.

31. The method of claim 30, wherein calculating, by the second device, the first authentication information based on the first intermediate key, the first random number, the related information of the second device, and the first generation parameter comprises:
calculating, by the second device, second authentication information based on the second intermediate key, the related information of the second device, and the first generation parameter, wherein the second authentication information is used to authenticate the second device by the core network side device; and
calculating, by the second device, ciphertext information and a verification parameter based on the first intermediate key, the first random number, and the second authentication information, and using the ciphertext information and the verification parameter as the first authentication information.

32. The method of claim 31, wherein calculating, by the second device, the ciphertext information and the verification parameter based on the first intermediate key, the first random number, and the second authentication information comprises:
calculating, by the second device, an encryption key based on the first intermediate key and the first random number, and calculating the ciphertext information and the verification parameter based on the encryption key and the second authentication information.

33. The method of claim 30, wherein the third message carries second authentication information and the method further comprises:
calculating, by the second device, the second authentication information based on the second intermediate key, the authentication parameter, and a second generation parameter by using a first calculation method, wherein the second generation parameter comprises the response information and/or the challenge information, and the second authentication information is used to authenticate the second device by the core network side device.

34. The method of claim 33, wherein the second message carries a first message authentication code and the method further comprises:
calculating, by the second device, a second message authentication code based on the second intermediate key, the authentication parameter, and a third generation parameter by using a second calculation method, wherein the third generation parameter comprises the response information and/or the challenge information, the first calculation method is different from the second calculation method, and/or the second generation parameter is at least partially different from the third generation parameter; and
authenticating, by the second device, the core network side device based on the first message authentication code and the second message authentication code.

35. The method of claim 30, wherein the second message carries a third random number and calculating, by the second device, the first intermediate key based on the second intermediate key comprises:
calculating, by the second device, the first intermediate key based on the second intermediate key and the third random number.

36. The method of claim 35, wherein the second message carries a third message authentication code and the third message authentication code is used to authenticate the first device by the second device, and the method further comprises:
calculating, by the second device, a fourth message authentication code based on the first intermediate key, the third random number, the identifier of the first device, and a fourth generation parameter, wherein the fourth generation parameter comprises at least one of: the challenge information, the response information, or the related information of the second device; and
authenticating, by the second device, the first device based on the third message authentication code and the fourth message authentication code.

37. The method of claim 26 or 27, wherein the second message carries a group key, and the group key corresponds to a device group to which the second device belongs.

38. The method of claim 26 or 27, wherein the second message carries a group-key generation parameter and the method further comprises:
calculating, by the second device, a first intermediate key based on the challenge information, the response information, related information of the second device, and the authentication parameter; and
calculating, by the second device, a third random number based on the group-key generation parameter and the first intermediate key, and calculating a group key based on the third random number, an identifier of a device group to which the second device belongs, and an identifier of the first device.

39. The method of claim 37 or 38, wherein calculating, by the second device, the first authentication information based on the authentication parameter and the pre-shared information comprises:
calculating, by the second device, the first authentication information based on the authentication parameter, the pre-shared information, the group key, related information of the second device, and an identifier of the first device.

40. The method of any one of claims 37 to 39, wherein the second message carries a first message authentication code and the method further comprises:
calculating, by the second device, a first intermediate key based on the challenge information, the response information, related information of the second device, and the authentication parameter;
calculating, by the second device, a second message authentication code based on the first intermediate key, the authentication parameter, and the challenge information; and
authenticating, by the second device, the core network side device based on the second message authentication code and the first message authentication code.

41. The method of claim 29, wherein the second message carries second authentication information and the method further comprises:
calculating, by the second device, the second authentication information based on the authentication parameter and a first shared key, wherein the second authentication information is used to authenticate the second device by the core network side device, and the first shared key is shared by the second device and the core network side device.

42. The method of claim 29 or 41, wherein the second message carries a first message authentication code and the method further comprises:
calculating, by the second device, a second message authentication code based on the authentication parameter and a first shared key, wherein the first shared key is shared by the second device and the core network side device; and
authenticating, by the second device, the core network side device based on the first message authentication code and the second message authentication code.

43. The method of any one of claims 25 to 42, wherein the authentication parameter comprises: an anonymity key and/or a second random number.

44. The method of any one of claims 29 to 31, 33, and 34, wherein the second message carries a third random number, or the method further comprises:
receiving, by the second device, a fifth message from the first device, wherein the fifth message is in response to the third message and the fifth message carries the third random number.

45. The method of any one of claims 35, 36, and 44, further comprising at least one of:
calculating, by the second device, an integrity protection key based on the first random number and the first intermediate key;
calculating, by the second device, an encryption key based on the first random number and the first intermediate key; or
calculating, by the second device, the encryption key based on the third random number and the first intermediate key.

46. An authentication method, comprising:
sending, by a core network side device, a first message to a first device, wherein the first message carries an authentication parameter, the authentication parameter is used to calculate, by a second device, first authentication information based on pre-shared information, the pre-shared information is shared by the second device and the first device and/or the core network side device, the pre-shared information comprises challenge information, and the first authentication information is used to authenticate the second device by the first device.

47. The method of claim 46, wherein the first message carries a first message authentication code and/or a fifth message authentication code, and wherein the first message authentication code is used to authenticate the core network side device by the second device, and the fifth message authentication code is used to authenticate the core network side device by the first device.

48. The method of claim 47, further comprising:
receiving, by the core network side device, a seventh message from the first device, wherein the seventh message is used to request authentication and the seventh message carries related information of the second device and an identifier of the first device.

49. The method of claim 48, further comprising:
receiving, by the core network side device, a fourth message from the first device, wherein the fourth message carries at least one of: second authentication information, third authentication information, or a third random number, the second authentication information is used to authenticate the second device by the core network side device, and the third authentication information is used to authenticate the first device by the core network side device.

50. The method of claim 49, further comprising at least one of:
authenticating, by the core network side device, the second device based on the second authentication information and second expected information; or
authenticating, by the core network side device, the first device based on the third authentication information and third expected information.

51. The method of claim 50, further comprising:
calculating, by the core network side device, a first intermediate key based on the challenge information, response information, the related information of the second device, and the authentication parameter.

52. The method of claim 51, wherein calculating, by the core network side device, the first intermediate key based on the challenge information, the response information, the related information of the second device, and the authentication parameter comprises:
calculating, by the core network side device, a second intermediate key based on the challenge information, the response information, the related information of the second device, and the authentication parameter; and
calculating, by the core network side device, the first intermediate key based on the second intermediate key.

53. The method of claim 52, further comprising at least one of:
calculating, by the core network side device, the first message authentication code based on the authentication parameter and a first shared key, wherein the first shared key is shared by the second device and the core network side device;
calculating, by the core network side device, the second expected information based on the authentication parameter and the first shared key;
calculating, by the core network side device, the second expected information based on the second intermediate key, the authentication parameter, and a second generation parameter by using a first calculation method, wherein the second generation parameter comprises the response information and/or the challenge information;
calculating, by the core network side device, the first message authentication code based on the second intermediate key, the authentication parameter, and a third generation parameter by using a second calculation method, wherein the third generation parameter comprises the response information and/or the challenge information, the first calculation method is different from the second calculation method, and/or the second generation parameter is at least partially different from the third generation parameter;
calculating, by the core network side device, the first message authentication code based on the first intermediate key, the authentication parameter, and the challenge information;
calculating, by the core network side device, the second expected information based on the second intermediate key, the related information of the second device, and a first generation parameter, wherein the first generation parameter comprises at least one of: the response information, the challenge information, the identifier of the first device, or the authentication parameter;
calculating, by the core network side device, the third expected information based on the first intermediate key, the second intermediate key, the third random number, and a fifth generation parameter, wherein the fifth generation parameter comprises at least one of: the identifier of the first device, the related information of the second device, the response information, the challenge information, or the authentication parameter;
calculating, by the core network side device, the third expected information based on the group key, the identifier of the device group to which the second device belongs, the authentication parameter, the third random number, and the identifier of the first device; or
calculating, by the core network side device, the fifth message authentication code based on the second intermediate key, the related information of the second device, the authentication parameter, the challenge information, and the identifier of the first device.

54. The method of claim 52, wherein the first message carries the first intermediate key.

55. The method of any one of claims 46 to 54, wherein the pre-shared information further comprises response information, or the response information is pre-configured.

56. The method of any one of claims 46 to 55, wherein the authentication parameter comprises: an anonymity key or a second random number.

57. A first device, comprising
a first communication unit configured to: receive a first message from a core network side device, wherein the first message carries an authentication parameter; send a second message to a second device, wherein the second message carries the authentication parameter; and receive a third message from the second device, wherein the third message carries first authentication information, the first authentication information is calculated by the second device based on the authentication parameter and pre-shared information, the pre-shared information is shared by the second device and the first device and/or the core network side device, and the pre-shared information comprises challenge information; and
a first processing unit configured to authenticate the second device based on the first authentication information.

58. A second device, comprising:
a second communication unit configured to: receive a second message from a first device, wherein the second message carries an authentication parameter; and send a third message to the first device, wherein the third message carries first authentication information; and
a second processing unit configured to calculate the first authentication information based on the authentication parameter and pre-shared information, wherein the pre-shared information is shared by the second device and the first device and/or a core network side device, the pre-shared information comprises challenge information, and the first authentication information is used to authenticate the second device by the first device.

59. A core network side device, comprising:
a third communication unit configured to send a first message to a first device, wherein the first message carries an authentication parameter, the authentication parameter is used to calculate, by a second device, first authentication information based on pre-shared information, the pre-shared information is shared by the second device and the first device and/or the core network side device, the pre-shared information comprises challenge information, and the first authentication information is used to authenticate the second device by the first device.

60. A first device comprising: a transceiver, a processor, and a memory, wherein the memory is configured to store a computer program, and the processor is configured to invoke and run the computer program stored in the memory to cause the first device execute the method of any one of claims 1 to 24.

61. A second device comprising: a transceiver, a processor, and a memory, wherein the memory is configured to store a computer program, and the processor is configured to invoke and run the computer program stored in the memory to cause the second device to execute the method of any one of claims 25 to 45.

62. A core network side device comprising: a transceiver, a processor, and a memory, wherein the memory is configured to store a computer program, and the processor is configured to invoke and run the computer program stored in the memory to cause the core network side device to execute the method of any one of claims 46 to 56.

63. A chip, comprising a processor configured to invoke and run a computer program from a memory, to cause a device equipped with the chip to execute the method of any one of claims 1 to 24, or claims 25 to 45, or claims 46 to 56.

64. A computer-readable storage medium for storing a computer program, which, when executed by a device, causes the device to execute the method of any one of claims 1 to 24, or claims 25 to 45, or claims 46 to 56.

65. A computer program product, comprising computer program instructions causing a computer to execute the method of any one of claims 1 to 24, or claims 25 to 45, or claims 46 to 56.

66. A computer program causing a computer to execute the method of any one of claims 1 to 24, or claims 25 to 45, or claims 46 to 56.
